# EUROPEAN PATENT APPLICATION

(11) **EP 4 840 900 A1**
(43) Date of publication of application: **18.11.2026**
(21) Application number: 25738788.6
(22) Date of filing: 08.01.2025
(51) Int. Cl.: C08L 9/00, B60C 1/00, C08C 19/42, C08F 236/14, C08G 77/18, C08K 3/013, C08L 15/00

(54) **MODIFIED CONJUGATED DIENE POLYMER, MOLDED BODY, METHOD FOR PRODUCING MODIFIED CONJUGATED DIENE POLYMER, RUBBER COMPOSITION, AND TIRE**

(30) Priority: 12.01.2024 JP 2024003590
(71) Applicant: ASAHI KASEI KABUSHIKI KAISHA, Tokyo 100-0006 (JP)
(72) Inventor: SHISHIDO Ryosuke, Tokyo 100-0006 (JP); TOBO Shuri, Tokyo 100-0006 (JP); ISE Yuichi, Tokyo 100-0006 (JP); HISAMURA Kenta, Tokyo 100-0006 (JP); KONDO Tomohiro, Tokyo 100-0006 (JP)
(74) Representative: Strehl & Partner mbB
(86) International application number: PCT/JP2025/000409
(87) International publication number: WO 2025/150520

(57) **Abstract**

A modified conjugated diene-based polymer, satisfying the following <condition (i)> to <condition (iii)>:
<condition (i)>
the molecular weight distribution curve as measured by gel permeation chromatography (GPC) has a unimodal shape, and the molecular weight distribution (PDI; MWD) is 1.7 to 3.5;
<condition (ii)>
a modification ratio is 40% by mass or more; and
<condition (iii)>
the polymer has two or more peaks in a DSC differential curve obtained by differentiating a DSC curve recorded by differential scanning calorimetry (DSC).

## Description

### Technical Field

The present invention relates to a modified conjugated diene-based polymer, a formed body, a production method for a modified conjugated diene-based polymer, a rubber composition, and a tire.

### Background Art

In recent years, interest in energy saving and environmental problems has been increasing, and reduction in fuel consumption of vehicles has been demanded. Therefore, a rubber material used for vehicle tires, particularly tire treads that come into contact with a road surface, is required to have low rolling resistance and excellent abrasion resistance, and, from the viewpoint of safety, to have wet skid resistance and practically sufficient fracture performance.

In addition, in response to reduction in fuel consumption of vehicles, weight reduction of vehicles has been promoted by use of resins for vehicle members and by reduction in thickness of tires. Since reduction in thickness of tires requires reducing the thickness of a tread portion, high abrasion resistance is required.

An example of a rubber material meeting the aforementioned requirements includes a material containing a rubber-like polymer and a reinforcing filler such as carbon black or silica.

For example, when a material containing silica is used, it is possible to improve the balance between a low hysteresis loss property and wet skid resistance. Also, an attempt has been made to reduce a hysteresis loss and to improve abrasion resistance and fracture strength by improving dispersibility of silica in the material through introduction of a functional group having affinity or reactivity with silica into a molecular end of a rubber having high mobility, and furthermore, by reducing the mobility of the molecular end of the rubber through bonding with silica particles.

As the rubber-like polymer, modified conjugated diene-based polymers are used. For the conjugated diene-based polymers, higher molecular weights of modified conjugated diene-based polymers are being developed from the viewpoint of improving fracture strength and abrasion resistance.

However, modified conjugated diene-based polymers with high molecular weights have the problem that the polymer particles are easily peeled off from the surface of bales of the modified conjugated diene-based polymers themselves, and the area around the forming machine and the conveyor that transports bales after forming is polluted with the polymer particles, leaving room for improvement in terms of the work environment. In addition, since an increase in molecular weight of the modified conjugated diene-based polymers is accompanied by an increase in viscosity of compositions thereof, poor dispersion of reinforcing fillers such as carbon black and silica is likely to occur during kneading, and there is room for improvement also from the viewpoint of processability. When such a material is vulcanized, particularly when it is formed into a vulcanizate containing an inorganic filler such as silica, a low hysteresis loss property, abrasion resistance, and fracture strength are not sufficient.

Examples of the method for suppressing the peeling off of such modified conjugated diene-based polymers with high molecular weights from the surface of bales include a method in which a process oil is added.

For example, Patent Literature 1 discloses a method of suppressing the peeling off of polymer particles from the surface of bales by adding a process oil to a solution of a conjugated diene-based polymer to form an oil-extended conjugated diene-based polymer.

Furthermore, as a method for improving processability during kneading of such a modified conjugated diene-based polymer, for example, Patent Literatures 2 and 3 propose diene-based rubbers obtained by a coupling reaction of a polymer active end with a polyfunctional silane compound.

### Citation List

### Patent Literature

Patent Literature 1: Japanese Patent Laid-Open No. 2019-131810
Patent Literature 2: International Publication No. WO 07/114203
Patent Literature 3: Japanese Patent Application No. 2018-534375

### Summary of Invention

### Technical Problem

Conventionally, modified conjugated diene-based polymers have generally been oil-extended modified conjugated diene-based polymers to which a process oil has been added from the viewpoint of improving bale formability and processability after kneading. On the other hand, in recent years, it has become desirable to reduce the amount of a process oil to be added to conjugated diene-based polymers as much as possible from the viewpoint of improving the degree of freedom in compounding when fabricating rubber compositions.

However, in the case of the bales of conjugated diene-based polymer disclosed in Patent Literature 1, there is a problem that sufficient formability may not be obtained when the amount of a process oil to be added is reduced.

For example, when the molecular weight of modified conjugated diene-based polymer is increased in order to improve abrasion resistance, or when the glass transition temperature of modified conjugated diene-based polymer is set lower in order to improve a low hysteresis loss property, there is a problem that if the amount of a process oil to be added is small or no process oil is included in the composition, the polymer particles are easily peeled off from the surface of bales. Furthermore, such a modified conjugated diene-based polymer has a problem that the viscosity of the composition is increased during kneading and the processability is deteriorated.

Accordingly, an object of the present invention is to provide a modified conjugated diene-based polymer that is excellent in bale formability even though it is a non-oil-extended product to which no process oil has been added, and that is excellent in processability during kneading and abrasion resistance and fracture strength when formed into a vulcanizate.

### Solution to Problem

The present inventors have made earnest studies to solve the above-described problems, resulting in finding that a modified conjugated diene-based polymer having a molecular weight distribution curve with a specific shape as measured by gel permeation chromatography (GPC), having a prescribed molecular weight distribution and modification ratio, and having two or more peaks in a DSC differential curve obtained by differentiating a DSC curve recorded by differential scanning calorimetry (DSC), can solve the above-described problems, and thus, the present invention has been accomplished.

Specifically, the present invention is as follows:
[1]
   A modified conjugated diene-based polymer, satisfying the following <condition (i)> to <condition (iii)>:
   <condition (i)>
      a molecular weight distribution curve as measured by gel permeation chromatography (GPC) has a unimodal shape, and a molecular weight distribution (PDI; MWD) is 1.7 to 3.5;
   <condition (ii)>
      a modification ratio is 40% by mass or more; and
   <condition (iii)>
      the polymer has two or more peaks in a DSC differential curve obtained by differentiating a DSC curve recorded by differential scanning calorimetry (DSC).
[2] The modified conjugated diene-based polymer according to [1], wherein the molecular weight distribution curve as measured by gel permeation chromatography (GPC) has a shoulder on a higher molecular weight side than a peak top.
[3] The modified conjugated diene-based polymer according to [1] or [2], having a weight average molecular weight (Mw) of 40 × 10⁴ or more and 250 × 10⁴ or less as measured by gel permeation chromatography (GPC).
[4] The modified conjugated diene-based polymer according to any one of [1] to [3], wherein a content of a repeating unit derived from an aromatic vinyl monomer is 0% by weight or more and 30% by weight or less.
[5] The modified conjugated diene-based polymer according to any one of [1] to [4], wherein a Mooney viscosity measured at 100°C is 80 or more and 170 or less, and a Mooney stress relaxation (MSR) measured at 100°C is 0.30 or more and 0.80 or less.
[6] The modified conjugated diene-based polymer according to any one of [1] to [5], wherein, in the DSC differential curve obtained by differentiating a DSC curve recorded by differential scanning calorimetry (DSC), a difference (ΔTg) between positions of peak tops of a peak having a highest peak height and a peak having a second highest peak height is 15°C or more.
[7] The modified conjugated diene-based polymer according to [6], wherein the ΔTg is 15°C or more and 75°C or less.
[8] The modified conjugated diene-based polymer according to any one of [1] to [7], comprising:
   a modified conjugated diene-based polymer (A) having a weight average molecular weight (Mw) of 70 × 10⁴ or more and 200 × 10⁴ or less as measured by gel permeation chromatography (GPC); and
   a modified conjugated diene-based polymer (B) having a Mw of 10 × 10⁴ or more and less than 70 × 10⁴ as measured by gel permeation chromatography (GPC).
[9] The modified conjugated diene-based polymer according to [8], wherein a difference (ΔMw) between weight average molecular weights of the modified conjugated diene-based polymer (A) and the modified conjugated diene-based polymer (B) is 20 × 10⁴ or more.
[10] The modified conjugated diene-based polymer according to [8] or [9], wherein, in the modified conjugated diene-based polymer, a mass ratio ((A)/(B)) of the modified conjugated diene-based polymer (A) to the modified conjugated diene-based polymer (B) is 40/60 to 10/90.
[11] The modified conjugated diene-based polymer according to any one of [8] to [10], wherein the modified conjugated diene-based polymer (A) and/or (B) comprises a conjugated diene-based polymer having a fork-like part [A] in which multiple conjugated diene-based polymer chains are bonded to one end of a main chain branch structure part, and a single chain of another conjugated diene-based polymer is bonded to the other end of the main chain branch structure part.
[12] The modified conjugated diene-based polymer according to any one of [8] to [11],
   wherein the modified conjugated diene-based polymer (A) and/or (B) comprises a conjugated diene-based polymer having:
   a fork-like part [A] in which multiple conjugated diene-based polymer chains are bonded to one end of a main chain branch structure part, and a single chain of another conjugated diene-based polymer is bonded to the other end of the main chain branch structure part; and
   a star polymer structure part [B] having 3 or more branches in which one or more of the fork-like parts [A] are bonded.
[13] A formed body comprising:
   100 parts by mass of the modified conjugated diene-based polymer according to any one of [1] to [12]; and
   less than 1 part by mass of a softener component.
[14] A method for producing the modified conjugated diene-based polymer according to any one of [8] to [12], comprising:
   obtaining a modified conjugated diene-based polymer (A) and a modified conjugated diene-based polymer (B) by continuous polymerization using one or more reactors for each;
   mixing a polymerization solution containing the modified conjugated diene-based polymer (A) and a polymerization solution containing the modified conjugated diene-based polymer (B); and
   then removing a solvent to obtain the modified conjugated diene-based polymer.
[15] The method for producing the modified conjugated diene-based polymer according to [14],
   wherein the modified conjugated diene-based polymer (A) and/or (B) is produced by a production method comprising:
   a polymerization step of polymerizing a conjugated diene compound or copolymerizing a conjugated diene compound and an aromatic vinyl compound, using an alkali metal compound or an alkaline earth metal compound as a polymerization initiator, to obtain a conjugated diene-based polymer having an active end;
   a polymerizing branching step of reacting an active end of the conjugated diene-based polymer with a branching agent to introduce a branch structure; and
   a modification step of reacting a polymerization terminal end with a coupling modifier.
[16] The method for producing the modified conjugated diene-based polymer according to [15], wherein the branching agent is a compound represented by the following formula (1) or (2): 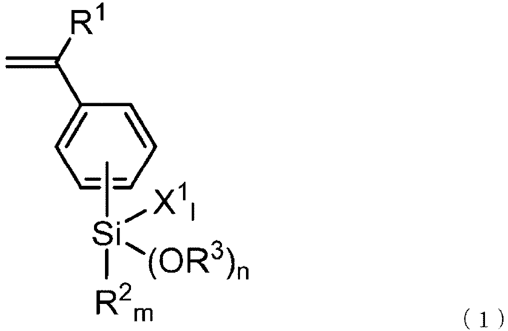
   wherein R¹ represents a hydrogen atom, or an alkyl group having 1 to 20 carbon atoms or an aryl group having 6 to 20 carbon atoms, and optionally having a branch structure in a part thereof;
   R² to R³ each independently represent an alkyl group having 1 to 20 carbon atoms or an aryl group having 6 to 20 carbon atoms, and optionally having a branch structure in a part thereof; R² to R³, if present in a plural number, are respectively independent;
   X¹ represents an independent halogen atom; and
   m represents an integer of 0 to 2, n represents an integer of 0 to 3, l represents an integer of 0 to 3, and (m + n + l) represents 3, or 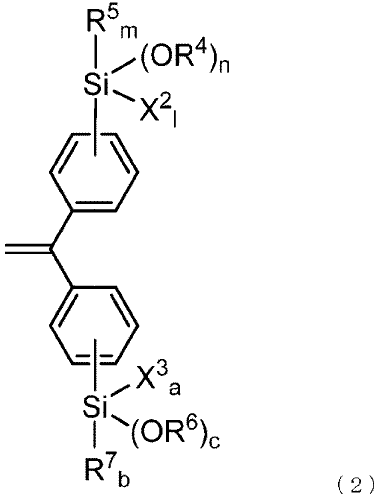
   wherein R⁴ to R⁷ each independently represent an alkyl group having 1 to 20 carbon atoms or an aryl group having 6 to 20 carbon atoms, and optionally having a branch structure in a part thereof;
   R⁴ to R⁷, if present in a plural number, are respectively independent;
   X² to X³ represent independent halogen atoms;
   m represents an integer of 0 to 2, n represents an integer of 0 to 3, and l represents an integer of 0 to 3;
   (m + n + l) represents 3; and
   a represents an integer of 0 to 3, b represents an integer of 0 to 2, c represents an integer of 0 to 3, and (a + b + c) represents an integer of 3.
[17] A rubber composition comprising:
   100 parts by mass of a rubber component; and
   5.0 parts by mass or more and 150 parts by mass or less of a filler,
   wherein the rubber component contains 10 parts by mass or more of the modified conjugated diene-based polymer according to any one of [1] to [12] with respect to 100 parts by mass of a total amount of the rubber component.
[18] A tire comprising the rubber composition according to [17].

### Advantageous Effect of Invention

According to the present invention, a modified conjugated diene-based polymer can be provided that is excellent in bale formability even though it is a non-oil-extended product to which no process oil has been added, and that is excellent in processability during kneading and fuel efficiency, abrasion resistance, and fracture strength when formed into a vulcanizate.

### Description of Embodiments

Now, an embodiment for practicing the present invention (hereinafter referred to as the "present embodiment") will be described in detail.

It is noted that the following present embodiment is merely an example for describing the present invention and the present invention is not limited to the following embodiment. The present invention can be practiced with various modifications made within the scope thereof.

### [Modified Conjugated Diene-based Polymer]

A modified conjugated diene-based polymer of the present embodiment is a modified conjugated diene-based polymer satisfying the following <condition (i)> to <condition (iii)>:
<condition (i)>
   the molecular weight distribution curve as measured by gel permeation chromatography (GPC) has a unimodal shape, and the molecular weight distribution (PDI; MWD) is 1.7 to 3.5;
<condition (ii)>
   the modification ratio is 40% by mass or more; and
<condition (iii)>
   the polymer has two or more peaks in a DSC differential curve obtained by differentiating a DSC curve recorded by differential scanning calorimetry (DSC).

The modified conjugated diene-based polymer of the present embodiment is excellent in processability during kneading and fuel efficiency, abrasion resistance, and fracture strength when formed into a vulcanizate, and is excellent in bale formability even though it is a non-oil-extended product to which no process oil has been added.

The modified conjugated diene-based polymer of the present embodiment may be any of the following: a homopolymer of a single conjugated diene compound; a polymer of different types of conjugated diene compounds, that is, a copolymer; and a copolymer of a conjugated diene compound and a vinyl aromatic compound.

Examples of the conjugated diene compound include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferred from the viewpoint that the effects of the present embodiment are effectively and definitely exhibited. One of these conjugated diene compounds may be singly used, or two or more of these may be used together.

Examples of the vinyl aromatic compound include, but are not limited to, styrene, p-methylstyrene, m-methylstyrene, o-methylstyrene, α-methylstyrene, vinylethylbenzene, vinylxylene, vinylnaphthalene, and diphenylethylene. Among these, styrene is preferred from the viewpoint that the effects of the present embodiment are effectively and definitely exhibited. One of these vinyl aromatic compounds may be singly used, or two or more of these may be used together.

The modified conjugated diene-based polymer may be a random copolymer or may be a block copolymer.

Examples of the random copolymer include, but are not limited to, a random copolymer composed of two or more conjugated diene compounds such as a butadiene-isoprene random copolymer, and a random copolymer composed of a conjugated diene and a vinyl-substituted aromatic compound such as a butadienestyrene random copolymer, an isoprene-styrene random copolymer, and a butadiene-isoprene-styrene random copolymer.

The composition distribution of each monomer in the copolymer chain is not especially limited, and examples thereof include a completely random copolymer having a composition close to a statistically random composition, and a tapered (gradient) random copolymer in which the composition is distributed in a tapered manner. The bonding mode of the conjugated diene, that is, the composition of 1,4-bond, 1,2-bond, and the like may be uniform or may have a distribution.

### (Molecular Weight Distribution Curve of Modified Conjugated Diene-based Polymer)

In the modified conjugated diene-based polymer of the present embodiment, it is preferable that the molecular weight distribution curve obtained by measurement by gel permeation chromatography (GPC) has a unimodal shape and has a shape having a shoulder on a higher molecular weight side than a peak top. Here, "the molecular weight distribution curve has a unimodal shape and has a shoulder on a higher molecular weight side than a peak top" means that, in the molecular weight distribution curve, one peak top and three or more inflection points are present between a peak start point and a peak end point, and two or more inflection points are present in a region from the peak top to the peak end point, that is, in a region from the peak top to a higher molecular weight side.

The following reason can be cited as a factor that improves the bale formability of the modified conjugated diene-based polymer when it exhibits such a molecular weight distribution curve, but it is not limited to the reason described below.

In general, the abrasion resistance and fracture strength of polymers are superior as the molecular weight of polymers is higher, but at the same time, polymer particles tend to be easily peeled off from the surface of bales, resulting in poor bale formability. In addition, a viscosity in vulcanization is so largely increased that processability in the vulcanization tends to be largely deteriorated. Therefore, in a polymer having a high molecular weight, even when a large number of functional groups are introduced into the polymer for purposes of improving affinity and/or reactivity with silica to be blended as a filler, the silica cannot be sufficiently dispersed in the polymer during the kneading process.

On the other hand, in the modified conjugated diene-based polymer of the present embodiment, it is preferable that the molecular weight distribution curve thereof has a unimodal shape and has a shape having a shoulder on a higher molecular weight side than a peak top. By containing a high molecular weight component (defined as "conjugated diene-based polymer A") and using a component having a lower molecular weight than that component (defined as "conjugated diene-based polymer B") as the main component, bale formability is improved, and processability is improved by suppression of an increase in viscosity during vulcanization. Furthermore, by containing the conjugated diene-based polymer A, abrasion resistance and fracture strength when formed into a vulcanizate are also excellent.

Such a modified conjugated diene-based polymer having a molecular weight distribution curve having a unimodal shape and having a shape having a shoulder on a higher molecular weight side than a peak top is obtained by forming from polymers with different molecular weights from the viewpoint of keeping the balance between molecular weight and viscosity within an appropriate range. Specifically, as described below, it is obtained by adjusting the molecular weights and branch numbers of the conjugated diene-based polymer A and the conjugated diene-based polymer B, and the ratio thereof. In this way, it is possible to improve the abrasion resistance, fuel efficiency, and breakage performance of the vulcanizate without compromising the bale formability of the conjugated diene polymer and the processability of the rubber composition.

### (Average Molecular Weight and Molecular Weight Distribution of Modified Conjugated Diene-based Polymer)

The weight average molecular weight measured by a GPC measurement method of the modified conjugated diene-based polymer of the present embodiment is preferably 40 × 10⁴ or more, more preferably 50 × 10⁴ or more, further preferably 55 × 10⁴ or more, still further preferably 60 × 10⁴ or more, even more preferably 65 × 10⁴ or more, and most preferably 70 × 10⁴ or more. When the weight average molecular weight measured by the GPC measurement method is 40 × 10⁴ or more, a vulcanizate obtained therefrom is further excellent in a low hysteresis loss property. Besides, the weight average molecular weight is preferably 250 × 10⁴ or less, more preferably 200 × 10⁴ or less, further preferably 150 × 10⁴ or less, still further preferably 125 × 10⁴ or less, even more preferably 100 × 10⁴ or less, and most preferably 95 × 10⁴ or less. When the weight average molecular weight is 250 × 10⁴ or less, dispersibility of a filler in the vulcanizate obtained therefrom is further excellent, and practically sufficient fracture performance tends to be obtained.

The weight average molecular weight may fall in a range obtained by arbitrarily combining any of the upper limits and any of the lower limits.

The weight average molecular weight of the modified conjugated diene-based polymer can be measured by a method described in the examples below.

The number average molecular weight measured by the GPC measurement method of the modified conjugated diene-based polymer of the present embodiment is preferably 20 × 10⁴ or more, more preferably 25 × 10⁴ or more, and further preferably 30 × 10⁴ or more. The number average molecular weight may be 35 × 10⁴ or more. When the number average molecular weight measured by the GPC measurement method is 20 × 10⁴ or more, processability in vulcanization is further excellent, and a vulcanizate obtained therefrom tends to be further excellent in a low hysteresis loss property. The number average molecular weight may be 35 × 10⁴ or more. When the number average molecular weight measured by the GPC measurement method is 20 × 10⁴ or more, processability in vulcanization is further excellent, and a vulcanizate obtained therefrom tends to be further excellent in a low hysteresis loss property. Besides, the number average molecular weight is preferably 100 × 10⁴ or less, more preferably 90 × 10⁴ or less, further preferably 80 × 10⁴ or less, still further preferably 70 × 10⁴ or less, even more preferably 60 × 10⁴ or less, and most preferably 50 × 10⁴ or less. When the number average molecular weight is 100 × 10⁴ or less, dispersibility of a filler in the vulcanizate obtained therefrom is further excellent, and practically sufficient fracture performance tends to be obtained.

The number average molecular weight may fall in a range obtained by arbitrarily combining any of the upper limits and any of the lower limits.

The number average molecular weight of the modified conjugated diene-based polymer can be measured by a method described in the examples below.

In the modified conjugated diene-based polymer of the present embodiment, the ratio (Mw/Mn) (molecular weight distribution) of the weight average molecular weight (Mw) measured by the GPC measurement method to the number average molecular weight (Mn) measured by the GPC measurement method is 1.7 or more, preferably 1.75 or more, more preferably 1.8 or more, further preferably 1.85 or more, and most preferably 1.9 or more from the viewpoints of processability in vulcanization, abrasion resistance of the vulcanizate, and fracture strength. The upper limit of the molecular weight distribution is 3.5 or less, preferably 3.0 or less, more preferably 2.8 or less, and further preferably 2.5 or less.

The molecular weight distribution of the modified conjugated diene-based polymer can be controlled within the numerical range described above by adjusting the respective molecular weights and branch numbers of the conjugated diene-based polymers A and B, and the ratio thereof, as described below.

### (Modifying Group)

The modified conjugated diene-based polymer of the present embodiment preferably has a modifying group.

The term "modifying group" means a functional group having affinity or binding reactivity with a filler, and examples include a nitrogen atom-containing functional group.

Since the modified conjugated diene-based polymer of the present embodiment has such a modifying group, the interaction with a filler is further improved, and hence, when a modified conjugated diene-based polymer composition containing the modified conjugated diene-based polymer and the filler is obtained, fracture strength of the composition is further improved. From a similar viewpoint, the modified conjugated diene-based polymer of the present embodiment preferably has a modifying group having a nitrogen atom, and more preferably has a modifying group having a nitrogen atom and a silicon atom. It is not necessary for one modifying group or coupling modifier to contain both a nitrogen atom and a silicon atom, and a combination of modifying groups or coupling modifiers having modifying groups containing only one of the two may be set up so that the polymer contains both nitrogen and silicon.

### (Modification Ratio)

Herein, the term "modification ratio" refers to a content, expressed in % by mass, of a modified conjugated diene-based polymer component having, in a polymer molecule, a specific functional group having affinity or binding reactivity with a filler to the total amount of a mixture of conjugated diene-based polymers when the mixture of a modified conjugated diene-based polymer and a non-modified conjugated diene-based polymer is obtained by modifying the conjugated diene-based polymer with a coupling modifier. Accordingly, when the specific functional group contains a nitrogen atom, the term indicates a mass ratio of a conjugated diene-based polymer containing a nitrogen atom to the total amount of the mixture of the conjugated diene-based polymers.

Herein, the term "conjugated diene-based polymer" encompasses a non-modified conjugated diene-based polymer and a modified conjugated diene-based polymer except where specifically noted, or except where they are definitely distinguished as in a case where they are together described like "a conjugated diene-based polymer or a modified conjugated diene-based polymer".

When they are together described like "a conjugated diene-based polymer or a modified conjugated diene-based polymer", the term "conjugated diene-based polymer" means a non-modified conjugated diene-based polymer.

For example, in a conjugated diene-based polymer containing a modified conjugated diene-based polymer obtained by reacting a terminal end with a nitrogen atom-containing modifier, the mass ratio of a modified conjugated diene-based polymer having a nitrogen atom-containing functional group derived from the nitrogen atom-containing modifier to the total amount of conjugated diene-based polymers corresponds to a modification ratio.

It is preferable that at least a part of the conjugated diene-based polymer of the present embodiment contains a nitrogen atom, and it is more preferable that it is modified with a functional group containing a nitrogen atom and a silicon atom. Such a modified conjugated diene-based polymer is further excellent in processability in obtaining a rubber composition with a filler and the like compounded, and also tends to be further excellent in abrasion resistance, fracture strength, and a low hysteresis loss property obtained in a vulcanizate formed from the rubber composition. It is noted that, as described above, it is not necessary for one modifying group or coupling modifier to contain both a nitrogen atom and a silicon atom, and a combination of modifying groups or coupling modifiers containing only one of the two may be set up so that the modified conjugated diene-based polymer to be finally obtained contains both nitrogen and silicon.

From the viewpoint of improving a low hysteresis loss property in the vulcanizate, the modification ratio of the conjugated diene-based polymer of the present embodiment is preferably 40% by mass or more, more preferably 50% by mass or more, further preferably 60% by mass or more, still further preferably 65% by mass or more, even more preferably 70% by mass or more, and most preferably 75% by mass or more with respect to the total amount of the conjugated diene-based polymer. The upper limit of the modification ratio is not especially limited, and it may be 100% by mass, 98% by mass or less, 95% by mass or less, or 90% by mass or less. In comparison among modified conjugated diene-based polymers having the same glass transition point, one having a higher modification ratio tends to be better in a low hysteresis loss property.

In the conjugated diene-based polymer of the present embodiment, the modification ratio can be measured by chromatography capable of separating a functional group-containing modified component and a non-modified component. As a method using the chromatography, a method in which a column for gel permeation chromatography using, as a filler, a polar material adsorbing a specific functional group, such as silica, is used for performing quantitative determination using an internal standard of a non-adsorbed component for comparison (column adsorption GPC method) can be employed.

More specifically, the modification ratio can be obtained by measuring the amount of adsorption onto a silica-based column based on the difference between a chromatogram measured on a sample solution containing a sample and low molecular weight internal standard polystyrene using a polystyrene-based gel column and a chromatogram measured on the sample solution using the silica-based column. Specifically, the modification ratio can be measured by a method described in the examples below.

In the conjugated diene-based polymer of the present embodiment, the modification ratio can be controlled within the numerical range described above by adjusting the ratio of the conjugated diene-based polymers A and B, and, in polymerization of the conjugated diene-based polymers A and B, the amount of a coupling modifier to be added and a method for reacting the conjugated diene compound and the modifier.

For example, a method in which polymerization is performed by using, as a polymerization initiator, an organic lithium compound, described later, having at least one nitrogen atom in a molecule, a method in which a monomer having at least one nitrogen atom in a molecule is copolymerized, and a method in which a modifier having a structural formula described below is used may be combined to obtain the conjugated diene-based polymers A and B, and then the ratio thereof may be adjusted.

### (DSC Differential Curve Obtained by Differentiating DSC Curve Recorded by Differential Scanning Calorimetry (DSC) of Modified Conjugated Diene-based Polymer)

The modified conjugated diene-based polymer of the present embodiment has two or more peak tops (inflection points) in a DSC differential curve obtained by differentiating a DSC curve recorded by differential scanning calorimetry (DSC) while increasing the temperature within a prescribed temperature range in accordance with ISO 22768: 2017. The peak tops (inflection points) of the DSC differential curve obtained in accordance with ISO 22768: 2017 correspond to glass transition temperatures, and having two or more peak tops (inflection points) means that the modified conjugated diene-based polymer of the present embodiment contains two or more components having different Tg. By containing two or more components having different Tg, the modified conjugated diene-based polymer can contain a component having a high Tg that ensures processability and a component having a low Tg that ensures abrasion resistance, and the balance between processability and abrasion resistance can be improved.

The modified conjugated diene-based polymer having two or more peak tops in the DSC differential curve is obtained by forming from two or more polymers having different Tg. Specifically, as described below, it is obtained by adjusting the molecular weights, microstructures, and branch numbers of the conjugated diene-based polymer A and the conjugated diene-based polymer B, and the ratio thereof.

The difference (ΔTg) between positions of peak tops of two peaks having the highest peak heights (that is, a peak having the highest peak height and a peak having the second highest peak height) is not especially limited, but it is preferably 15°C or more, more preferably 20°C or more, further preferably 25°C or more, and particularly preferably 28°C or more, from the viewpoints of improving bale formability of the modified conjugated diene-based polymer and processability, abrasion resistance, and fracture strength when formed into a vulcanizate. Also, the ΔTg may be 30°C or more, may be 40°C or more, and may be 50°C or more. Also, the ΔTg is preferably 75°C or less, more preferably 70°C or less, and further preferably 65°C or less.

The numerical range may be specified by appropriately combining the above lower limits and upper limits of ΔTg. For example, the ΔTg may be 15°C or more and 75°C or less, 20°C or more and 75°C or less, 25°C or more and 70°C or less, 28°C or more and 70°C or less, 30°C or more and 65°C or less, 40°C or more and 65°C or less, or 50°C or more and 65°C or less.

When the ΔTg is within the above range, the modified conjugated diene-based polymer tends to be even further excellent in the balance of fuel efficiency, wet grip performance, and abrasion resistance when formed into a vulcanizate.

Specifically, the two or more peak tops in the DSC differential curve can be measured by a method described in the examples below.

### (Microstructure of Modified Conjugated Diene-based Polymer)

Since the microstructure (the amount of bound vinyl aromatic monomer unit, the amount of bound conjugated diene monomer unit, and the ratio of the amount of vinyl bond in the bound conjugated diene monomer unit) of the modified conjugated diene-based polymer affects the glass transition temperature of the conjugated diene-based polymer, there are preferred ranges for the amount of bound vinyl aromatic monomer unit and the amount of vinyl bond from the viewpoint of controlling the glass transition temperature. In the microstructure of the conjugated diene-based polymer, the amount of bound vinyl aromatic monomer unit is not especially limited, and it is preferably 0% by mass or more and 30% by mass or less, more preferably 1% by mass or more and 28% by mass or less, further preferably 1% by mass or more and 26% by mass or less, still further preferably 2% by mass or more and 24% by mass or less, even more preferably 3% by mass or more and 22% by mass or less, and particularly preferably 5% by mass or more and 20% by mass or less in the entire conjugated diene-based polymer. When the amount of bound vinyl aromatic monomer unit falls in the above-described range, a vulcanizate of the conjugated diene-based polymer tends to be more superior in fracture strength, abrasion resistance and a low hysteresis loss property. When the amount of bound vinyl aromatic monomer unit is increased, the Tg of the conjugated diene-based polymer tends to be increased, and when it is decreased, the Tg tends to be decreased. In addition, when the amount of bound vinyl aromatic monomer unit is increased, the bale formability tends to be improved, and when it is decreased, the bale formability tends to be deteriorated.

Herein, the term "amount of bound vinyl aromatic monomer unit" means a content of a portion derived from the aromatic vinyl compound used as a monomer.

In the microstructure of the modified conjugated diene-based polymer, the amount of bound conjugated diene monomer unit is not especially limited, and it is preferably 70% by mass or more and 100% by mass or less, more preferably 72% by mass or more and 99% by mass or less, further preferably 74% by mass or more and 99% by mass or less, still further preferably 76% by mass or more and 98% by mass or less, even more preferably 78% by mass or more and 97% by mass or less, and particularly preferably 80% by mass or more and 95% by mass or less in the entire conjugated diene-based polymer. When the amount of bound conjugated diene monomer unit falls in the above-described range, a vulcanizate of the conjugated diene-based polymer tends to be more superior in fracture strength, abrasion resistance and a low hysteresis loss property. Herein, the term "amount of bound conjugated diene monomer unit" means a content of a portion derived from the conjugated diene compound used as a monomer.

In the microstructure of the modified conjugated diene-based polymer, the amount of vinyl bond in the bound conjugated diene monomer unit (hereinafter also simply referred to as "amount of vinyl bond") is not especially limited, and it is preferably 11% by mol or more and 60% by mol or less, more preferably 11% by mol or more and 40% by mol or less, further preferably 12% by mol or more and 35% by mol or less, still further preferably 13% by mol or more and 30% by mol or less, even more preferably 14% by mol or more and 29% by mol or less, and particularly preferably 15% by mol or more and 28% by mol or less in the entire bound conjugated diene monomer unit. When the amount of vinyl bond falls in the above-described range, the conjugated diene-based polymer is increased in linearity in the structure of a conjugated diene portion, and increased in entanglement among polymer chains, and hence tends to be further excellent in fracture strength and abrasion resistance. Besides, when the amount of vinyl bond falls in the above-described range, a vulcanizate obtained therefrom tends to be more superior in a low hysteresis loss property.

When the amount of vinyl bond is increased, the Tg is increased, and when it is decreased, the Tg is decreased. Herein, the term "amount of vinyl bond in the bound conjugated diene monomer unit" means a ratio of a portion having a vinyl bond in the portion derived from the conjugated diene compound used as a monomer (hereinafter referred to as "bound conjugated diene monomer unit").

### (Branch Number (Bn))

Herein, the branch number (Bn) is calculated by using a contracting factor (g') in accordance with an expression, g' = 6Bn/{(Bn + 1)(Bn + 2)}. Here, the contracting factor (g') is a value defined as follows.

In general, a polymer having a branch tends to have a smaller size of a molecule when compared with a straight-chain polymer having the same absolute molecular weight. Here, the term "size of a molecule" refers to a volume substantially occupied by the molecule. The contracting factor (g') relatively expresses the size of a molecule of a target polymer, and is an index of a ratio of the size of the molecule of the target polymer to a size of a molecule of a straight-chain polymer having the same absolute molecular weight as the target polymer. In other words, when the branch number of a polymer is high, the size is relatively small, and hence the contracting factor (g') tends to be small.

Here, it is known that there is a correlation between the molecule size of a polymer and a ratio of an intrinsic viscosity, and therefore, in the present embodiment, the contracting factor (g') is defined as a ratio of the intrinsic viscosity. In other words, the contracting factor (g') is defined as a ratio ([η]/[η₀]) of an intrinsic viscosity [η] of the target polymer to an intrinsic viscosity [η₀] of a straight-chain polymer having the same absolute molecular weight as the target polymer.

It is known that the intrinsic viscosity [η₀] of a straight-chain polymer satisfies a relationship, [η₀] = 10^{-3.498}M^{0.711}. In this expression, M represents an absolute molecular weight. Accordingly, when the absolute molecular weight and the intrinsic viscosity of the target polymer are measured by viscosity detector-equipped GPC-light scattering measurement, the contracting factor (g') and the branch number (Bn) can be obtained. The thus calculated branch number (Bn) accurately expresses the number of polymer chains directly or indirectly bonded to a longest polymer main chain.

Here, the term "absolute molecular weight" means a molecular weight measured by a light scattering method. As described above, a polymer having a branch tends to have a smaller size of a molecule when compared with a straight-chain polymer having the same absolute molecular weight in general. Therefore, in employing a GPC measurement method in which a molecular weight is obtained by relative comparison with a standard polystyrene sample with a polymer screened in accordance with the size of a molecule, the molecular weight of a polymer having a branch structure tends to be underestimated. On the other hand, in the light scattering method, a molecular weight is measured by directly observing a molecule. Accordingly, in employing the light scattering method, a molecular weight can be accurately measured without being affected by the polymer structure or by interaction with a column filler. It is noted that an absolute molecular weight can be measured by a method described in the examples below.

The term "intrinsic viscosity" means a viscosity [η] obtained ideally in accordance with the following expression (I).

In the expression (I), η₁ represents a viscosity obtained when a target polymer is dissolved in a solvent in a concentration c, and η₂ represents a viscosity of the solvent.

Herein, as the intrinsic viscosity, a value measured by a method described in the examples below is used.$\left[η\right] = {lim}_{c \to 0} \left\{\frac{{η}_{1} - {η}_{2}}{{cη}_{2}}\right\}$ (1)

The above contracting factor expresses the rate of reduction in molecular size and does not accurately express the branch structure of the polymer.

Therefore, the branch number (Bn) of the modified conjugated diene-based polymer is calculated by using the value of the contracting factor (g') at each absolute molecular weight of the modified conjugated diene-based polymer. The "branch number (Bn)" thus calculated accurately expresses the number of polymers that are directly or indirectly bonded to each other with respect to the longest main chain structure.

The calculated branch number (Bn) serves as an index expressing the branch structure of the modified conjugated diene-based polymer. For example, in the case of a general 4-branched star polymer (in which 4 polymer chains are connected to the central portion), 2 polymer chain arms are bonded to the longest highly branched main chain structure, and hence the branch number (Bn) is evaluated as 2.

In the case of a general 8-branched star polymer, 6 polymer chain arms are bonded to the longest highly branched main chain structure, and hence the branch number (Bn) is evaluated as 6.

The modified conjugated diene-based polymer of the present embodiment has a branch number (Bn) of 2 or more, and in such a case, it is meant that the modified conjugated diene-based polymer has, as a star polymer structure, the same branches as a 4-branched star polymer structure.

Here, the term "branch" refers to one formed by a direct or indirect bond of one polymer with another polymer. Also, the term "branch number (Bn)" refers to the number of polymers that are directly or indirectly bonded to each other with respect to the longest main chain structure. In other words, not only side chains bonded to the longest polymer chain but also, if the side chains are further branched, the number of branches of the side chains are taken into consideration. Accordingly, when one polymer chain is bonded as a side chain to the longest polymer chain, and another polymer chain is further bonded to the side chain, the branch number is 2.

By having a branch number (Bn) of 4 or more, the modified conjugated diene-based polymer of the present embodiment is extremely excellent in processability when formed into a vulcanizate, and is excellent in abrasion resistance and fracture strength when formed into a vulcanizate.

In general, as the absolute molecular weight increases, processability tends to deteriorate. When the absolute molecular weight is increased with a straight-chain polymer structure, the viscosity when formed into a vulcanizate is increased significantly, and processability is deteriorated substantially.

Therefore, even if a large number of functional groups are introduced into the polymer to improve affinity and/or reactivity with silica to be blended as a filler, the silica cannot be sufficiently dispersed in the polymer during the kneading process. As a result, the function of the introduced functional groups cannot be exhibited, and the expected improvement in a low hysteresis loss property and wet skid resistance due to the introduction of functional groups cannot be exhibited.

On the other hand, by setting the branch number (Bn) of the modified conjugated diene-based polymer of the present embodiment to 4 or more, the increase in viscosity when forming a vulcanizate due to an increase in absolute molecular weight is significantly suppressed. Therefore, for example, silica and the like can be sufficiently mixed during the kneading process, making it possible to disperse silica around the modified conjugated diene-based polymer. As a result, for example, in the modified conjugated diene-based polymer, setting a large molecular weight enables improvement of abrasion resistance and fracture strength, and sufficient kneading allows silica to be dispersed around the polymer, so that the functional groups can act and/or react. This makes it possible to achieve a practically sufficient low hysteresis loss property and wet skid resistance.

The absolute molecular weight of the modified conjugated diene-based polymer can be measured by a method described in the examples below.

The branch number (Bn) of the modified conjugated diene-based polymer of the present embodiment is not especially limited, and it is preferably 4 or more, more preferably 5 or more, and still further preferably 6 or more.

A modified conjugated diene-based polymer having a branch number (Bn) within this range tends to be excellent in bale formability and excellent in processability when formed into a vulcanizate.

Also, the upper limit of the branch number (Bn) is not especially limited and may be equal to or larger than the detection limit; however, it is preferably 84 or less, more preferably 80 or less, further preferably 60 or less, particularly preferably 40 or less, and even more preferably 20 or less.

By having a branch number (Bn) of 84 or less, the modified conjugated diene-based polymer of the present embodiment tends to be excellent in abrasion resistance when formed into a vulcanizate.

The branch number of the modified conjugated diene-based polymer can be controlled to 4 or more by adjusting the combination of the amount of branching agent to be added and the amount of end coupling agent to be added in each of the conjugated diene-based polymers A and B, and the ratio of A and B. Specifically, the control of the branch number can be achieved by the number of functional groups of the branching agent, the amount of branching agent to be added, the timing of adding the branching agent, the number of functional groups of the coupling agent or nitrogen atom-containing modifier, or the amount of the coupling agent or nitrogen atom-containing modifier to be added. More specifically, the control of the branch number will be described in the method for producing the modified conjugated diene-based polymer described later.

In general, the abrasion resistance and fracture strength of polymers tend to be excellent when the absolute molecular weight of polymers is higher. However, when the absolute molecular weight of polymers having a low branch number is increased, the polymer particles are easily peeled off from the surface of bales, resulting in poor bale formability. In addition, a viscosity in vulcanization is so largely increased that processability in the vulcanization tends to be largely deteriorated. Therefore, in a polymer having a low branch number, even when a large number of functional groups are introduced into the polymer for purposes of improving affinity and/or reactivity with silica to be blended as a filler, the silica cannot be sufficiently dispersed in the polymer during the kneading process. As a result, polymers having a low branch number lead to limited degree of freedom in designing molecular weight due to restrictions on processability.

### (Mooney Viscosity of Modified Conjugated Diene-based Polymer)

A Mooney viscosity is an index indicating the overall characteristics of a conjugated diene-based polymer, including information on the molecular weight, molecular weight distribution, branch number, and softener content of the conjugated diene-based polymer. Also, the method for measuring Mooney viscosity is specified in ISO 289, and the error in measurement values due to machine differences is small, making it extremely effective in controlling the performance of the conjugated diene-based polymer.

The Mooney viscosity of the conjugated diene-based polymer of the present embodiment measured at 100°C (hereinafter also simply referred to as "Mooney viscosity" or "ML") is preferably 80 or more, and from the viewpoint of steering stability, fracture strength, and abrasion resistance when crosslinkable rubber compositions containing the conjugated diene-based polymer of the present embodiment are used for tires, it is more preferably 90 or more, and further preferably 100 or more.

On the other hand, the upper limit is preferably 170 or less, and from the viewpoints of formability and productivity of formed bodies with various shapes such as sheet or block shapes and rubber compositions containing the conjugated diene-based polymer of the present embodiment, as well as processability of rubber compositions in which a filler or the like has been compounded, it is more preferably 160 or less, further preferably 150 or less, still further preferably 145 or less, and most preferably 140 or less.

For the Mooney viscosity of the conjugated diene-based polymer, a sample obtained by making the conjugated diene-based polymer into a plate with a pressurizing press is used and set in a measurement apparatus, the sample is first preheated at 100°C for 1 minute, the rotor is then rotated at 2 rpm, the torque after 4 minutes is measured, and the measured value is taken as the Mooney viscosity (ML₍₁₊₄₎). More specifically, it can be measured by a method described in the examples below.

The Mooney viscosity of the conjugated diene-based polymer of the present embodiment can be controlled within the numerical range described above by adjusting, in each of the conjugated diene-based polymers A and B, the type, timing of use, and amount of branching agent and coupling modifier, as well as the molecular weight, molecular weight distribution, and branch number of the conjugated diene-based polymer, and by adjusting the ratio of the conjugated diene-based polymers A and B.

### (Mooney Stress Relaxation of Conjugated Diene-based Polymer)

The Mooney stress relaxation of the conjugated diene-based polymer of the present embodiment measured at 100°C (hereinafter also simply referred to as "Mooney stress relaxation" or "MSR") is preferably 0.8 or less, and from the viewpoint of processability of rubber compositions in which a filler or the like is compounded in the conjugated diene-based polymer, it is more preferably 0.75 or less, further preferably 0.70 or less, still further preferably 0.65 or less, and most preferably 0.60 or less. On the other hand, the Mooney stress relaxation is preferably 0.25 or more, and from the viewpoint of steering stability and fracture strength when the conjugated diene polymer of the present embodiment is used as a material for tires, it is more preferably 0.30 or more, further preferably 0.32 or more, still further preferably 0.34 or more, and particularly preferably 0.36 or more.

Like the Mooney viscosity, the Mooney stress relaxation is also affected by the molecular weight, molecular weight distribution, branch number, and softener content of a conjugated diene-based polymer, and is an index indicating the overall characteristics of the conjugated diene-based polymer.

The MSR can be measured as follows, using a Mooney viscometer.

For the Mooney stress relaxation, a sample is first preheated at 100°C for 1 minute, the rotor is then rotated at 2 rpm, and the Mooney viscosity (ML₍₁₊₄₎) is measured from the torque after 4 minutes. Thereafter, the rotation of the rotor is immediately stopped, the torque is recorded in Mooney units every 0.1 second from 1.6 seconds to 5 seconds after the stoppage, the slope of the straight line obtained by log-log plotting both torque and time (seconds) is determined, and its absolute value is used as a Mooney stress relaxation (MSR).

More specifically, it can be measured by a method described in the examples below.

The Mooney stress relaxation of the conjugated diene-based polymer of the present embodiment can be controlled within the numerical range described above by adjusting, in each of the conjugated diene-based polymers A and B, the type, timing of use, and amount of branching agent and coupling modifier, as well as the molecular weight, molecular weight distribution, and branch number of the conjugated diene-based polymer, and by adjusting the ratio of the conjugated diene-based polymers A and B.

### [Conjugated Diene-based Polymer A and Conjugated Diene-based Polymer B]

The conjugated diene-based polymer A and the conjugated diene-based polymer B may be any of the following: a homopolymer of a single conjugated diene compound; a polymer of different types of conjugated diene compounds, that is, a copolymer; and a copolymer of a conjugated diene compound and a vinyl aromatic compound.

Examples of the conjugated diene compound include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferred from the viewpoint that the effects of the present embodiment are effectively and definitely exhibited. One of these conjugated diene compounds may be singly used, or two or more of these may be used together.

Examples of the vinyl aromatic compound include, but are not limited to, styrene, p-methylstyrene, m-methylstyrene, o-methylstyrene, α-methylstyrene, vinylethylbenzene, vinylxylene, vinylnaphthalene, and diphenylethylene. Among these, styrene is preferred from the viewpoint that the effects of the present embodiment are effectively and definitely exhibited. One of these vinyl aromatic compounds may be singly used, or two or more of these may be used together.

The conjugated diene-based polymer may be a random copolymer or may be a block copolymer.

Examples of the random copolymer include, but are not limited to, a random copolymer composed of two or more conjugated diene compounds such as a butadiene-isoprene random copolymer, and a random copolymer composed of a conjugated diene and a vinyl-substituted aromatic compound such as a butadienestyrene random copolymer, an isoprene-styrene random copolymer, and a butadiene-isoprene-styrene random copolymer.

The composition distribution of each monomer in the copolymer chain is not especially limited, and examples thereof include a completely random copolymer having a composition close to a statistically random composition, and a tapered (gradient) random copolymer in which the composition is distributed in a tapered manner. The bonding mode of the conjugated diene, that is, the composition of 1,4-bond, 1,2-bond, and the like may be uniform or may have a distribution.

### (Weight Average Molecular Weight of Conjugated Diene-based Polymer A and Conjugated Diene-based Polymer B)

The conjugated diene-based polymer (A) has a weight average molecular weight (Mw) measured by gel permeation chromatography (GPC) of 70 × 10⁴ or more and 250 × 10⁴ or less, and the modified conjugated diene-based polymer (B) has a Mw measured by GPC of 10 × 10⁴ or more and less than 70 × 10⁴. From the viewpoints of improving the bale formability of the modified conjugated diene-based polymer and the processability, abrasion resistance, and fracture strength when formed into a vulcanizate, the weight average molecular weight (Mw) of the conjugated diene-based polymer (A) is preferably 70 × 10⁴ or more and 200 × 10⁴ or less, more preferably 70 × 10⁴ or more and 150 × 10⁴ or less, and further preferably 75 × 10⁴ or more and 140 × 10⁴ or less, and the weight average molecular weight (Mw) of the conjugated diene-based polymer (B) is preferably 30 × 10⁴ or more and less than 70 × 10⁴, more preferably 40 × 10⁴ or more and less than 70 × 10⁴, and further preferably 50 × 10⁴ or more and less than 70 × 10⁴.

The difference (ΔMw) between the weight average molecular weights of the conjugated diene-based polymer (A) and the conjugated diene-based polymer (B) is not especially limited, but it is preferably 20 × 10⁴ or more, more preferably 25 × 10⁴ or more, further preferably 30 × 10⁴ or more, still further preferably 35 × 10⁴ or more, and most preferably 40 × 10⁴ or more, from the viewpoints of improving the bale formability of the modified conjugated diene-based polymer and the processability, abrasion resistance, and fracture strength when formed into a vulcanizate.

### (Glass Transition Temperature of Conjugated Diene-based Polymer A and Conjugated Diene-based Polymer B)

It is desirable that the difference in glass transition temperature between the conjugated diene-based polymers (A) and (B) is 15°C or more. Either one of the conjugated diene-based polymers (A) and (B) may have a higher glass transition temperature, but from the viewpoints of bale formability of the modified conjugated diene-based polymer and processability and abrasion resistance when formed into a vulcanizate, it is preferable that one of the glass transition temperatures is -90°C or more and -55°C or less and the other glass transition temperature is -55°C or more and -10°C or less. The glass transition temperatures of the conjugated diene-based polymers (A) and (B) can be measured in accordance with ISO 22768: 2017. More specifically, a DSC curve is recorded by measuring differential scanning calorimetry (DSC) with a temperature increased within a prescribed range, and a peak top (inflection point) of a DSC differential curve thus obtained is defined as the glass transition temperature. Specifically, it can be measured by a method described in the examples below.

### (Modification Ratio of Conjugated Diene-based Polymer A and Conjugated Diene-based Polymer B)

The modification ratio of the conjugated diene-based polymers (A) and (B) is not especially limited, but it is preferably 40% by mass or more, more preferably 50% by mass or more, further preferably 60% by mass or more, still further preferably 65% by mass or more, even more preferably 70% by mass or more, and most preferably 75% by mass or more. The upper limit of the modification ratio is not especially limited, and it may be 100% by mass, 98% by mass or less, 95% by mass or less, or 90% by mass or less.

### (Structure of Conjugated Diene-based Polymer A and Conjugated Diene-based Polymer B)

The modified conjugated diene-based polymer of the present embodiment is preferably a set of the conjugated diene-based polymers A and B having substantially different molecular weights. By being a set of polymers having different molecular weights or branch numbers, the molecular weight distribution curve obtained by gel permeation chromatography (GPC) has a unimodal shape and has a shape having a shoulder on a higher molecular weight side than a peak top.

The conjugated diene-based polymer A and/or B may have a structure with a fork-like shape in which the polymer chain is branched in the middle into multiple polymer chains. The branched portion of the structure with a fork-like shape is referred to as "main chain branch structure part", and is preferably an atomic group containing an alkoxysilyl group or a halosilyl group heteroatom, as described below. Multiple conjugated diene-based polymer chains are bonded to one end of the main chain branch structure part, and a single chain of another conjugated diene-based polymer is bonded to the other end, forming a fork-like part [A].

A specific production method will be shown below. The "main chain branch structure part" is formed by reacting a branching agent having a functional group that reacts with the polymerization active ends of multiple polymer chains and a portion that continues polymerization, allowing the branching agent to be bonded to multiple conjugated diene-based polymer chains while continuing the polymerization. A single chain of the conjugated diene-based polymer that continues polymerization from the branching agent may be further reacted with a coupling modifier.

By forming the above "main chain branch structure part" and then reacting a single chain of the conjugated diene-based polymer that has continued polymerization from the branching agent with a coupling modifier having 2 branches, the conjugated diene-based polymer A and/or B may include a structure of the fork-like part [A] with a longer single chain side (referred to as fork-like structure with a long handle).

By forming the above "main chain branch structure part" and then bonding a single chain of the conjugated diene-based polymer that has continued polymerization from the branching agent to one or more coupling modifiers that form a star branch structure having 3 or more branches, the conjugated diene-based polymer A and/or B may form a structural body with star branches (star polymer structure part [B]).

Herein, the term "main chain branch structure" refers to a structure in which a polymer chain forms a branch point and polymer chains (arms) are further extended from that branch point. Typically, the branch point constituted by a portion derived from a vinyl-based monomer containing an alkoxysilyl group or a halosilyl group is 2 or more branch points, preferably 3 or more branch points, and more preferably 4 or more branch points.

As for the "fork-like structure with a long handle" as used herein, the structure of the fork-like part [A] with a longer single chain side is referred to as fork-like structure with a long handle. Although this structure can also be formed by the single chain continuing the polymerization, it is preferably formed by reacting the single chain of the fork-like part [A] with a coupling modifier having 2 branches.

Herein, the term "star polymer structure" refers to a structure in which 3 or more polymer chains (arms) are bonded to one central branch point. Branches derived from the star polymer structure are preferably 3 or more branches, more preferably 4 or more branches, further preferably 6 or more branches, and still further preferably 8 or more branches.

Also, the one central branch point herein refers to a set (atomic group) having an atom derived from the coupling modifier or a nitrogen atom-containing substituent derived from the modifier, and does not mean a single atom. For example, a set having an alkoxysilyl group spaced apart from an amino group by 1 to 5 carbon atoms, preferably 2 to 3 carbon atoms, is a typical central branch point.

### <Main Chain Branch Structure and Branching Agent>

A vinyl-based monomer containing an alkoxysilyl group or a halosilyl group used in constructing the "main chain branch structure" as used herein is referred to as "branching agent".

As the branching agent, it is preferable to use a vinyl-based monomer containing an alkoxysilyl group or a halosilyl group represented by the following formula (1) or (2). That is, the "main chain branch structure" is preferably constituted by an atomic group derived from a vinyl-based monomer containing an alkoxysilyl group or a halosilyl group represented by the following formula (1) or (2).

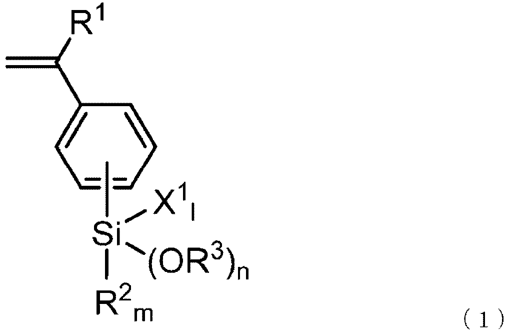

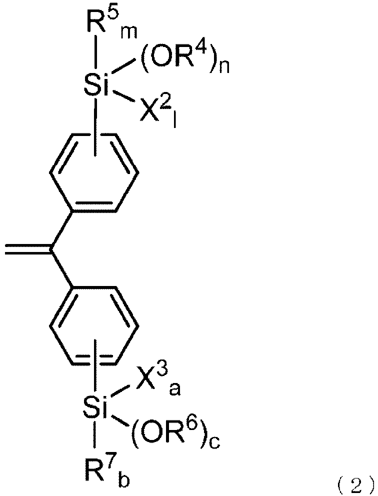

In the formula (1), R¹ represents a hydrogen atom, or an alkyl group having 1 to 20 carbon atoms or an aryl group having 6 to 20 carbon atoms, and may have a branch structure in a part thereof.

R² to R³ each independently represent an alkyl group having 1 to 20 carbon atoms or an aryl group having 6 to 20 carbon atoms, and may have a branch structure in a part thereof. R² to R³, if present in a plural number, are respectively independent.

X¹ represents an independent halogen atom.

m represents an integer of 0 to 2, n represents an integer of 0 to 3, and l represents an integer of 0 to 3. (m + n + l) represents 3.

In the formula (2), R⁴ to R⁷ each independently represent an alkyl group having 1 to 20 carbon atoms or an aryl group having 6 to 20 carbon atoms, and may have a branch structure in a part thereof.

R⁴ to R⁷, if present in a plural number, are respectively independent.

X² to X³ represent independent halogen atoms.

m represents an integer of 0 to 2, n represents an integer of 0 to 3, and l represents an integer of 0 to 3.

(m + n + l) represents 3.

a represents an integer of 0 to 3, b represents an integer of 0 to 2, and c represents an integer of 0 to 3. (a + b + c) represents an integer of 3.

The conjugated diene-based polymer of the present embodiment preferably has a monomer unit based on a compound represented by the formula (1) wherein R¹ is a hydrogen atom and m = 0 in the formula (1).

This improves the overall number of branches in the conjugated diene copolymer, and provides the effect of improving abrasion resistance and processability.

Alternatively, the conjugated diene-based polymer of the present embodiment is preferably a modified conjugated diene-based polymer having a monomer unit based on a compound represented by the formula (2) wherein m = 0 and b = 0 in the formula (2).

This provides the effect of improving abrasion resistance and processability.

Alternatively, the conjugated diene-based polymer of the present embodiment preferably has a monomer unit based on a compound represented by the formula (1) wherein R¹ is a hydrogen atom, m = 0, and l = 0 in the formula (1).

This improves the overall branch number in the conjugated diene copolymer, and provides the effect of improving abrasion resistance and processability.

Alternatively, the conjugated diene-based polymer of the present embodiment is preferably a conjugated diene-based polymer having a monomer unit based on a compound represented by the formula (2) wherein m = 0, l = 0, a = 0, and b = 0 in the formula (2).

This provides the effect of improving abrasion resistance and processability.

Alternatively, the conjugated diene-based polymer of the present embodiment is further preferably a conjugated diene-based polymer having a monomer unit based on a compound represented by the formula (1) wherein R¹ is a hydrogen atom, l = 0, and n = 3 in the formula (1).

This improves the modification ratio and the branch number, and provides the effect of improving fuel efficiency, abrasion resistance, and processability.

### <Fork-like Conjugated Diene-based Polymer with Long Handle>

The structure of the fork-like part [A] with a longer single chain side is referred to as fork-like with a long handle. Although this structure can also be formed by the single chain continuing the polymerization, when the fork-like conjugated diene-based polymer with a long handle is produced at the same time as the polymer having a star polymer structure part [B] having 3 or more branches to which one or more fork-like parts [A] are bonded, it is reasonable to adopt a method in which the single chain of the fork-like part [A] is reacted with a coupling modifier having 2 branches.

The fork-like conjugated diene-based polymer with a long handle is constructed by constructing a comb-like structural site derived from the main chain branch structure, and then continuing the polymerization to increase the molecular weight. It is preferable that, after the construction of a comb-like structural site derived from the main chain branch structure, the polymerization is continued to increase the molecular weight, followed by modification with a bifunctional or lower coupling modifier. More preferably, a bifunctional coupling modifier is used to further increase the molecular weight of the handle portion.

The fork-like conjugated diene-based polymer with a long handle, which has the structure of the fork-like part [A] with a longer single chain side, preferably includes in its long handle part a structure having a nitrogen atom-containing group represented by any of the following general formula (3), general formula (4-1), and general formula (4-2).

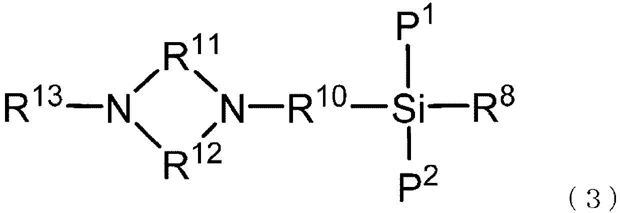

In the formula (3), P¹ and P² are polymer chains, one of which is a fork-like part [A] having a main chain branch structure part, and the other is a linear polymer chain not having a branch structure.

R⁸ is a hydrocarbon group or hydrocarbyl group having 1 to 20 carbon atoms, and R¹⁰ is a hydrocarbon group having 1 to 20 carbon atoms that contains S, O, or N and is optionally substituted with an organic group having no active hydrogen, in which an unsaturated bond may be present, and they may be the same as or different from each other.

R¹¹ and R¹² are aliphatic hydrocarbon groups having 1 to 6 carbon atoms, an unsaturated bond may be present therein, and they may be the same as or different from each other, and R¹³ is a hydrocarbon group having 1 to 20 carbon atoms containing Si, O, or N and optionally substituted with an organic group having no active hydrogen, and an unsaturated bond may be present therein.

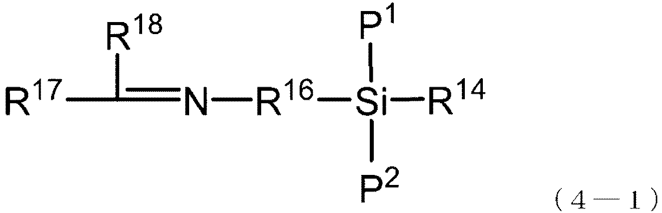

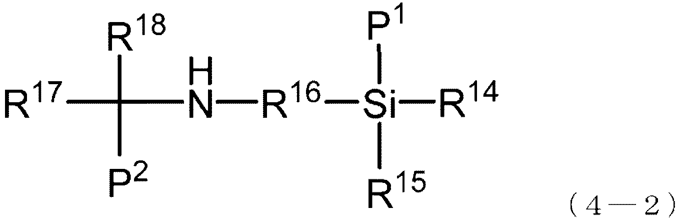

In the formulas (4-1) and (4-2), P¹ and P² are polymer chains, one of which is a fork-like part [A] having a main chain branch structure, and the other is a linear polymer chain not having a branch structure.

R¹⁴ and R¹⁵ are hydrocarbon groups or hydrocarbyl groups having 1 to 20 carbon atoms, and R¹⁶ is a hydrocarbon group having 1 to 20 carbon atoms that contains O or N and is optionally substituted with an organic group having no active hydrogen, in which an unsaturated bond may be present, and they may be the same as or different from each other.

R¹⁷ and R¹⁸ are hydrocarbon groups having 1 to 20 carbon atoms containing Si, O, or N and optionally substituted with an organic group having no active hydrogen, and an unsaturated bond may be present therein.

### <Conjugated Diene-based Polymer Having Star Polymer Structure Part [B]>

The conjugated diene-based polymer having a star polymer structure part [B] is a conjugated diene-based polymer having a star polymer structure having 3 or more branches, constructed by constructing a comb-like structural site derived from the main chain branch structure, and then continuing the polymerization to increase the molecular weight, followed by modification with a trifunctional or higher coupling modifier. Such a conjugated diene-based polymer has a portion derived from the vinyl-based monomer containing an alkoxysilyl group or a halosilyl group in a branched chain of at least one star structure. With respect to a method for obtaining a conjugated diene-based polymer having a further main chain branch structure in the portion derived from the vinyl-based monomer containing an alkoxysilyl group or a halosilyl group, the "star polymer structure" can be formed by adjusting the number of functional groups of the modifier and the amount of the modifier to be added, and the "main chain branch structure" can be controlled by adjusting the number of functional groups of the branching agent, the amount of the branching agent to be added, and the timing of adding the branching agent.

### <Conjugated Diene-based Polymer Having Star Polymer Structure Part [B]>

The conjugated diene-based polymer of the present embodiment preferably contains a structure having a nitrogen atom-containing group represented by any of the following general formulas (5-1) to (5-4), (7-1) to (7-2), (8), and (9-1) to (9-2) in its star branch structure part.

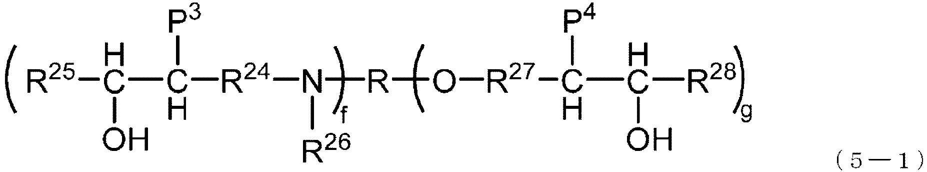

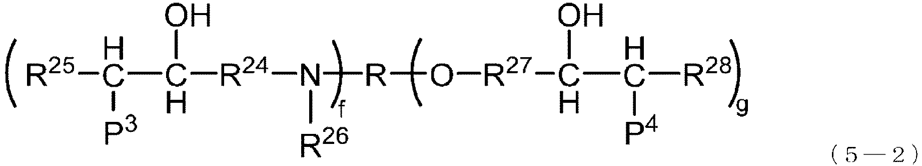

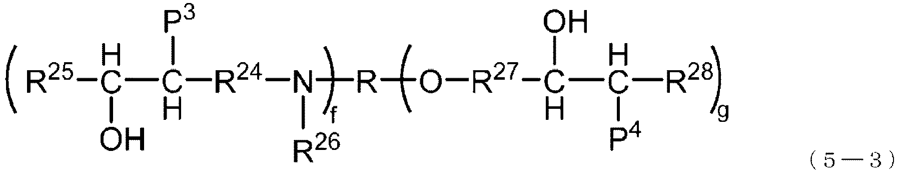

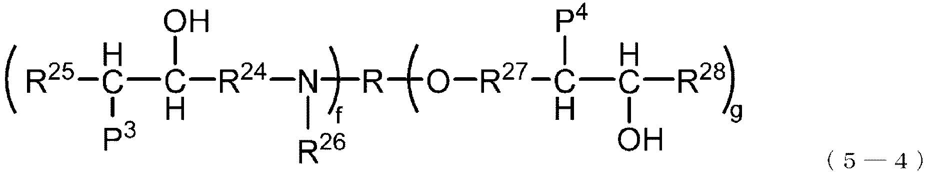

In the formulas (5-1) to (5-4), R represents a bivalent or higher hydrocarbon group, or a bivalent or higher organic group having at least one polar group selected from a polar group having oxygen such as ether, epoxy or ketone, a polar group having sulfur such as thioether or thioketone, and a polar group having nitrogen such as a tertiary amino group or an imino group.

The bivalent or higher hydrocarbon group may be a saturated or unsaturated linear, branched or cyclic hydrocarbon group, and encompasses an alkylene group, an alkenylene group, a phenylene group and the like. The bivalent or higher hydrocarbon group is preferably a hydrocarbon group having 1 to 20 carbon atoms. Examples include methylene, ethylene, butylene, cyclohexylene, 1,3-bis(methylene)-cyclohexane, 1,3-bis(ethylene)-cyclohexane, o-, m- and p-phenylene, m- and p-xylene, and bis(phenylene)-methane.

In the formulas (5-1) to (5-4), R²⁴ and R²⁷ are hydrocarbon groups having 1 to 10 carbon atoms, and R²⁴ and R²⁷ may be the same as or different from each other.

In the formulas (5-1) to (5-4), R²⁵ and R²⁸ are hydrogen or hydrocarbon groups having 1 to 10 carbon atoms, and R²⁵ and R²⁸ may be the same as or different from each other.

In the formulas (5-1) to (5-4), P³ and P⁴ are polymer chains, and are fork-like parts [A] having a main chain branch structure part, or linear polymer chains not having a branch structure.

In the formulas (5-1) to (5-4), R²⁶ is a hydrocarbon group having 1 to 10 carbon atoms, or a structure of the following formulas (6-1) to (6-3).

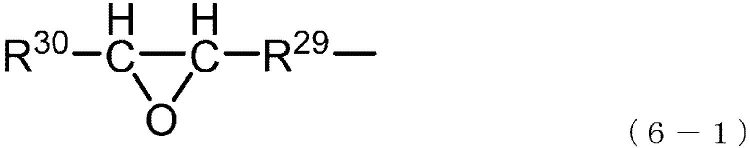

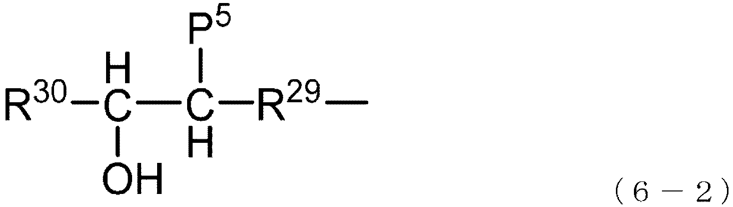

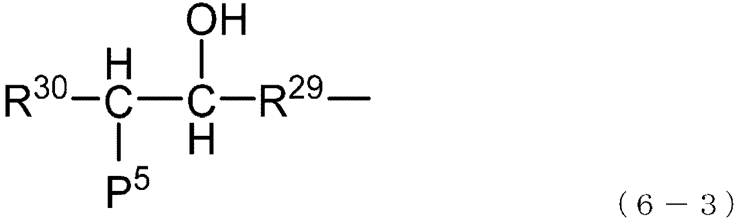

In the formulas (5-1) to (5-4), R²⁴, R²⁵ and R²⁶ may be a cyclic structure mutually bonded.

In the formulas (5-1) to (5-4), when R²⁶ is a hydrocarbon group, it may be a cyclic structure mutually bonded to R. In the case of the cyclic structure described above, N and R bonded to R²⁶ may be in the form of being directly bonded to each other.

In the formulas (5-1) to (5-4), f is an integer of 1 or more, and g is an integer of 0 or 1 or more.

In the formulas (6-1) to (6-3), R²⁹ and R³⁰ are defined the same respectively as R²⁴ and R²⁵ in the formulas (5-1) to (5-4), and in the formulas (6-1) to (6-3), P⁵ is defined the same as P³ and P⁴ in the formulas (5-1) to (5-4).

R²⁹ and R³⁰ may be the same as or different from each other.

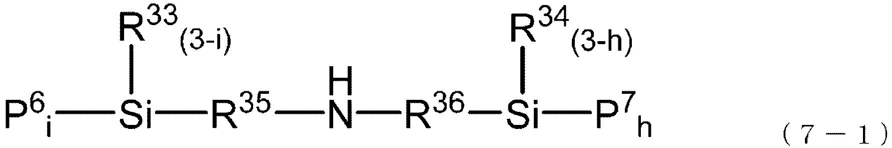

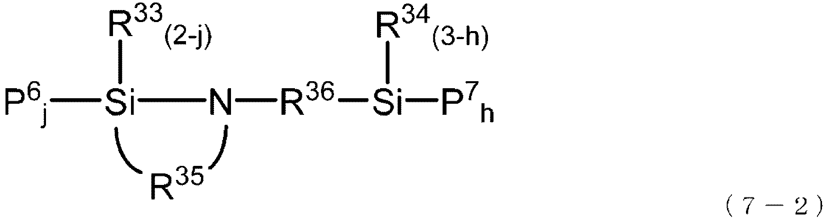

In the formulas (7-1) to (7-2), P⁶ and P⁷ are polymer chains, and are fork-like parts [A] having a main chain branch structure, or linear polymer chains not having a branch structure.

When P⁶ and P⁷ are each bonded in a plural number (when h or i or j is an integer of 2 or more), they may be the same as or different from each other in each of P⁶ and P⁷.

R³³ and R³⁴ each independently represent an alkyl group or hydrocarbyl group having 1 to 20 carbon atoms, or an aryl group having 6 to 20 carbon atoms, R³⁵ represents an alkylene group having 1 to 10 carbon atoms, and R³⁶ represents an alkylene group having 1 to 20 carbon atoms.

h represents an integer of 1 to 3, i represents an integer of 1 to 3, j represents an integer of 1 or 2, and (h + i) and (h + j) represent integers of 3 or more.

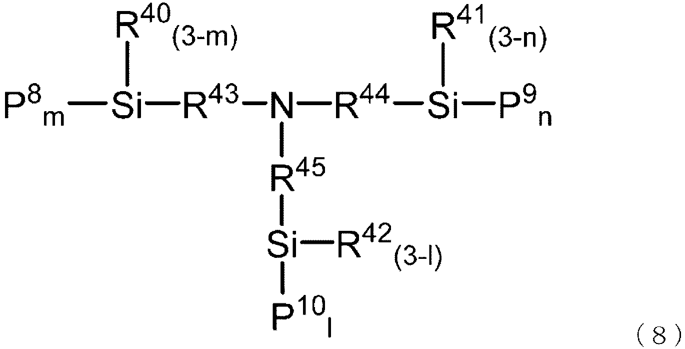

In the formula (8), P⁸, P⁹ and P¹⁰ are polymer chains, and are fork-like parts [A] having a main chain branch structure, or linear polymer chains not having a branch structure.

When P⁸, P⁹ and P¹⁰ are each bonded in a plural number (when m or n or l is an integer of 2 or more), they may be the same as or different from each other in each of P⁸, P⁹ and P¹⁰.

R⁴⁰ to R⁴² each independently represent an alkyl group or hydrocarbyl group having 1 to 20 carbon atoms, or an aryl group having 6 to 20 carbon atoms, and R⁴³ to R⁴⁵ each independently represent an alkylene group having 1 to 20 carbon atoms.

m, n and l each independently represent an integer of 1 to 3, and (m + n + l) represents an integer of 3 or more.

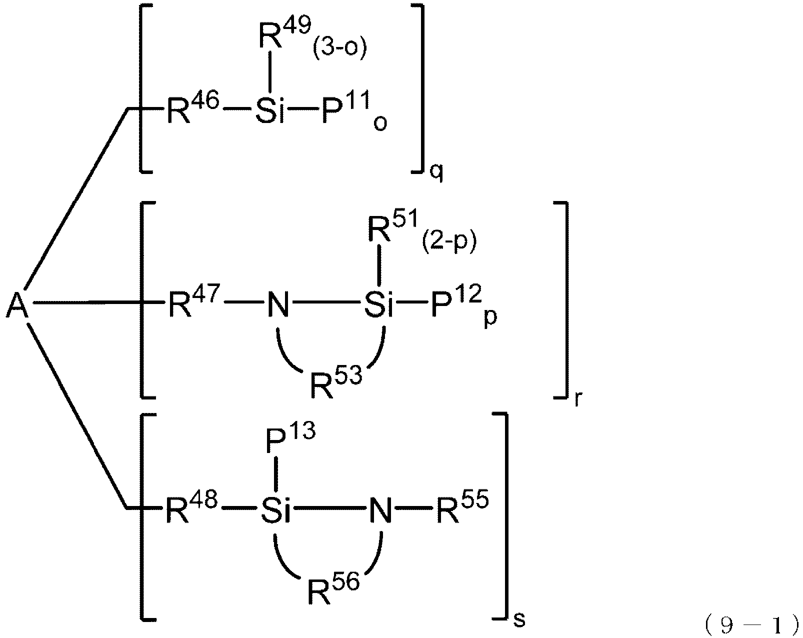

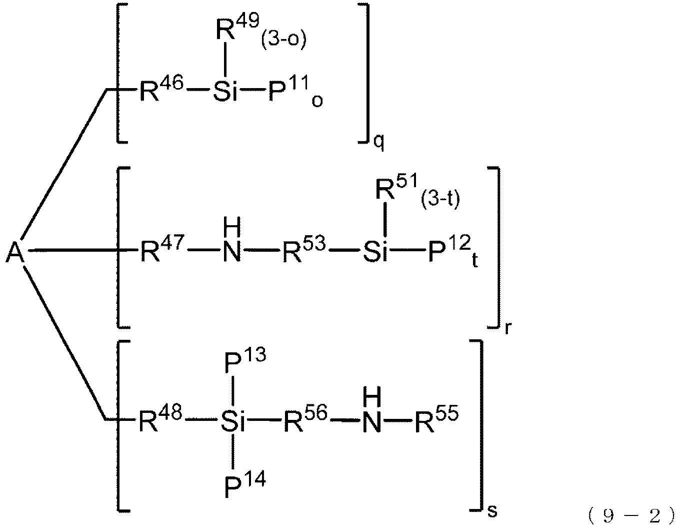

In the formulas (9-1) to (9-2), P¹¹ to P¹⁴ are polymer chains, and are fork-like parts [A] having a main chain branch structure, or linear polymer chains not having a branch structure. When P¹¹ and P¹² are each bonded in a plural number (when o or p is an integer of 2 or more), they may be the same as or different from each other in each of P¹¹ and P¹².

R⁴⁶ to R⁴⁸ each independently represent a single bond or an alkylene group having 1 to 20 carbon atoms, R⁴⁹ and R⁵¹ each independently represent an alkyl group or hydrocarbyl group having 1 to 20 carbon atoms, R⁵³ and R⁵⁶ each independently represent an alkylene group having 1 to 20 carbon atoms, and R⁵⁵ represents an alkyl group or trialkylsilyl group having 1 to 20 carbon atoms that contains S, O, or N and is optionally substituted with an organic group having no active hydrogen, in which an unsaturated bond may be present, and they may be the same as or different from each other.

∘ represents an integer of 1 to 3, p represents 1 or 2, and t represents an integer of 1 to 3.

Each of R⁴⁶ to R⁵⁶, o, p and t if present in a plural number, is respectively independent, and they may be the same as or different from each other.

q represents an integer of 0 to 6, r represents an integer of 0 to 6, s represents an integer of 0 to 6, and (q + r + s) is an integer of 4 to 10.

A represents a hydrocarbon group having 1 to 20 carbon atoms, or an organic group having at least one atom selected from the group consisting of an oxygen atom, a nitrogen atom, a silicon atom, a sulfur atom, and a phosphorus atom and having no active hydrogen.

In the formulas (9-1) to (9-2), A is preferably represented by any one of the following general formulas (I) to (IV).

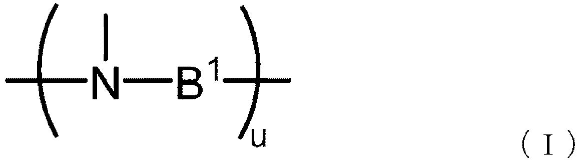

In the formula (I), B¹ represents a single bond or a hydrocarbon group having 1 to 20 carbon atoms, and u represents an integer of 1 to 10. B¹, if present in a plural number, is respectively independent.

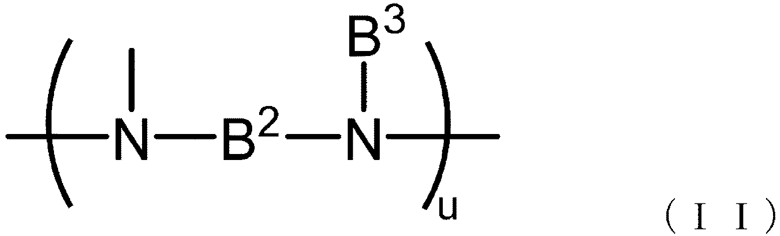

In the formula (II), B² represents a single bond or a hydrocarbon group having 1 to 20 carbon atoms, B³ represents an alkyl group having 1 to 20 carbon atoms, and u represents an integer of 1 to 10. Each of B² and B³, if present in a plural number, is respectively independent.

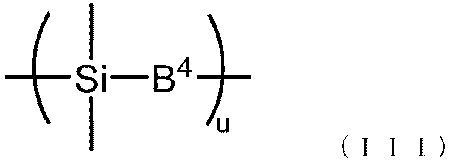

In the formula (III), B⁴ represents a single bond or a hydrocarbon group having 1 to 20 carbon atoms, and u represents an integer of 1 to 10. B⁴, if present in a plural number, is respectively independent.

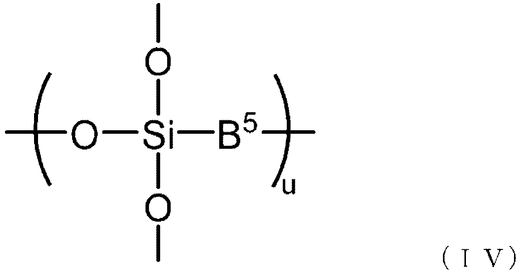

In the formula (IV), B⁵ represents a single bond or a hydrocarbon group having 1 to 20 carbon atoms, and u represents an integer of 1 to 10. B⁵, if present in a plural number, is respectively independent.

### [Formed Body]

A formed body of the present embodiment is a formed body containing the conjugated diene-based polymer of the present embodiment described above. From the viewpoint of handleability, it is preferably a sheet-like or block-like formed body.

The size and thickness of the sheet-like or block-like formed body is not especially limited, and examples include a sheet-like formed body with a thickness of about 1 cm, and a rectangular or cubic block-like formed body of 1,000 cm³.

The formed body of the present embodiment is more preferably a block-like formed body, and it is preferable that the shape of the block is generally rectangular, and it is further preferably a block-like (bale) formed body of 1,000 cm³ or more. In addition, it is still further preferably a rectangular bale of 17.5 kg to 35 kg.

The method for forming is preferably, for example, a method in which crumbs with a specific surface area of 0.7 m²/g to 3.2 m²/g are fabricated and the crumbs are compression-formed. From the viewpoint of formability, it is preferable to further perform a step of sieving the crumbs prior to forming.

Since the crumbs adhere to each other when compression-forming the crumbs, the specific surface area of the formed body is smaller compared to the specific surface area of the crumbs. The adherence of the crumbs at the time of compression forming can be adjusted by the molecular weight, composition, and structure of the conjugated diene-based polymer, the composition of the softener component, and the temperature and pressure at the time of compression. For example, in the case where the adherence of the crumbs is to be increased and the specific surface area of the bale is to be lowered, it is preferable to apply conditions that lower the molecular weight of the conjugated diene-based polymer, increase the amount of the softener component, and increase the temperature and pressure at the time of compression.

The specific surface area of the formed body of the present embodiment is preferably 0.005 to 0.05 m²/g, and more preferably 0.01 to 0.04 m²/g from the viewpoint of a film packaging property. When the specific surface area of the formed body is 0.005 m²/g or more, bale expansion is suppressed, and when the specific surface area of the formed body is 0.05 m²/g or less, peeling off of the crumbs from the formed body is reduced, which is preferable.

The specific surface area of the formed body can be determined by the BET method.

Normally, the specific surface area of formed bodies with a large size may vary depending on the location, and therefore, it is preferable to collect from near the center portion of the formed body.

The crumbs are preferably sieved by particle size before forming, and then mixed in appropriate quantity ratios.

When the specific surface area of a formed body formed using crumbs after desolvation as they are exceeds the upper limit of the above-described range, it is preferable to increase the composition of crumbs with larger particle sizes and decrease the composition of crumbs with smaller particle sizes among the sieved crumbs, and when the specific surface area is below the lower limit, it is preferable to decrease the composition of crumbs with larger particle sizes and increase crumbs with smaller particle sizes.

The forming compression pressure for the formed body is preferably 3 MPa to 30 MPa, and more preferably 10 MPa to 20 MPa. When the compression pressure at the time of forming is 30 MPa or less, the apparatus can be designed compactly, resulting in good installation efficiency, and when the compression pressure at the time of forming is 3 MPa or more, the formability is good. Good formability tends to result in a smooth surface of the formed body, no peeling off of the polymer after the forming step, and suppressed expansion after forming.

The temperature of the conjugated diene-based polymer or the rubber composition containing the conjugated diene-based polymer at the time of forming is preferably 30 to 120°C, and more preferably 50 to 100°C from the viewpoints of reducing residual solvent and suppressing thermal degradation.

A temperature of 30°C or more at the time of forming provides good formability, whereas a temperature of 120°C or less suppresses gel formation due to thermal degradation of the rubber composition, which is preferable.

As the temperature and pressure at the time of forming are higher, the specific surface area of the bale becomes smaller.

The pressure holding time at the time of forming is preferably 3 to 30 seconds, and more preferably 5 to 20 seconds. A pressure holding time at the time of compression of 30 seconds or less provides good production efficiency, whereas a pressure holding time of 5 seconds or more provides good formability.

In order to avoid adhesion among the formed bodies, packaging with a resin film (packaging sheet) is preferred.

The type of a film resin that can be used is, for example, polyethylene, ethylene copolymer resin, polystyrene, high-impact polystyrene, or PET.

From the viewpoints of handleability at the time of transportation of the formed body and the prevention of dew condensation from occurring in the gap between the packaging sheet and the bale, good adherence of the packaging sheet is preferable.

The formed body of the present embodiment is used in applications where it is accommodated in containers for transportation, for example. An expansion rate of the formed body after one day has passed after the forming of less than 5% indicates good storability in containers, which is preferable.

Although a softener component described below may be added to a sheet-like or block-like formed body using the conjugated diene-based polymer of the present embodiment, from the viewpoint of improving the degree of freedom in compounding when producing the rubber composition described below, the softener component in the formed body of the present embodiment is preferably 2 parts by mass or less, more preferably 1.5 parts by mass or less, further preferably 1 part by mass or less, still further preferably less than 1 part by mass, with respect to 100 parts by mass of the conjugated diene-based polymer, and it is most preferable that the softener component is not added.

It is noted that the softener component used when producing the rubber composition described below may be described as "rubber softener", but this is to distinguish it in terms of wording from the softener component used for the formed body of the conjugated diene-based polymer, and not to distinguish the material itself.

### [Method for Producing Modified Conjugated Diene-based Polymer]

A method for producing a conjugated diene-based polymer of the present embodiment will be described in detail below.

A method for producing the modified conjugated diene-based polymer of the present embodiment includes:
obtaining a conjugated diene-based polymer (A) and a conjugated diene-based polymer (B) by continuous polymerization using one or more reactors for each;
mixing a polymerization solution containing the modified conjugated diene-based polymer (A) and a polymerization solution containing the modified conjugated diene-based polymer (B); and
then removing a solvent to obtain the modified conjugated diene-based polymer.

### <Method for Producing Conjugated Diene-based Polymer (A) and Conjugated Diene-based Polymer (B)>

A method for producing the conjugated diene-based polymer (A) or the conjugated diene-based polymer (B) includes a step of polymerizing a conjugated diene compound, optionally together with a vinyl aromatic compound, using an alkali metal compound or an alkaline earth metal compound (for example, an organic metal compound such as an organic lithium compound) as a polymerization initiator and a step of adding a branching agent to obtain a conjugated diene-based polymer having a branch structure (hereinafter sometimes collectively referred to as polymerizing branching step), and a step of adding a coupling modifier.

In the above production method, the conjugated diene-based polymer (A) and the conjugated diene-based polymer (B) are not necessarily required to undergo the polymerizing branching step, but it is preferable that at least one of the conjugated diene-based polymer (A) and the conjugated diene-based polymer (B) is produced through the polymerizing branching step.

The polymerization reaction of a conjugated diene compound and an aromatic vinyl compound is performed preferably through a growth reaction by a living anionic polymerization reaction, and thus, a conjugated diene-based polymer having an active end can be obtained. As a result, when a branching agent is added, the conjugated diene-based polymer and the branching agent efficiently react with each other. Besides, also when the production method of the present embodiment includes a coupling step described below, there is a tendency that a reaction with high efficiency can be performed.

Examples of a polymerization reaction mode include, but are not limited to, batch and continuous polymerization reaction modes.

In the continuous mode, one reactor or two or more connected reactors can be used. As a reactor for the continuous mode, for example, a tank or tubular reactor equipped with a stirrer is used. In the continuous mode, a monomer, an inert solvent described below, and a polymerization initiator described below are continuously fed to the reactor, a polymer solution containing a polymer is obtained in the reactor, and the polymer solution is continuously discharged.

As a reactor for the batch mode, for example, a tank reactor equipped with a stirrer is used. Preferably, in the batch mode, a monomer, an inert solvent described below, and a polymerization initiator described below are fed, the monomer is continuously or intermittently additionally fed if necessary, during the polymerization, a polymer solution containing a polymer is obtained in the reactor, and the polymer solution is discharged after completing the polymerization.

In the method for a conjugated diene-based polymer (A) or a conjugated diene-based polymer (B), from the viewpoint that a conjugated diene-based polymer having an active end can be obtained at a high ratio, the polymerization reaction is caused to proceed preferably by the continuous polymerization reaction mode in which a polymer is continuously discharged to be supplied to a next reaction in a short period of time.

### (Polymerizing Branching Step)

The polymerizing branching step in the method for producing a conjugated diene-based polymer (A) or a conjugated diene-based polymer (B) is a step of obtaining a conjugated diene-based polymer having a branch structure by polymerizing at least a conjugated diene compound with, if necessary, a vinyl aromatic compound with a polymerization initiator such as an organic lithium compound described below, and with a branching agent added. Accordingly, in the polymerizing branching step, a polymerization reaction of at least a conjugated diene compound and an aromatic vinyl compound is a principal reaction before adding a branching agent, and after adding the branching agent, a branching reaction starts.

As monomers, that is, a conjugated diene compound and a vinyl aromatic compound, used in the polymerizing branching step, at least one of the above-described conjugated diene compounds and at least one of the above-described vinyl aromatic compounds may be used. From the viewpoint that a nitrogen atom can be introduced into a conjugated diene-based polymer, a derivative obtained by substitution so as to have at least one nitrogen atom in a molecule may be used as the conjugated diene compound or the vinyl aromatic compound.

The polymerization initiator is not especially limited, and for example, an organic lithium compound such as an organic monolithium compound can be used.

Examples of the organic monolithium compound include, in terms of binding mode between an organic group and lithium therein, a compound having a carbon-lithium bond, a compound having a nitrogen-lithium bond, and a compound having a tin-lithium bond.

Among these, from the viewpoint that a nitrogen atom can be introduced into a conjugated diene-based polymer, the organic monolithium compound is preferably an organic lithium compound having at least one nitrogen atom in a molecule, and more preferably an alkyllithium compound having a substituted amino group, or dialkylamino lithium.

It is noted that the substituted amino group refers to an amino group having no active hydrogen, or an amino group having active hydrogen protected.

Examples of the alkyllithium compound containing an amino group having no active hydrogen include, but are not limited to, piperidinolithium, 3-dimethylaminopropyllithium, 3-diethylaminopropyllithium, 4-(methylpropylamino)butyllithium and 4-hexamethyleneiminobutyllithium.

Examples of the alkyllithium compound containing an amino group having active hydrogen protected include, but are not limited to, 3-bistrimethylsilylaminopropyllithium and 4-trimethylsilylmethylaminobutyllithium.

Examples of the dialkylamino lithium include, but are not limited to, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenetylamide, lithium hexamethyleneimide, lithium pyrrolidide, lithium piperidide, lithium heptamethyleneimide, lithium morpholide, 1-lithioazacyclooctane, 6-lithio-1,3,3-trimethyl-6-azabicyclo[3.2.1] octane, and 1-lithio-1,2,3,6-tetrahydropyridine.

Such an organic monolithium compound having a substituted amino group can be reacted with a small amount of a polymerizable monomer, such as 1,3-butadiene, isoprene or styrene, to be used also as an organic monolithium compound of a soluble oligomer.

When the polymerization initiator has a nitrogen atom constituting an amino group, a chain transfer reaction easily occurs during progress of anion polymerization, and hence a reacting amount of a coupling modifier with the active end after completing the polymerization tends to be reduced. As a result, when the polymerization initiator having a nitrogen atom constituting an amino group is used, the resultant weight average molecular weight tends to be low.

Therefore, when a modification ratio is desired to be set high in a polymer having a comparatively high molecular weight of a weight average molecular weight of 35 × 10⁴ or more, 40 × 10⁴ or more, 45 × 10⁴ or more, or 60 × 10⁴ or more, it is preferable to react a nitrogen atom not on a side of a polymerization start end but on a side of a polymerization terminal end. In other words, there is a tendency that a polymer having a comparatively high molecular weight, and having nitrogen atoms at both ends is difficult to be produced. Although depending on the weight average molecular weight and the structure of a coupling modifier, when a nitrogen atom is contained only on the side of the terminal end, a nitrogen content in the polymer is generally 3 ppm by mass to 500 ppm by mass.

From the viewpoints of industrial availability and controllability of a polymerization reaction, an alkyllithium compound may be used as the organic monolithium compound. When such an organic monolithium compound is used, a conjugated diene-based polymer having an alkyl group at a polymerization start end can be obtained.

Examples of the alkyllithium compound include, but are not limited to, n-butyllithium, sec-butyllithium, tert-butyllithium, n-hexyllithium, benzyllithium, phenyllithium, and stilbene lithium.

As the alkyllithium compound, from the viewpoints of industrial availability and controllability of a polymerization reaction, n-butyllithium and sec-butyllithium are preferred.

One of these organic monolithium compounds may be singly used, or two or more of these may be used together. Alternatively, another organic metal compound may be used together.

Examples of another organic metal compound include, but are not limited to, alkaline earth metal compounds, alkaline metal compounds excluding lithium, and other organic metal compounds.

Examples of the alkaline earth metal compounds include, but are not limited to, organic magnesium compounds, organic calcium compounds and organic strontium compounds. Other examples include compounds of alkoxides, sulfonates, carbonates and amides of alkaline earth metals.

Examples of the organic magnesium compounds include, but are not limited to, dibutyl magnesium and ethyl butyl magnesium.

Examples of the other organic metal compounds include, but are not limited to, organic aluminum compounds.

The amount of the polymerization initiator to be added is preferably determined based on the molecular weight of a conjugated diene-based polymer to be obtained. The number average molecular weight and/or the weight average molecular weight can be controlled in accordance with a ratio of the amount of monomers to be added to the amount of the polymerization initiator to be added. Specifically, when the ratio of the amount of the polymerization initiator to be added is reduced, the molecular weight tends to be increased, and when the ratio of the amount of the polymerization initiator to be added is increased, the molecular weight tends to be reduced.

From the viewpoint that the conjugated diene-based polymer (A) or the conjugated diene-based polymer (B) is definitely and easily obtained, the polymerizing branching step is preferably performed in an inert solvent. Examples of such an inert solvent include, but are not limited to, hydrocarbon solvents such as a saturated hydrocarbon and an aromatic hydrocarbon. Specific examples of the hydrocarbon solvent include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons containing mixtures of any of these.

From the viewpoint that a conjugated diene-based polymer in which a conjugated diene compound and a vinyl aromatic compound are randomly polymerized is obtained, for example, the following method as described in Japanese Patent Laid-Open No. 59-140211 may be employed for the polymerization reaction in the polymerizing branching step. Specifically, a method in which the polymerization reaction is started using the whole amount of the vinyl aromatic compound and a part of the conjugated diene compound, with the rest of the conjugated diene compound intermittently added during the polymerization reaction may be employed.

A polymerization temperature employed in the polymerization reaction in the polymerizing branching step is not especially limited, and is preferably a temperature at which living anion polymerization proceeds. From the viewpoint of improving productivity, the temperature is more preferably 0°C or more, and further preferably 0°C or more and 120°C or less. When the polymerization temperature in the polymerization reaction falls in the above-described range, there is a tendency that reactivity with a coupling modifier can be sufficiently improved in the coupling step described below. From a similar viewpoint, the polymerization temperature in the polymerization reaction is still further preferably 50°C or more and 100°C or less.

In the polymerizing branching step, a polar compound may be added. When the polar compound is added, there is a tendency that a conjugated diene-based polymer in which a vinyl aromatic compound and a conjugated diene compound are further randomly copolymerized can be obtained. Since the polar compound thus has a randomizing effect effective in copolymerization of the conjugated diene compound and the vinyl aromatic compound, it can be used as an agent for adjusting a distribution of the vinyl aromatic compound or adjusting the amount of styrene blocks. Besides, the polar compound can accelerate the polymerization reaction, and can be used as a vinylation agent for controlling the microstructure of the conjugated diene-based polymer.

Since the polar compound is thus used as a vinylation agent, a randomizing agent, and a polymerization accelerator, for example, when the polar compound is reduced for adjusting a vinylation rate or a randomization rate, a polymerization acceleration effect tends to be also reduced. Accordingly, in employing a method in which the branch number of a polymer is adjusted by reacting a coupling modifier with a polymerization terminal end, if the amount of the polar compound to be added is reduced, a polymerization time is elongated, and a ratio of deactivated polymerization terminal ends is increased. As a result, there is a tendency that the modification ratio is difficult to be increased by such a method. In other words, when the branch number of a modified conjugated diene-based polymer is to be adjusted by adjusting the amount of the polar compound to be added and by the reaction with a coupling modifier, there is a tendency that the vinylation rate and the randomization rate are difficult to be controlled. In this regard, in the production method of the present embodiment, the branch number of a polymer can be increased by a branching agent described below, and hence, the branch number can be controlled independently of the vinylation rate and the randomization rate, which is advantageous in structural design of a conjugated diene-based polymer.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine. One of these polar compounds may be singly used, or two or more of these may be used together.

The amount of the polar compound to be added is not especially limited, and can be adjusted in accordance with the amount of polymerization active ends, namely, the amount of the polymerization initiator to be added. The amount of the polar compound to be added is preferably 0.010 mol or more and 1.0 mol or less, and more preferably 0.10 mol or more and 0.70 mol or less per mole of the polymerization initiator. Within the above-described range, the amount of the polar compound to be added may be 0.60 mol or less, or 0.50 mol or less per mole of the polymerization initiator. Alternatively, the amount may be 0.15 mol or more, or 0.20 mol or more per mole of the polymerization initiator. When the amount of the polar compound to be added is equal to or smaller than the upper limit, a conjugated diene-based polymer having a low Tg tends to be obtained. When the amount of the polar compound to be added is equal to or larger than the lower limit, there is a tendency that deactivation of a polymerization active end is suppressed to improve a coupling rate obtained in the coupling step described below. The amount of the polar compound to be added may fall in a range obtained by arbitrarily combining any of the upper limits and any of the lower limits.

The method for producing the conjugated diene-based polymer (A) or the conjugated diene-based polymer (B) may include, before the polymerizing branching step, a step of removing impurities. In particular, when the monomers, the polymerization initiator and/or the inert solvent contain allenes and acetylenes as impurities, the method preferably includes, before the polymerizing branching step, the step of removing impurities. When the step of removing impurities is included, a conjugated diene-based polymer having an active end at a high concentration tends to be obtained, and a modified conjugated diene-based polymer having a high modification ratio tends to be obtained in the coupling step described below. The step of removing impurities is not especially limited, and an example includes a step of performing treatment with an organic metal compound. The organic metal compound is not especially limited, and examples include organic lithium compounds, the organic lithium compounds are not especially limited, and an example includes n-butyllithium.

In the polymerizing branching step, a branching reaction is started in the conjugated diene-based polymer by adding a branching agent described below. After adding the branching agent, a polymerization reaction for growing the conjugated diene-based polymer and a branching reaction for branching the conjugated diene-based polymer are caused in competition with each other in the reaction system. Accordingly, in accordance with the type and the amount of the branching agent to be added, and adjustment of the timing of adding the branching agent, the weight average molecular weight, the number average molecular weight, the ratio (Mw/Mn) therebetween and the absolute molecular weight of the conjugated diene-based polymer obtained in the polymerizing branching step, and the branch number, the number of branches, and the number of branch points in each branch point of the conjugated diene-based polymer can be controlled.

Besides, the total amount of active ends of the conjugated diene-based polymer in the reaction system can be reduced as compared with the amount of the polymerization initiator to be added by adding the branching agent during the polymerization of the conjugated diene-based polymer, and even when the amount of the polar compound to be added is small, a reaction at an initial stage of the polymerization can be accelerated to retain the activity of the polymerization active ends. As a result, in the conjugated diene-based polymer of the present embodiment having the amount of bound vinyl aromatic monomer unit and the amount of vinyl bond respectively falling in the above-described prescribed ranges, the coupling rate of polymerization terminal ends and/or the modification ratio can be easily improved. It is, however, not essential to react the conjugated diene-based polymer of the present embodiment with the coupling modifier.

As described above, in the method for producing a conjugated diene-based polymer of the present embodiment, the amount of the polar compound to be added can be adjusted for purposes of controlling the microstructure such as the amount of bound vinyl aromatic monomer unit and the amount of vinyl bond. If the branching agent is not added, the amount of the polar compound to be added usually employed for obtaining the amount of bound vinyl aromatic monomer unit and the amount of vinyl bond in the above-described prescribed ranges is insufficient from the viewpoint of retaining the active ends of the conjugated diene-based polymer in the reaction system, and hence the activity of the polymerization active ends cannot be easily sufficiently retained. Besides, this amount of the polar compound to be added cannot provide sufficiently high randomization performance for the vinyl aromatic compound and the conjugated diene compound, and in the conjugated diene-based polymer of the present embodiment having the amount of bound vinyl aromatic monomer unit and the amount of vinyl bond falling in the above-described prescribed ranges, a polymerization end tends to be the vinyl aromatic monomer unit. In such a state, it tends to be difficult to obtain a conjugated diene-based polymer having a high coupling rate or modification ratio.

That is, in the method for producing a conjugated diene-based polymer of the present embodiment, the use of a branching agent allows the active ends of the polymer to be sufficiently retained and a high coupling rate and modification ratio to be achieved, even with the amount of the polar compound to be added, which is usually not easy to sufficiently retain the activity of the polymerization active ends.

The timing of adding the branching agent in the branching step is not especially limited, and can be appropriately selected in accordance with use and the like of the conjugated diene-based polymer to be produced.

From the viewpoints of improving the absolute molecular weight of the conjugated diene-based polymer to be obtained, and of improving the modification ratio in the coupling step, the timing of adding the branching agent is timing, after adding the polymerization initiator, when a raw material conversion rate is preferably 20% or more, more preferably 40% or more, further preferably 50% or more, still further preferably 65% or more, and even more preferably 75% or more. In other words, the timing of adding the branching agent is preferably timing when the polymerization reaction has been sufficiently stabilized. When the timing of adding the branching agent falls in the above-described range, a conjugated diene-based polymer having a further higher modification ratio in the coupling step can be obtained even if the amount of the polar compound to be added is small or none.

The branching agent is not especially limited, and for example, a compound represented by the following formula (10) or formula (11) can be used.

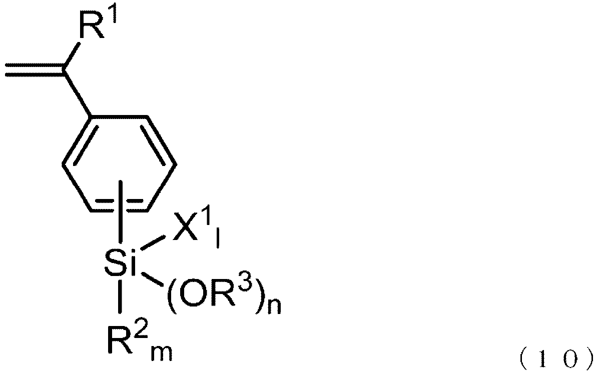

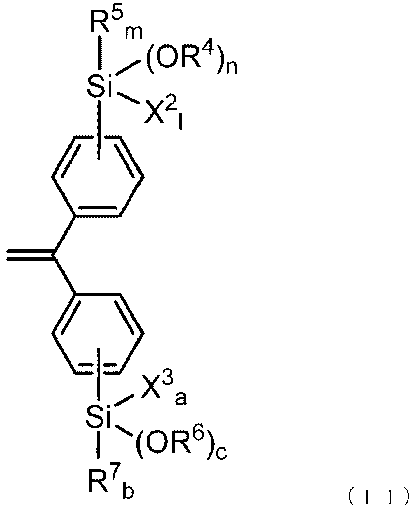

In the formula (10), R¹ represents a hydrogen atom, or an alkyl group having 1 to 20 carbon atoms or an aryl group having 6 to 20 carbon atoms, and may have a branch structure in a part thereof.

R² to R³ each independently represent an alkyl group having 1 to 20 carbon atoms or an aryl group having 6 to 20 carbon atoms, and may have a branch structure in a part thereof.

R² to R³, if present in a plural number, are respectively independent.

X¹ represents an independent halogen atom.

m represents an integer of 0 to 2, n represents an integer of 0 to 3, and l represents an integer of 0 to 3.

(m + n + l) represents 3.

In the formula (11), R⁴ to R⁷ each independently represent an alkyl group having 1 to 20 carbon atoms or an aryl group having 6 to 20 carbon atoms, and may have a branch structure in a part thereof.

R⁴ to R⁷, if present in a plural number, are respectively independent.

X² to X³ represent independent halogen atoms.

m represents an integer of 0 to 2, n represents an integer of 0 to 3, and l represents an integer of 0 to 3.

(m + n + l) represents 3.
a represents an integer of 0 to 3, b represents an integer of 0 to 2, and c represents an integer of 0 to 3. (a + b + c) represents 3.

In the present embodiment, the branching agent used in constructing the main chain branch structure of the conjugated diene-based polymer is preferably a compound represented by the formula (10) wherein R¹ is a hydrogen atom and m = 0, from the viewpoints of continuity of the polymerization and improvement of the branch number.

Alternatively, in the present embodiment, the branching agent used in constructing the main chain branch structure of the conjugated diene-based polymer is preferably a compound represented by the formula (11) wherein m = 0 and b = 0, from the viewpoint of improvement of the branch number.

Alternatively, in the present embodiment, the branching agent used in constructing the main chain branch structure of the conjugated diene-based polymer is more preferably a compound represented by the formula (10) wherein R¹ is a hydrogen atom, m = 0, and l = 0, from the viewpoints of continuity of the polymerization and improvement of the modification ratio and the branch number.

Alternatively, in the present embodiment, the branching agent used in constructing the main chain branch structure of the conjugated diene-based polymer is more preferably a compound represented by the formula (11) wherein m = 0, l = 0, a = 0, and b = 0, from the viewpoint of improvement of the modification ratio and the branch number.

Alternatively, in the present embodiment, the branching agent used in constructing the main chain branch structure of the conjugated diene-based polymer is further preferably a compound represented by the formula (10) wherein R¹ is a hydrogen atom, l = 0, and n = 3, from the viewpoints of continuity of the polymerization and improvement of the modification ratio and the branch number.

Examples of the branching agent represented by the formula (10) include, but are not limited to, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, triisopropoxy(2-vinylphenyl)silane, dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, diisopropoxymethyl(4-vinylphenyl)silane, dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl(3-vinylphenyl)silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, diisopropoxymethyl(2-vinylphenyl)silane, dimethylmethoxy(4-vinylphenyl)silane, dimethylethoxy(4-vinylphenyl)silane, dimethylpropoxy(4-vinylphenyl)silane, dimethylbutoxy(4-vinylphenyl)silane, dimethylisopropoxy(4-vinylphenyl)silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl)silane, dimethylisopropoxy(3-vinylphenyl)silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl)silane, and dimethylisopropoxy(2-vinylphenyl)silane.

Examples of the branching agent represented by the formula (10) also include trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, triisopropoxy(2-isopropenylphenyl)silane, dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, diisopropoxymethyl(2-isopropenylphenyl)silane, dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, dimethylisopropoxy(2-isopropenylphenyl)silane, trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, and dimethylbromo(2-vinylphenyl)silane.

Among these, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, and trichloro(4-vinylphenyl)silane are preferred, and trimethoxy(4-vinylphenyl)silane, triethoxy(4-vinylphenyl)silane, tripropoxy(4-vinylphenyl)silane, tributoxy(4-vinylphenyl)silane, and triisopropoxy(4-vinylphenyl)silane are more preferred.

Examples of the branching agent represented by the formula (11) include, but are not limited to, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, 1,1-bis(4-triisopropoxysilylphenyl)ethylene, 1,1-bis(3-trimethoxysilylphenyl)ethylene, 1,1-bis(3-triethoxysilylphenyl)ethylene, 1,1-bis(3-tripropoxysilylphenyl)ethylene, 1,1-bis(3-tripentoxysilylphenyl)ethylene, 1,1-bis(3-triisopropoxysilylphenyl)ethylene, 1,1-bis(2-trimethoxysilylphenyl)ethylene, 1,1-bis(2-triethoxysilylphenyl)ethylene, 1,1-bis(3-tripropoxysilylphenyl)ethylene, 1,1-bis(2-tripentoxysilylphenyl)ethylene, 1,1-bis(2-triisopropoxysilylphenyl)ethylene, 1,1-bis(4-(dimethylmethoxysilyl)phenyl)ethylene, 1,1-bis(4-(diethylmethoxysilyl)phenyl)ethylene, 1,1-bis(4-(dipropylmethoxysilyl)phenyl)ethylene, 1,1-bis(4-(dimethylethoxysilyl)phenyl)ethylene, 1,1-bis(4-(diethylethoxysilyl)phenyl)ethylene, and 1,1-bis(4-(dipropylethoxysilyl)phenyl)ethylene.

Among these, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, and 1,1-bis(4-triisopropoxysilylphenyl)ethylene are preferred, and 1,1-bis(4-trimethoxysilylphenyl)ethylene is more preferred.

The amount of the branching agent to be added is not especially limited, and can be appropriately selected in accordance with use and the like of the conjugated diene-based polymer to be obtained, and is preferably 0.020 mole or more and 0.50 mole or less, more preferably 0.025 mole or more and 0.40 mole or less, and further preferably 0.030 mole or more and 0.25 mole or less per mole of the polymerization initiator.

The amount of the branching agent to be added may be, within the above-described range, 0.040 mole or more, or 0.045 mole or more per mole of the polymerization initiator. Alternatively, the amount may be 0.20 mole or less, or 0.18 mole or less per mole of the polymerization initiator.

The amount of the branching agent to be added may fall in a range obtained by arbitrarily combining any of the upper limits and any of the lower limits. The amount of the branching agent to be added affects the branch number of the entire conjugated diene-based polymer, and as the amount added increases, the overall branch number and the branch number at the extreme value increase.

In the polymerizing branching step, the reaction temperature may be changed, or may not be changed after adding the branching agent.

In the polymerizing branching step, after adding the branching agent, a monomer, which is a raw material for the conjugated diene-based polymer, may be further additionally added, the branching agent may be additionally added thereafter, and the additional addition of the branching agent and the monomer may be further repeated.

The monomer to be added is not especially limited, and from the viewpoint of improving the modification ratio in the coupling step, the same monomer as that added as the monomer initially in the polymerizing branching step is preferably added.

The amount of the monomer to be added may be 1.0% or more, 5.0% or more, 10% or more, 15% or more, or 20% or more of the total amount used as the monomer of the conjugated diene-based polymer. The amount of the monomer to be added may be 50% or less, 40% or less, or 35% or less.

When the amount of the monomer to be added falls in the above-described range, a molecular weight between a branch point generated by the addition of the branching agent and a branch point generated by the addition of the coupling modifier is increased, and hence, a molecular structure having a high linearity tends to be easily formed. When the conjugated diene-based polymer to be obtained has such a structure, entanglement among molecular chains of the conjugated diene-based polymer obtained in the form of a vulcanizate is increased, and hence, a vulcanizate excellent in abrasion resistance, steering stability and fracture strength tends to be easily obtained.

### (Coupling Step)

In the method for producing a conjugated diene-based polymer of the present embodiment, it is preferable that the conjugated diene-based polymer having a branch structure obtained by the above-described polymerizing branching step is reacted with a coupling modifier to form a modified conjugated diene-based polymer. Such a coupling step can modify the conjugated diene-based polymer having a branch structure obtained by the polymerizing branching step with a nitrogen atom-containing functional group having affinity or binding reactivity with a filler. Besides, a plurality of conjugated diene-based polymers can be coupled. Therefore, according to the production method including such a coupling step, the conjugated diene-based polymer of the present embodiment exhibiting the effects described above can be further definitely and easily obtained.

The coupling modifier is not especially limited as long as it is a reactive compound having a nitrogen atom-containing functional group having affinity or binding reactivity with a filler, and having 2 or more functional groups capable of reacting with an active end of the conjugated diene-based polymer.

An example of the coupling modifier includes a coupling modifier that contains a nitrogen atom, and further has a group containing a nitrogen atom and a silicon atom.

Examples of the coupling modifier having a nitrogen atom-containing group include, but are not limited to, an isocyanate compound, an isothiocyanate compound, an isocyanuric acid derivative, a nitrogen atom-containing carbonyl compound, a nitrogen atom-containing vinyl compound, a nitrogen atom-containing epoxy compound, an imine compound, and a nitrogen atom-containing alkoxysilane compound.

Preferable examples of the coupling modifier having a nitrogen atom-containing group include an amine compound not having active hydrogen, a protected amine compound in which active hydrogen is substituted with a protecting group, an imine compound having a structure of a general formula, -N=C, and an alkoxysilane compound bonded to any of these nitrogen atom-containing compounds. An example of the amine compound not having active hydrogen includes a tertiary amine compound.

Examples of the isocyanate compound include, but are not limited to, 2,4-tolylene diisocyanate, 2,6-tolylene diisocyanate, diphenylmethane diisocyanate, polymeric diphenylmethane diisocyanate (C-MDI), phenyl isocyanate, isophorone diisocyanate, hexamethylene diisocyanate, butyl isocyanate, and 1,3,5-benzene triisocyanate.

Examples of the isothiocyanate compound include, but are not limited to, 2,4-tolylene diisothiocyanate, 2,6-tolylene diisothiocyanate, diphenylmethane diisothiocyanate, phenyl isothiocyanate, isophorone diisothiocyanate, hexamethylene diisothiocyanate, butyl isothiocyanate, and 1,3,5-benzene triisothiocyanate.

Examples of the isocyanuric acid derivative include, but are not limited to, 1,3,5-tris(3-trimethoxysilylpropyl)isocyanurate, 1,3,5-tris(3-triethoxysilylpropyl)isocyanurate, 1,3,5-tri(oxiran-2-yl)-1,3,5-triazinane-2,4,6-trione, 1,3,5-tris(isocyanatomethyl)-1,3,5-triazinane-2,4,6-trione, and 1,3,5-trivinyl-1,3,5-triazinane-2,4,6-trione.

Examples of the nitrogen atom-containing carbonyl compound include, but are not limited to, 1,3-dimethyl-2-imidazolidinone, 1-methyl-3-ethyl-2-imidazolidinone, 1-methyl-3-(2-methoxyethyl)-2-imidazolidinone, N-methyl-2-pyrolidone, N-methyl-2-piperidone, N-methyl-2-quinolone, 4,4'-bis(diethylamino)benzophenone, 4,4'-bis(dimethylamino)benzophenone, methyl-2-pyridyl ketone, methyl-4-pyridyl ketone, propyl-2-pyridyl ketone, di-4-pyridyl ketone, 2-benzoylpyridine, N,N,N',N'-tetramethylurea, N,N-dimethyl-N',N'-diphenylurea, methyl N,N-diethylcarbamate, N,N-diethylacetamide, N,N-dimethyl-N',N'-dimethylaminoacetamide, N,N-dimethyl picolinic acid amide, and N,N-dimethyl isonicotinic acid amide.

Examples of the nitrogen atom-containing vinyl compound include, but are not limited to, N,N-dimethylacrylamide, N,N-dimethylmethacrylamide, N-methylmaleimide, N-methylphthalimide, N,N-bistrimethylsilylacrylamide, morpholinoacrylamide, 3-(2-dimethylaminoethyl)styrene, (dimethylamino)dimethyl-4-vinylphenylsilane, 4,4'-vinylidene bis(N,N-dimethylaniline), 4,4'-vinylidene bis(N,N-dimethylaniline), 1,1-bis(4-morpholinophenyl)ethylene, and 1-phenyl-1-(4-N,N-dimethylaminophenyl)ethylene.

Examples of the nitrogen atom-containing epoxy compound include, but are not limited to, a hydrocarbon compound containing an epoxy group bonded to an amino group.

The hydrocarbon compound containing an epoxy group bonded to an amino group may further contain an epoxy group bonded to an ether group. Examples of such a nitrogen atom-containing epoxy compound include, but are not limited to, a compound represented by the following formula (12).

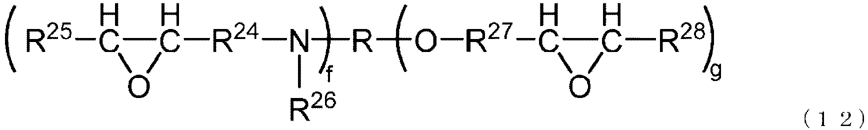

In the formula (12), R represents a bivalent or higher hydrocarbon group, or a bivalent or higher organic group having at least one polar group selected from a polar group having oxygen such as ether, epoxy or ketone, a polar group having sulfur such as thioether or thioketone, and a polar group having nitrogen such as a tertiary amino group or an imino group.

The bivalent or higher hydrocarbon group may be a saturated or unsaturated linear, branched or cyclic hydrocarbon group, and encompasses an alkylene group, an alkenylene group, a phenylene group and the like. The bivalent or higher hydrocarbon group is preferably a hydrocarbon group having 1 to 20 carbon atoms. Examples include methylene, ethylene, butylene, cyclohexylene, 1,3-bis(methylene)-cyclohexane, 1,3-bis(ethylene)-cyclohexane, o-, m- and p-phenylene, m- and p-xylene, and bis(phenylene)-methane.

In the formula (12), R²⁴ and R²⁷ are hydrocarbon groups having 1 to 10 carbon atoms, and R²⁴ and R²⁷ may be the same as or different from each other.

In the formula (12), R²⁵ and R²⁸ are hydrogen or hydrocarbon groups having 1 to 10 carbon atoms, and R²⁵ and R²⁸ may be the same as or different from each other.

In the formula (12), R²⁶ is a hydrocarbon group having 1 to 10 carbon atoms, or a structure of the following formula (13).

R²⁴, R²⁵ and R²⁶ may be a cyclic structure mutually bonded.

When R²⁶ is a hydrocarbon group, it may be a cyclic structure mutually bonded to R. In the case of the cyclic structure described above, N and R bonded to R²⁶ may be in the form of being directly bonded to each other.

In the formula (12), f is an integer of 1 or more, and g is an integer of 0 or 1 or more.

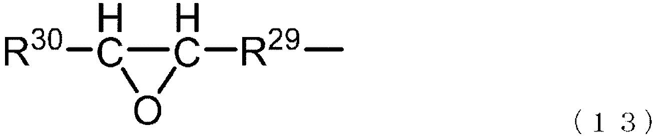

In the formula (13), R²⁹ and R³⁰ are defined the same respectively as R²⁴ and R²⁵ in the formula (12), and R²⁹ and R³⁰ may be the same as or different from each other.

The nitrogen atom-containing epoxy compound described above is preferably a nitrogen atom-containing epoxy compound having, in a molecule, 1 or more diglycidylamino groups and 1 or more glycidoxy groups.

Examples of the nitrogen atom-containing epoxy compound include, but are not limited to, N,N-diglycidyl-4-glycidoxyaniline, 1-N,N-diglycidylaminomethyl-4-glycidoxy-cyclohexane, 4-(4-glycidoxyphenyl)-(N,N-diglycidyl)aniline, 4-(4-glycidoxyphenoxy)-(N,N-diglycidyl)aniline, 4-(4-glycidoxybenzyl)-(N,N-diglycidyl)aniline, 4-(N,N'-diglycidyl-2-piperazinyl)-glycidoxybenzene, 1,3-bis(N,N-diglycidylaminomethyl)cyclohexane, N,N,N',N'-tetraglycidyl-m-xylenediamine, 4,4-methylene-bis(N,N-diglycidylaniline), 1,4-bis(N,N-diglycidylamino)cyclohexane, N,N,N',N'-tetraglycidyl-p-phenylenediamine, 4,4'-bis(diglycidylamino)benzophenone, 4-(4-glycidylpiperazinyl)-(N,N-diglycidyl)aniline, 2-[2-(N,N-diglycidylamino)ethyl]-1-glycidylpyrrolidine, N,N-diglycidylaniline, 4,4'-diglycidyl-dibenzylmethylamine, N,N-diglycidylaniline, N,N-diglycidyl ortho-toluidine, and N,N-diglycidylaminomethylcyclohexane.

Among these, preferable examples include N,N-diglycidyl-4-glycidoxyaniline, and 1,3-bis(N,N-diglycidylaminomethyl)cyclohexane.

Examples of the imine compound that is a coupling modifier having a nitrogen atom-containing group include, but are not limited to, N-butylpropan-2-imine, N-butyl-4-methylpentan-2-imine, N,N'-(propane 1,3-diyl)bis(4-methylpentan-2-imine), N,N'-(hexane 1,6-diyl)bis(4-methylpentan-2-imine), tris[2-(propan-2-ylideneamino)ethyl]amine, tris[2-(propan-2-ylideneamino)propyl]amine, N,N'-(1,4-phenylene)bis(4-methylpentan-2-imine), 1,1'-(1,4-phenylene)bis(N-propylethan-1-imine), N,N'-(propane 1,3-diyl)bis(1-phenylmethanimine), and N,N'-(hexane 1,6-diyl)bis(1-phenylmethanimine).

Examples of the nitrogen atom-containing alkoxysilane compound that is a coupling modifier having a nitrogen atom-containing group include, but are not limited to, 3-dimethylaminopropyltrimethoxysilane, 3-dimethylaminopropylmethyldimethoxysilane, 3-diethylaminopropyltriethoxysilane, 3-morpholinopropyltrimethoxysilane, 3-piperidinopropyltriethoxysilane, 3-hexamethyleneiminopropylmethyldiethoxysilane, 3-(4-methyl-1-piperazino)propyltriethoxysilane, 3-(4-methyl-1-piperazino)propyltrimethoxysilane, 1-[3-(triethoxysilyl)-propyl]-3-methylhexahydropyrimidine, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 3-dimethylamino-2-(dimethylaminomethyl)propyltrimethoxysilane, bis(3-dimethoxymethylsilylpropyl)-N-methylamine, bis(3-trimethoxysilylpropyl)-N-methylamine, bis(3-triethoxysilylpropyl)methylamine, tris(trimethoxysilyl)amine, tris(3-trimethoxysilylpropyl)amine, N,N,N',N'-tetra(3-trimethoxysilylpropyl)ethylenediamine, 3-isocyanatopropyltrimethoxysilane, 3-cyanopropyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2-2-dimethoxy-1-(4-triemthoxysilylbutyl)-1-aza-2-silacylcohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, 2,2-dimethoxy-8-(4-methylpiperazinyl)methyl-1,6-dioxa-2-silacyclooctane, and 2,2-dimethoxy-8-(N,N-diethylamino)methyl-1,6-dioxa-2-silacyclooctane.

Preferable examples of the nitrogen atom-containing alkoxysilane compound include, but are not limited to, tris(3-trimethoxysilylpropyl)amine, tris(3-triethoxysilylpropyl)amine, tris(3-tripropoxysilylpropyl)amine, bis(3-trimethoxysilylpropyl)-[3-(2,2-dimethoxy-1-aza-2-silacyclopentane)propyl]amine, tetrakis(3-trimethoxysilylpropyl)-1,3-propanediamine (also designated as "N,N,N',N'-tetrakis(3-trimethoxysilylpropyl)-1,3-propanediamine"), tris(3-trimethoxysilylpropyl)-[3-(1-methoxy-2-trimethylsilyl-1-sila-2-azacyclopentane)propyl]-1,3-propanediamine, tris(3-trimethoxysilylpropyl)-[3-(1-methoxy-2-methyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)propyl]-1,3-bisaminomethylcyclohexane, tetrakis(3-trimethoxysilylpropyl)-1,6-hexamethylenediamine, pentakis(3-trimethoxysilylpropyl)-diethylenetriamine, tris(3-trimethoxysilylpropyl)-methyl-1,3-propanediamine, tetrakis[3-(2,2-dimethoxy-1-aza-2-silacyclopentane)propyl]silane, bis(3-trimethoxysilylpropyl)-bis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-1-trimethylsilyl-1-sila-2-azacyclopentane)propyl]silane, 3-tris[2-(2,2-dimethoxy-1-aza-2-silacyclopentane)ethoxy]silyl-1-trimethoxysilylpropane, 1-[3-(1-methoxy-2-trimethylsilyl-1-sila-2-azacyclopentane)propyl]-3,4,5-tris(3-trimethoxysilylpropyl)-cyclohexane, 1-[3-(2,2-dimethoxy-1-aza-2-silacyclopentane)propyl]-3,4,5-tris(3-trimethoxysilylpropyl)-cyclohexane, 3,4,5-tris(3-trimethoxysilylpropyl)-cyclohexyl-[3-(2,2-dimethoxy-1-aza-2-silacyclopentane)propyl] ether, (3-trimethoxysilylpropyl) phosphate, bis(3-trimethoxysilylpropyl)-[3-(2,2-dimethoxy-1-aza-2-silacyclopentane)propyl] phosphate, bis[3-(2,2-dimethoxy-1-aza-2-silacyclopentane)propyl]-(3-trimethoxysilylpropyl) phosphate, tris[3-(2,2-dimethoxy-1-aza-2-silacyclopentane)propyl]phosphate, N-(1,3-dimethylbutylidene)-3-(triethoxysilyl)-1-propanamine, N-(1,3-dimethylbutylidene)-3-(trimethoxysilyl)-1-propanamine, N-benzylidene-3-(triethoxysilyl)propan-1-amine, N-benzylidene-3-(trimethoxysilyl)propan-1-amine, 1,1-(1,4-phenylene)bis(N-(3-(triethoxysilyl)propyl)methanamine), 1,1-(1,4-phenylene)bis(N-(3(trimethoxysilyl)propyl)methanamine), 2-methoxy-2-methyl-1-(benzylideneaminoethyl)-1-aza-2-silacyclopentane, and 2-methoxy-2-methyl-1-(4-methoxybenzylideneaminoethyl)-1-aza-2-silacyclopentane.

Among the coupling modifiers having a nitrogen atom-containing group, an example of the protected amine compound in which active hydrogen is substituted with a protecting group includes a compound having, in a molecule, an unsaturated bond and a protected amine. Examples of such a compound include, but are not limited to, 4,4'-vinylidenebis[N,N-bis(trimethylsilyl)aniline], 4,4'-vinylidenebis[N,N-bis(triethylsilyl)aniline], 4,4'-vinylidenebis[N,N-bis(t-butyldimethylsilyl)aniline], 4,4'-vinylidenebis[N-methyl-N-(trimethylsilyl)aniline], 4,4'-vinylidenebis[N-ethyl-N-(trimethylsilyl)aniline], 4,4'-vinylidenebis[N-methyl-N-(triethylsilyl)aniline], 4,4'-vinylidenebis[N-ethyl-N-(triethylsilyl)aniline], 4,4'-vinylidenebis[N-methyl-N-(t-butyldimethylsilyl)aniline], 4,4'-vinylidenebis[N-ethyl-N-(t-butyldimethylsilyl)aniline], 1-(4-N,N-bis(trimethylsilyl)aminophenyl)-1-[4-N-methyl-N-(trimethylsilyl)aminophenyl]ethylene, and 1-[4-N,N-bis(trimethylsilyl)aminophenyl]-1-[4-N,N-dimethylaminophenyl]ethylene.

Among the coupling modifiers having a nitrogen atom-containing group, an example of the protected amine compound in which active hydrogen is substituted with a protecting group includes a compound containing, in a molecule, an alkoxysilane and a protected amine.

Examples of such a compound include, but are not limited to, N,N-bis(trimethylsilyl)aminopropyltrimethoxysilane, N,N-bis(trimethylsilyl)aminopropylmethyldimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethylmethyldiethoxysilane, N,N-bis(triethylsilyl)aminopropylmethyldiethoxysilane, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, and N-ethylidene-3-(trimethoxysilyl)-1-propanamine.

Examples also include N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-methyl(dimethoxysilyl)propan-1-amine, N-benzylidene-3-methyl(diethoxysilyl)propan-1-amine, N-4-methylbenzylidene-3-(triethoxysilyl)propan-1-amine, N-4-methylbenzylidene-3-(trimethoxysilyl)propan-1-amine, N-4-methylbenzylidene-3-methyl(dimethoxysilyl)propan-1-amine, N-4-methylbenzylidene-3-methyl(diethoxysilyl)propan-1-amine, N-naphtylidene-3-(triethoxysilyl)propan-1-amine, N-naphtylidene-3-(trimethoxysilyl)propan-1-amine, N-naphtylidene-3-methyl(dimethoxysilyl)propan-1-amine, 1,1-(1,4-phenylene)bis(N-(3methyl(dimethoxysilyl)propyl)methanamine), 1,1-(1,4-phenylene)bis(N-(3methyl(diethoxysilyl)propyl)methanamine), 2-ethoxy-2-methyl-1-(benzylideneaminoethyl)-1-aza-2-silacyclopentane, and 2-methoxy-2-methyl-1-(methylisobutylideneaminoethyl)-1-aza-2-silacyclopentane.

In the coupling step, it is more preferable to use a combination of two or more among the nitrogen atom-containing alkoxysilane compounds represented by any of the following formulas (14) to (18) as the coupling modifiers.

As such coupling modifiers, a coupling modifier having two or less alkoxysilyl groups and a coupling modifier having more than two alkoxysilyl groups can be used in combination.

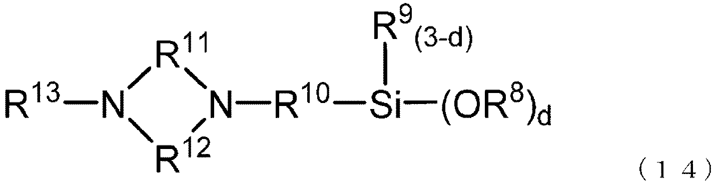

In the formula (14), R⁸ to R¹⁰ are hydrocarbon groups having 1 to 20 carbon atoms, an unsaturated bond may be present therein, and they may be the same as or different from each other. R¹¹ and R¹² are aliphatic hydrocarbon groups having 1 to 6 carbon atoms, an unsaturated bond may be present therein, and they may be the same as or different from each other, and R¹³ is a hydrocarbon group having 1 to 20 carbon atoms containing Si, O, or N and optionally substituted with an organic group having no active hydrogen, and an unsaturated bond may be present therein. d is an integer of 1 to 3.

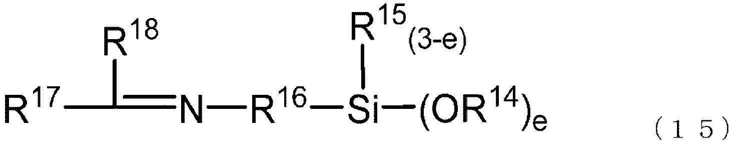

In the formula (15), R¹⁴ to R¹⁶ are hydrocarbon groups having 1 to 20 carbon atoms, an unsaturated bond may be present therein, and they may be the same as or different from each other.

R¹⁷ and R¹⁸ are hydrocarbon groups having 1 to 20 carbon atoms containing Si, O, or N and optionally substituted with an organic group having no active hydrogen, and an unsaturated bond may be present therein. e is an integer of 1 to 3.

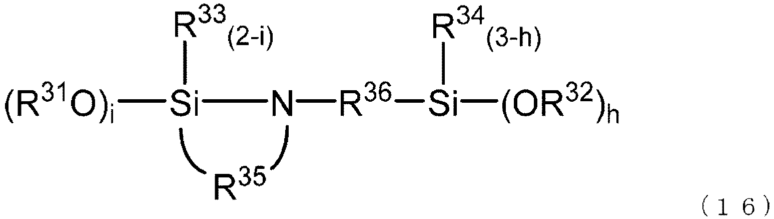

In the formula (16), R³¹ to R³⁴ each independently represent an alkyl group having 1 to 20 carbon atoms or an aryl group having 6 to 20 carbon atoms, R³⁵ represents an alkylene group having 1 to 10 carbon atoms, and R³⁶ represents an alkylene group having 1 to 20 carbon atoms.

h represents an integer of 1 to 3, i represents an integer of 1 or 2, and (h + i) represents an integer of 4 or more. R³¹ to R³⁴, if present in a plural number, are respectively independent.

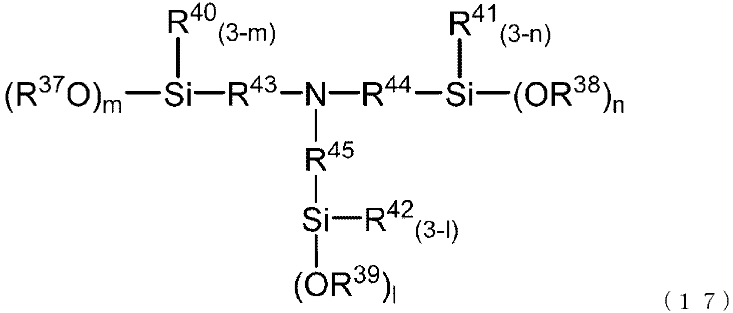

In the formula (17), R³⁷ to R⁴² each independently represent an alkyl group having 1 to 20 carbon atoms or an aryl group having 6 to 20 carbon atoms, and R⁴³ to R⁴⁵ each independently represent an alkylene group having 1 to 20 carbon atoms.

m, n and l each independently represent an integer of 1 to 3, and (m + n + l) represents an integer of 4 or more. R³⁷ to R⁴², if present in a plural number, are respectively independent.

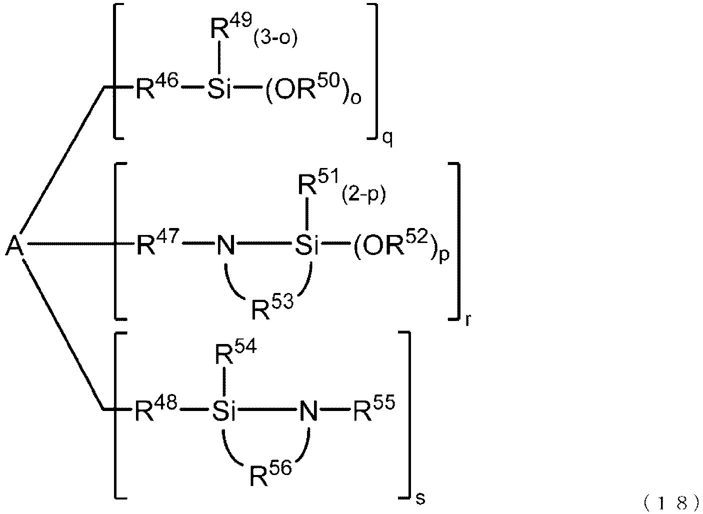

In the formula (18), R⁴⁶ to R⁴⁸ each independently represent a single bond or an alkylene group having 1 to 20 carbon atoms, R⁴⁹ to R⁵² each independently represent an alkyl group having 1 to 20 carbon atoms, R⁵³ and R⁵⁶ each independently represent an alkylene group having 1 to 20 carbon atoms, R⁵⁴ represents an alkylene group or alkoxy group having 1 to 20 carbon atoms, and R⁵⁵ represents an alkyl group or trialkylsilyl group having 1 to 20 carbon atoms.

∘ represents an integer of 1 to 3, and p represents 1 or 2.

Each of R⁴⁶ to R⁵⁶, o and p, if present in a plural number, is respectively independent, and they may be the same as or different from each other.

q represents an integer of 0 to 6, r represents an integer of 0 to 6, s represents an integer of 0 to 6, and (q + r + s) is an integer of 4 to 10.

A represents a hydrocarbon group having 1 to 20 carbon atoms, or an organic group having at least one atom selected from the group consisting of an oxygen atom, a nitrogen atom, a silicon atom, a sulfur atom, and a phosphorus atom and having no active hydrogen.

Examples of the coupling modifier represented by the formula (14) include, but are not limited to, 1-methyl-4-(3-(trimethoxysilyl)propyl)piperazine, 1-methyl-4-(3-(triethoxysilyl)propyl)piperazine, 1-ethyl-4-(3-(trimethoxysilyl)propyl)piperazine, 1-ethyl-4-(3-(triethoxysilyl)propyl)piperazine, 1-propyl-4-(3-(trimethoxysilyl)propyl)piperazine, 1-propyl-4-(3-(triethoxysilyl)propyl)piperazine, 1-butyl-4-(3-(trimethoxysilyl)propyl)piperazine, 1-butyl-4-(3-(triethoxysilyl)propyl)piperazine, 1-trimethylsilyl-4-(3-(trimethoxysilyl)propyl)piperazine, 1-trimethylsilyl-4-(3-(triethoxysilyl)propyl)piperazine, 1-triethylsilyl-4-(3-(trimethoxysilyl)propyl)piperazine, 1-triethylsilyl-4-(3-(triethoxysilyl)propyl)piperazine, 1-(t-butyldimethylsilyl)-4-(3-(trimethoxysilyl)propyl)piperazine, 1-(t-butyldimethylsilyl)-4-(3-(triethoxysilyl)propyl)piperazine, 1-triisopropylsilyl-4-(3-(trimethoxysilyl)propyl)piperazine, and 1-triisopropylsilyl-4-(3-(triethoxysilyl)propyl)piperazine.

Among these, from the viewpoint of increasing reactivity and interaction between the conjugated diene-based polymer and the inorganic filler such as silica, and from the viewpoint of increasing processability, one represented by the formula (14) wherein d is 3 is preferred. Specifically, 1-methyl-4-(3-(trimethoxysilyl)propyl)piperazine and 1-methyl-4-(3-(triethoxysilyl)propyl)piperazine are preferred.

A reaction temperature, a reaction time, and other factors when reacting the coupling modifier having a nitrogen atom-containing group represented by the formula (14) with a polymerization active end are not especially limited, and the reaction is preferably performed at 0°C or more and 120°C or less for 30 seconds or more.

The amount of the coupling modifier represented by the formula (14) to be added corresponds to a total mole number of an alkoxy group (OR⁸) bonded to a silyl group of the compound represented by the formula (14) of preferably 0.2 or more times and 2.5 or less times, more preferably 0.5 or more times and 2.0 or less times, and further preferably 1.0 or more times and 2.0 or less times of a mole number of the polymerization initiator to be added. From the viewpoint that the thus obtained conjugated diene-based polymer has a modification ratio, and a molecular weight respectively falling in more preferable ranges, the amount is preferably 0.2 times or more. Besides, from the viewpoint of suppressing deterioration of processability due to an excessively high branch number, the amount is preferably 2.5 times or less.

More specifically, the amounts of the polymerization initiator and the coupling modifier represented by the formula (14) to be added may be adjusted so that the mole number of the polymerization initiator can be preferably 1.5 times or more, and more preferably 1.7 times or more of the mole number of the coupling modifier represented by the formula (14).

Examples of the coupling modifier represented by the formula (15) include, but are not limited to, N-(1,3-dimethylbutylidene)-3-(triethoxysilyl)-1-propanamine, N-(1,3-dimethylbutylidene)-3-(trimethoxysilyl)-1-propanamine, N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, N-ethylidene-3-(trimethoxysilyl)-1-propanamine, N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-(triethoxysilyl)propan-1-amine, N-benzylidene-3-(trimethoxysilyl)propan-1-amine, N-benzylidene-3-methyl(dimethoxysilyl)propan-1-amine, N-benzylidene-3-methyl(diethoxysilyl)propan-1-amine, N-4-methylbenzylidene-3-(triethoxysilyl)propan-1-amine, N-4-methylbenzylidene-3-(trimethoxysilyl)propan-1-amine, N-4-methylbenzylidene-3-methyl(dimethoxysilyl)propan-1-amine, N-4-methylbenzylidene-3-methyl(diethoxysilyl)propan-1-amine, N-naphtylidene-3-(triethoxysilyl)propan-1-amine, N-naphtylidene-3-(trimethoxysilyl)propan-1-amine, N-naphtylidene-3-methyl(dimethoxysilyl)propan-1-amine, 1,1-(1,4-phenylene)bis(N-(3(triethoxysilyl)propyl)methanamine), 1,1-(1,4-phenylene)bis(N-(3(trimethoxysilyl)propyl)methanamine), 1,1-(1,4-phenylene)bis(N-(3methyl(dimethoxysilyl)propyl)methanamine), 1,1-(1,4-phenylene)bis(N-(3methyl(diethoxysilyl)propyl)methanamine), 2-methoxy-2-methyl-1-(benzylideneaminoethyl)-1-aza-2-silacyclopentane, 2-methoxy-2-methyl-1-(p-methoxybenzylideneaminoethyl)-1-aza-2-silacyclopentane, 2-ethoxy-2-methyl-1-(benzylideneaminoethyl)-1-aza-2-silacyclopentane, and 2-methoxy-2-methyl-1-(methylisobutylideneaminoethyl)-1-aza-2-silacyclopentane.

A reaction temperature, a reaction time, and other factors when reacting the coupling modifier having a nitrogen atom-containing group represented by the formula (15) with a polymerization active end are not especially limited, and the reaction is preferably performed at 0°C or more and 120°C or less for 30 seconds or more.

The amount of the coupling modifier represented by the formula (15) to be added corresponds to a total mole number of an alkoxy group (OR¹⁴) bonded to a silyl group of the compound represented by the formula (15) of preferably 0.2 or more times and 2.5 or less times, more preferably 0.5 or more times and 2.0 or less times, and further preferably 1.0 or more times and 2.0 or less times of a mole number of the polymerization initiator to be added. From the viewpoint that the thus obtained conjugated diene-based polymer has a modification ratio, and a molecular weight respectively falling in more preferable ranges, the amount is preferably 0.2 times or more. Besides, from the viewpoint of suppressing deterioration of processability due to an excessively high branch number, the amount is preferably 2.5 times or less.

More specifically, the amounts of the polymerization initiator and the coupling modifier represented by the formula (15) to be added may be adjusted so that the mole number of the polymerization initiator can be preferably 1.5 times or more, and more preferably 1.7 times or more of the mole number of the coupling modifier represented by the formula (15).

Examples of the coupling modifier having a nitrogen atom-containing group represented by the formula (16) include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy,2-methyl-1-(3-trimethoxysilylpropyl)-1-aza-2-silacyclopentane, 2-ethoxy,2-ethyl-1-(3-triethoxysilylpropyl)-1-aza-2-silacyclopentane, 2-methoxy,2-methyl-1-(3-dimethoxymethylsilylpropyl)-1-aza-2-silacyclopentane, and 2-ethoxy,2-ethyl-1-(3-diethoxyethylsilylpropyl)-1-aza-2-silacyclopentane.

Among these, from the viewpoint of reactivity and interaction between the functional group of the coupling modifier having a nitrogen atom-containing group and the inorganic filler such as silica, and from the viewpoint of processability, one represented by the formula (16) wherein i represents 2 and h represents 3 is preferred. Specifically, 2,2-dimethoxy-1-(3-trimethoxysilylpropyl)-1-aza-2-silacyclopentane and 2,2-diethoxy-1-(3-triethoxysilylpropyl)-1-aza-2-silacyclopentane are preferred.

A reaction temperature and a reaction time in the coupling step using the coupling modifier represented by the formula (16) are not especially limited, and the reaction is performed at preferably 0°C or more and 120°C or less, and for preferably 30 seconds or more.

The amount of the coupling modifier represented by the formula (16) to be added corresponds to a total mole number of an alkoxy group bonded to a silyl group of the compound represented by the formula (16) of preferably 0.2 or more times and 2.5 or less times, more preferably 0.5 or more times and 2.0 or less times, and further preferably 1.0 or more times and 2.0 or less times of a mole number of the polymerization initiator to be added. From the viewpoint that the thus obtained conjugated diene-based polymer has a modification ratio, a molecular weight, and a branch structure respectively falling in more preferable ranges, the amount is preferably 0.2 times or more. Besides, from the viewpoint of suppressing deterioration of processability due to an excessively high branch number, the amount is preferably 2.5 times or less.

More specifically, the amounts of the polymerization initiator and the coupling modifier represented by the formula (16) to be added may be adjusted so that the mole number of the polymerization initiator can be preferably 3.0 times or more, and more preferably 4.0 times or more of the mole number of the coupling modifier represented by the formula (16).

Examples of the modifier having a nitrogen atom-containing group represented by the formula (17) include, but are not limited to, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, and tris(4-trimethoxysilylbutyl)amine.

Among these, from the viewpoint of reactivity and interaction between the functional group of the modifier and the inorganic filler such as silica, and from the viewpoint of processability, one represented by the formula (17) wherein n, m, and l all represent 3 is preferred. Preferable specific examples include tris(3-trimethoxysilylpropyl)amine, and tris(3-triethoxysilylpropyl)amine.

A reaction temperature, a reaction time, and other factors when reacting the modifier having a nitrogen atom-containing group represented by the formula (17) with a polymerization active end are not especially limited, and the reaction is preferably performed at 0°C or more and 120°C or less for 30 seconds or more.

The total mole number of an alkoxy group bonded to a silyl group of the coupling modifier represented by the formula (17) is preferably 0.2 or more times and 2.0 or less times, more preferably 0.5 or more times and 2.0 or less times, and further preferably 0.6 or more times and 1.6 or less times of a mole number of lithium constituting the polymerization initiator described above. From the viewpoint of obtaining sufficient modification ratio, molecular weight, and branch structure in the conjugated diene-based polymer, it is preferably 0.2 times or more, and from the viewpoint of the cost of coupling modifier, as well as that it is preferable to couple the polymer ends with each other to obtain a branched polymer component for improving processability, it is preferably 2.0 times or less.

The more specific mole number of the polymerization initiator is preferably 4.0 times or more, and more preferably 5.0 times or more, with respect to the mole number of the modifier.

In the formula (18), A is preferably represented by any one of the following general formulas (i) to (iv).

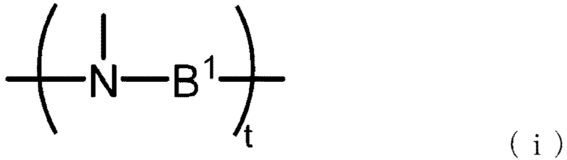

In the formula (i), B¹ represents a single bond or a hydrocarbon group having 1 to 20 carbon atoms, and t represents an integer of 1 to 10. B¹, if present in a plural number, is respectively independent.

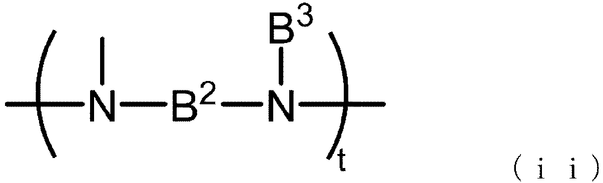

In the formula (ii), B² represents a single bond or a hydrocarbon group having 1 to 20 carbon atoms, B³ represents an alkyl group having 1 to 20 carbon atoms, and t represents an integer of 1 to 10. Each of B² and B³, if present in a plural number, is respectively independent.

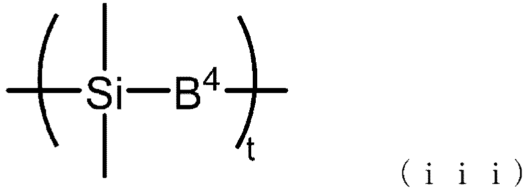

In the formula (iii), B⁴ represents a single bond or a hydrocarbon group having 1 to 20 carbon atoms, and t represents an integer of 1 to 10. B⁴, if present in a plural number, is respectively independent.

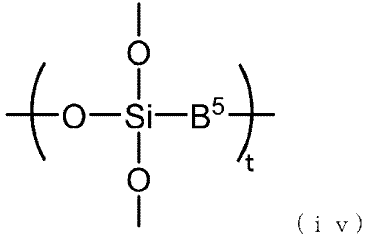

In the formula (iv), B⁵ represents a single bond or a hydrocarbon group having 1 to 20 carbon atoms, and t represents an integer of 1 to 10. B⁵, if present in a plural number, is respectively independent.

Examples of the coupling modifier having a nitrogen atom-containing group when A in the formula (18) is represented by the formula (i) include, but are not limited to, tris(3-trimethoxysilylpropyl)amine, bis(3-trimethoxysilylpropyl)-[3-(2,2-dimethoxy-1-aza-2-silacyclopentane)propyl]amine, bis[3-(2,2-dimethoxy-1-aza-2-silacyclopentane)propyl]-(3-trimethoxysilylpropyl)amine, tris[3-(2,2-dimethoxy-1-aza-2-silacyclopentane)propyl]amine, tris(3-ethoxysilylpropyl)amine, bis(3-triethoxysilylpropyl)-[3-(2,2-diethoxy-1-aza-2-silacylopentane)propyl]amine, bis[3-(2,2-diethoxy-1-aza-2-silacyclopentane)propyl]-(3-triethoxysilylpropyl)amine, tris[3-(2,2-diethoxy-1-aza-2-silacyclopentane)propyl]amine, tetrakis(3-trimethoxysilylpropyl)-1,3-propanediamine, tris(3-trimethoxysilylpropyl)-[3-(2,2-dimethoxy-1-aza-2-silacyclopentane)propyl]-1,3-propanediamine, bis(3-trimethoxysilylpropyl)-bis[3-(2,2-dimethoxy-1-aza-2-silacyclopentane)propyl]-1,3-propanedimane, and tris[3-(2,2-dimethoxy-1-aza-2-silacyclopentane)propyl]-(3-trimethoxysilylpropyl)-1,3-propanediamine.

Examples also include tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-azacyclopentane)propyl]-1,3-propanediamine, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-propanediamine, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-propanediamine, tris[3-(2,2-dimethoxy-1-aza-2-silacyclopentane)propyl]-[3-(1-methoxy-2-trimethylsilyl-1-sila-2-azacyclopentane)propyl]-1,3-propanediamine, tetrakis(3-triethoxysilylpropyl)-1,3-propanediamine, tris(3-triethoxysilylpropyl)-[3-(2,2-diethoxy-1-aza-2-silacyclopentane)propyl]-1,3-propanediamine, bis(3-triethoxysilylpropyl)-bis[3-(2,2-diethoxy-1-aza-2-silacyclopentane)propyl]-1,3-propanediamine, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-propanediamine, tris[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)proypl]-1,3-bisaminomethycyclohexane, bis(3-trimethoxysilylpropyl)-bis[3-(2,2-dimethoxy-1-aza-2-silacyclopentane)propyl]-1,3-bisaminomethylcyclohexane, tris[3-(2,2-dimethoxy-1-aza-2-silacyclopentane)propyl]-(3-trimethoxysilylpropyl)-1,3-bisaminomethylcyclohexane, tetrakis[3-(2,2-dimethoxy-1-aza-2-silacyclopentane)propyl]-1,3-propanediamine, and tris(3-trimethoxysilylpropyl)-[3-(1-methoxy-2-trimethylsilyl-1-sila-2-azacyclopentane)propyl]-1,3-bisaminomethylcyclohexane.

Examples further include bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-bisaminomethylcyclohexane, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-biasminomethylcyclohexane, tris[3-(2,2-dimethoxy-1-aza-2-cyclopentane)propyl]-[3-(1-methoxy-2-trimethylsilyl-1-sila-2-azacyclopentane)propyl]-1,3-bisaminomethylcyclohexane, tetrakis(3-triethoxysilylpropyl)-1,3-propanediamine, tris(3-triethoxysilylpropyl)-[3-(2,2-diethoxy-1-aza-2-silacyclopentane)propyl]-1,3-bisaminomethylcyclohexane, bis(3-trimethoxysilylpropyl)-bis[3-(2,2-diethoxy-1-aza-2-silacyclopentane)propyl]-1,3-bisaminomethylcyclohexane, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-bisaminomethylcyclohexane, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-bisaminomethylcyclohexane, tris[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, tetrakis(3-trimethoxysilylpropyl)-1,6-hexamethylenediamine and pentakis(3-trimethoxysilylpropyl)-diethylenetriamine.

Examples of a coupling modifier having a nitrogen atom-containing group when A in the formula (18) is represented by the formula (ii) include, but are not limited to, tris(3-trimethoxysilylpropyl)-methyl-1,3-propanediamine, bis(2-trimethoxysilylpropyl)-[3-(2,2-dimethoxy-1-aza-2-silacyclopentane)propyl]-methyl-1,3-propanediamine, bis[3-(2,2-dimethoxy-1-aza-2-silacyclopentane)propyl]-(3-trimethoxysilylpropyl)-methyl-1,3-propanediamine, tris(3-triethoxysilylpropyl)-methyl-1,3-propanediamine, bis(2-triethoxysilylpropyl)-[3-(2,2-diethoxy-1-aza-2-silacyclopentane)propyl]-methyl-1,3-propanediamine, bis[3-(2,2-diethoxy-1-aza-2-silacyclopentane)propyl]-(3-triethoxysilylpropyl)-methyl-1,3-propanediamine, N1,N1'-(propane-1,3-diyl)bis(N1-methyl-N3,N3-bis(3-(trimethoxysilyl)propyl)-1,3-propanediamine) and N1-(3-(bis(3-(trimethoxysilyl)propyl)amino)propyl)-N1-methyl-N3-(3-(methyl(3-(trimethoxysilyl)propyl)amino)propyl)-N3-(3-(trimethoxysilyl)propyl)-1,3-propanediamine.

Examples of the coupling modifier having a nitrogen atom-containing group when A in the formula (18) is represented by the formula (iii) include, but are not limited to, tetrakis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-2-trimethylsilyl-1-sila-2-azacyclopentane)propyl]silane, bis(3-trimethoxysilylpropyl)-bis[3-(2,2-dimethoxy-1-aza-2-silacyclopentane)propyl]silane, (3-trimethoxysilyl)-[3-(1-methoxy-2-trimethylsilyl-1-sila-2-azacyclopentane)-bis[3-(2,2-dimethoxy-1-aza-2-silacyclopentane)propyl]silane, bis[3-(1-methoxy-2-trimethylsilyl-1-sila-2-azacyclopentane)-bis[3-(2,2-dimethoxy-1-aza-2-silacyclopentane)propyl]silane, tris(3-trimethoxysilylpropyl)-[3-(2,2-dimethoxy-1-aza-2-silacyclopentane)propyl]silane, bis(3-trimethoxysilylpropyl)-[3-(1-methoxy-2-trimethylsilyl-1-sila-2-azacyclopentane)propyl]-[3-(2,2-dimethoxy-1-aza-2-silacyclopentane)propyl]silane, bis[3-(1-methoxy-2-trimethylsilyl-1-sila-2-azacyclopentane)propyl]-bis(3-trimethoxysilylpropyl)silane, and bis(3-trimethoxysilylpropyl)-bis[3-(1-methoxy-2-methyl-1-sila-2-azacyclopentane)propyl]silane.

Examples of the modifier having a nitrogen atom-containing group when A in the formula (18) is represented by formula (iv) include, but are not limited to, 3-tris[2-(2,2-dimethoxy-1-aza-2-silacyclopentane)ethoxy]silyl-1-(2,2-dimethoxy-1-aza-2-silacyclopentane)propane, and 3-tris[2-(2,2-dimethoxy-1-aza-2-silacyclopentane)ethoxy]silyl-1-trimethoxysilylpropane.

In the formula (18), A is preferably represented by the formula (i) or the formula (ii), and s represents 0.

Such coupling modifiers having a nitrogen atom-containing group tend to be easily available and also tend to be more excellent in abrasion resistance and a low hysteresis loss property when the conjugated diene-based polymer is formed into a vulcanizate. Examples of such a coupling modifier having a nitrogen atom-containing group include, but are not limited to, bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine.

In the formula (18), A is more preferably represented by the formula (i) or the formula (ii), and s represents 0, and in the formula (i) or the formula (ii), t represents an integer of 2 to 10.

This provides a tendency that abrasion resistance and a low hysteresis loss property when vulcanized are more excellent.

Examples of such a coupling modifier having a nitrogen atom-containing group include, but are not limited to, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N¹-(3-(bis(3-(trimethoxysilyl)propyl)amino)propyl)-N¹-methyl-N³-(3-(methyl(3-(trimethoxysilyl)propyl)amino)propyl)-N³-(3-(trimethoxysilyl)propyl)-1,3-propanediamine.

The amount of the compound represented by the formula (18) to be added as the coupling modifier having a nitrogen atom-containing group can be adjusted so that the mole number of the polymerization initiator and the mole number of the coupling modifier react in a desired stoichiometric ratio, which tends to achieve a desired star polymer structure.

It is preferable that the specific mole number of the polymerization initiator is preferably 5.0 times or more, and more preferably 6.0 times or more, with respect to the mole number of the coupling modifier.

In this case, the number of functional groups of the coupling modifier in the formula (18) ((o-1) × q + p × r + s) is preferably an integer of 5 to 10, and more preferably an integer of 6 to 10.

The method for producing a conjugated diene-based polymer (A) or a conjugated diene-based polymer (B) may include, after the step of adding a coupling modifier, and/or before the step of adding a coupling modifier, a condensation reaction step of causing a condensation reaction by adding a condensation accelerator.

The method for producing a conjugated diene-based polymer (A) or a conjugated diene-based polymer (B) may include a modifying step of further using a modifier except for the coupling modifier described above.

In the method for producing the conjugated diene-based polymer (A) or the conjugated diene-based polymer (B), two coupling modifiers may be added, or three or more coupling modifiers may be added in the step of adding a coupling modifier.

In the case of adding two coupling modifiers, as the combination of coupling modifiers, coupling modifiers with different numbers of functional groups may be combined and used.

Also, in the case of adding three or more coupling modifiers, a combination of coupling modifiers with different numbers of functional groups may be included.

Examples of the combination of two coupling modifiers with different numbers of functional groups include a combination of a bifunctional or lower coupling modifier and a trifunctional or higher coupling modifier.

Since a fork-like part [A] and a straight-chain polymer are bonded to one end of a bifunctional coupling modifier, thereby forming a fork-like polymer with a long handle, and a star branch structure is formed by a trifunctional coupling modifier, as a combination of coupling modifiers that is easy to design, a bifunctional coupling modifier and a trifunctional or higher coupling modifier may be combined and used in view of the number of active ends after the reaction of the branching agent so that the fork-like part [A] with a long handle and the star shape are each at the expected ratio. A plurality of coupling modifiers may be added at the same time, and may or may not be mixed in advance.

Specific examples of the bifunctional or lower coupling modifier include a coupling modifier having the structure of the formula (14) or the formula (15), and specific examples of the trifunctional or higher coupling modifier include a coupling modifier having the structure of the formula (16), the formula (17), or the formula (18), but are not especially limited.

The method for producing the conjugated diene-based polymer of the present embodiment may include a hydrogenating step of hydrogenating a conjugated diene portion. A method for hydrogenating a conjugated diene portion is not especially limited, and any of known methods can be employed.

As a preferable hydrogenating step, a method for hydrogenating a conjugated diene portion by blowing gaseous hydrogen into a polymer solution in the presence of a catalyst can be employed.

The catalyst to be used is not especially limited, and examples include heterogeneous catalysts such as a catalyst containing a noble metal supported on a porous inorganic substance; and homogenous catalysts such as a catalyst obtained by reacting a solubilized salt of nickel, cobalt or the like with organic aluminum or the like, and a catalyst using metallocene such as titanocene.

Among these catalysts, from the viewpoint that a milder hydrogenation condition can be selected, a titanocene catalyst is preferred. In addition, an example of a method for hydrogenating an aromatic group includes a method using a noble metal-supported catalyst.

Alternatively, an example of a hydrogenating step not using gaseous hydrogen includes a method in which a hydrogenation catalyst and a polymer solution are brought into contact with each other. Such a hydrogenation catalyst is not especially limited, and examples include (1) a supported heterogeneous hydrogenation catalyst obtained by supporting a metal such as Ni, Pt, Pd or Ru on carbon, silica, alumina or diatomite, (2) what is called a Ziegler catalyst using an organic acid salt of Ni, Co, Fe, Cr or the like, or a transition metal salt such as acetylacetone salt, and a reducing agent such as organic aluminum, and (3) what is called an organic metal complex such as an organic metal compound of Ti, Ru, Rh, Zr of the like. Furthermore, other examples of the hydrogenation catalyst are not especially limited but include known hydrogenation catalysts described in, for example, Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, Japanese Patent Publication No. 2-9041, and Japanese Patent Laid-Open No. 8-109219. A preferable hydrogenation catalyst is a reaction mixture of a titanocene compound and a reducing organic metal compound.

In the method for producing a conjugated diene-based polymer of the present embodiment, after the coupling step with a coupling modifier, a deactivator, and/or a neutralizer, and a stabilizer may be added if necessary to the resultant polymer solution.

Examples of the deactivator include, but are not limited to, water, and alcohols such as methanol, ethanol and isopropanol.

Examples of the neutralizer include, but are not limited to, carboxylic acids such as stearic acid, oleic acid and versatic acid (a mixture of highly branched carboxylic acids having 9 to 11 carbon atoms, and containing a principal component having 10 carbon atoms), an aqueous solution of an inorganic acid, and a carbon dioxide gas.

As the stabilizer, it is preferable to add a rubber stabilizer from the viewpoint of preventing gel formation after polymerization and from the viewpoint of improving stability during processing.

As the rubber stabilizer, any of known ones can be used, and examples thereof include, but are not limited to, antioxidants such as 2,6-di-tert-butyl-4-hydroxytoluene (BHT), n-octadecyl-3-(4'-hydroxy-3',5'-di-tert-butylphenol)propionate, and 2-methyl-4,6-bis[(octylthio)methyl]phenol.

### <Mixing Step>

In the method for producing the modified conjugated diene-based polymer mixture of the present embodiment, as described above, after obtaining polymerization solutions of the modified conjugated diene-based polymer (A) and the modified conjugated diene-based polymer (B), these are mixed, a solvent is removed, and the modified conjugated diene-based polymer is obtained.

With respect to the mixing step, it is preferable to provide, downstream of each of a reaction tank for the modified conjugated diene-based polymer (A) and a reaction tank for the modified conjugated diene-based polymer (B), a storage tank for storing the polymerization solution distilled from each reaction tank. By providing a storage tank for each polymer, the flow rate can be adjusted after the modification step and before the mixing step, fine adjustment of the mixing ratio of the polymer solutions is facilitated, and the solutions can be stored in tanks different from the reaction tanks.

The capacity of the storage tanks is more preferably larger than that of the reaction tanks.

Examples of the mixing means of the present embodiment to be used include, but are not limited to, a tank equipped with a rotary stirrer, or a pipe equipped with a rotary stirrer or a static mixer. From the viewpoint of stirring ability, it is preferable to use a tank equipped with a rotary stirrer, and from the viewpoint of production efficiency, it is preferable to use a pipe equipped with a rotary stirrer or a static mixer.

The temperature in the mixing step is not especially limited, and it is preferably 0°C or more and 120°C or less, and more preferably 50°C or more and 100°C or less. This is because, as the temperature is higher, the viscosity of the polymerization solution becomes lower, and mixing becomes easier. In a preferred aspect, the solutions distilled from a top portion of the polymerization reaction tanks are temporarily stored and then mixed, and if the storage time is short and the temperature of the solutions is maintained even after being distilled from the polymerization tanks, heating in the mixing step is not necessary. However, when the storage time is long or when the ambient temperature is low, that is, under conditions in which the temperature of the solutions is likely to decrease, the storage tanks, mixing tank, piping, and the like may be kept warm or heated.

The mixing mass ratio of the conjugated diene-based polymer (A) and the conjugated diene-based polymer (B) in the mixing step, ((A)/(B)), is preferably 10/90 to 50/50, more preferably 15/85 to 45/55, further preferably 20/80 to 40/60, still further preferably 25/75 to 40/60, and particularly preferably 30/70 to 60/40.

When it is within this range, the balance between abrasion resistance when formed into a vulcanizate and processability when formed into a vulcanizate tends to be excellent.

It is noted that the above ratio is a mass ratio of the modified conjugated diene-based polymers, and in the case where the concentrations of the polymerization solution of the modified conjugated diene-based polymer (A) and the polymerization solution of the modified conjugated diene-based polymer (B) are the same, the ratio may be directly adopted as a mass ratio of the solutions, but the concentrations of these solutions may be different. This is because, when producing a polymer having a small molecular weight, an increased amount of a polymerization initiator to be added tends to cause high reaction heat, and thus the concentration of the solution may be lowered in order to maintain the polymerization temperature. In this case, it is preferable to adjust the mixing ratio so as to obtain a preferable mass ratio of the polymers in consideration of the solution concentrations.

In the solvent removal step, known methods such as drying and devolatilization can be used. Examples of such methods include a method in which, after separating the solvent by steam stripping or the like, the polymer is filtered out and further dehydrated and dried to obtain the polymer, a method in which the polymer solution is concentrated in a flushing tank and further devolatilized with a vent extruder or the like, and a method in which the polymer solution is directly devolatilized with a drum dryer or the like.

### [Rubber Composition]

A rubber composition of the present embodiment contains a rubber component containing the conjugated diene-based polymer of the present embodiment described above.

When the conjugated diene-based polymer of the present embodiment is compounded in a tire, the oil component contained in a bale formed body is also inevitably contained in the tire. When the amount of oil extension is reduced, the oil component to be contained in the tire also decreases, which in turn has the merit of increasing the degree of freedom in composition when designing the tire.

To the conjugated diene-based polymer of the present embodiment and a sheet-like or block-like formed body (also referred to as bale) thereof, a softener component described later may be added. In the above formed body (bale), from the viewpoint of improving the degree of freedom in compounding and designing when producing the rubber composition, the rubber softener is preferably 2 parts by mass or less, more preferably 1.5 parts by mass or less, further preferably 1 part by mass or less, still further preferably less than 1 part by mass, with respect to 100 parts by mass of the conjugated diene-based polymer, and it is most preferable that the softener is not added.

The rubber softener is not especially limited, and examples include an extender oil, a liquid rubber, and a resin.

It is preferable to provide the conjugated diene-based polymer and a sheet-like or block-like formed body obtained therefrom in a state where no rubber softener is added, from the viewpoint of improving the degree of freedom in compounding and designing when producing a rubber composition using the formed body.

In general, there is an upper limit on the total amount of the rubber softener with respect to the entire rubber composition. However, when a rubber softener is added to a sheet-like or block-like formed body of the conjugated diene-based polymer, a rubber composition produced compounding that formed body also contains the rubber material softener, which thus puts pressure on the total amount of the rubber softener with respect to the entire rubber composition and restricts the degree of freedom in the type and amount of a rubber softener to be added that needs to be compounded when producing the rubber composition. From the viewpoint of improving the degree of freedom in selecting the type and amount of a rubber softener to be compounded in accordance with the performance required for the rubber composition, it is preferable to reduce the softener to be added to a sheet-like or block-like formed body of the conjugated diene-based polymer.

Although not especially limited, for example, by reducing the extender oil to be added to the conjugated diene-based polymer of the present embodiment and a sheet-like or block-like formed body obtained therefrom, it is possible to compound a resin such as extender oil in a larger amount when producing a rubber composition using them. This is preferred from the viewpoint of further improving the fracture strength of the rubber composition and a vulcanizate obtained therefrom.

From the viewpoint of preventing gel formation, and from the viewpoint of improving stability in processing, the rubber composition using the conjugated diene-based polymer of the present embodiment and a sheet-like or block-like formed body obtained therefrom may further contain a rubber stabilizer.

The rubber stabilizer is not limited to the following, any of known ones can be used, and examples include antioxidants such as 2,6-di-tert-butyl-4-hydroxytoluene (hereinafter also referred to as "BHT"), n-octadecyl-3-(4'-hydroxy-3',5'-di-tert-butylphenol)propionate, and 2-methyl-4,6-bis[(octylthio)methyl]phenol.

A bale of the present embodiment contains 100 parts by mass of the modified conjugated diene-based polymer of the present embodiment and less than 1 part by mass of a softener component.

A rubber composition of the present embodiment contains 100 parts by mass of a rubber component and 5.0 parts by mass or more and 150 parts by mass or less of a filler, and the rubber component contains 10 parts by mass or more of the modified conjugated diene-based polymer of the present embodiment or the bale of the present embodiment with respect to 100 parts by mass of the total amount of the rubber component.

The rubber composition of the present embodiment contains 100 parts by mass of a rubber component, and 5.0 parts by mass or more and 150 parts by mass or less of a filler.

The rubber component preferably contains 10 parts by mass or more of the conjugated diene-based polymer of the present embodiment with respect to 100 parts by mass of the total amount of the rubber component.

When the filler is dispersed in the rubber component containing the conjugated diene-based polymer of the present embodiment, a rubber composition further excellent in processability in vulcanization, and further excellent in a low hysteresis loss property, fracture performance, and abrasion resistance of a vulcanizate obtained therefrom can be obtained. When the rubber component contains the conjugated diene-based polymer of the present embodiment at a prescribed rate, low fuel composition performance, processability, and abrasion resistance are further improved.

Examples of the filler include, but are not limited to, a silica-based inorganic filler, carbon black, a metal oxide, and a metal hydroxide. Among these, a silica-based inorganic filler is preferred. In particular, when the rubber composition of the present embodiment is used in a tire, a vehicle component such as an anti-vibration rubber, or a vulcanized rubber for shoes or the like, a silica-based inorganic filler is particularly preferably contained. One of these fillers may be singly used, or two or more of these may be used together.

The silica-based inorganic filler is not especially limited, any of known fillers can be used, a solid particle containing SiO₂ or Si₃Al as a constituent unit is preferred, and a solid particle containing SiO₂ or Si₃Al as a principal component of a constituent unit is more preferred. Here, the principal component refers to a component contained in the silica-based inorganic filler in an amount of over 50% by mass, preferably 70% by mass or more, and more preferably 80% by mass or more.

Specific examples of the silica-based inorganic filler include, but are not limited to, silica, clay, talc, mica, diatomite, wollastonite, montmorillonite, zeolite and inorganic fibrous substances such as glass fiber. Alternatively, a silica-based inorganic filler having a hydrophobized surface, and a mixture of a silica-based inorganic filler and an inorganic filler except for silica may be used. Among these, from the viewpoint of further improving strength and abrasion resistance of the rubber composition, silica or glass fiber is preferred, and silica is more preferred. The silica is not especially limited, and examples include dry silica, wet silica and synthetic silicate silica. Among these silica, wet silica is preferred from the viewpoint of further improving fracture strength of the resultant rubber composition.

From the viewpoint of more definitely obtaining a rubber composition having practically good abrasion resistance and fracture strength, a nitrogen adsorption specific surface area, obtained by the BET adsorption method, of the silica-based inorganic filler is preferably 100 m²/g or more and 300 m²/g or less, and more preferably 170 m²/g or more and 250 m²/g or less. Besides, a silica-based inorganic filler having a comparatively small specific surface area (for example, a specific surface area of less than 200 m²/g) and a silica-based inorganic filler having a comparatively large specific surface area (for example, 200 m²/g or more) can be used in combination if necessary. In the present embodiment, when a silica-based inorganic filler having a comparatively large specific surface area (of, for example, 200 m²/g or more) is used in particular, the conjugated diene-based polymer is further improved in dispersibility of silica. As a result, the resultant rubber composition tends to have further excellent abrasion resistance, fracture strength, and low hysteresis loss property.

Examples of carbon black include, but are not limited to, carbon blacks of SRF, FEF, HAF, ISAF and SAF classes. Among these, a carbon black having a nitrogen adsorption specific surface area of 50 m²/g or more and dibutyl phthalate (DBP) oil absorption of 80 mL/100 g or less is preferred.

The metal oxide is not especially limited as long as it is a solid particle containing a principal component of a constituent unit represented by chemical formula MₓO_{y} (wherein M represents a metal atom, and x and y each independently represent an integer of 1 to 6), and examples include alumina, titanium oxide, magnesium oxide, and zinc oxide.

Examples of the metal hydroxide include, but are not limited to, aluminum hydroxide, magnesium hydroxide, and zirconium hydroxide.

A content of the filler in the rubber composition of the present embodiment is 5.0 parts by mass or more and 150 parts by mass, preferably 20 parts by mass or more and 100 parts by mass or less, and more preferably 30 parts by mass or more and 90 parts by mass or less with respect to 100 parts by mass of the rubber component. When the filler is contained in the above-described range, there is a tendency that the rubber composition is further excellent in processability in vulcanization, and is further excellent in a low hysteresis loss property, fracture performance, and abrasion resistance of a vulcanizate obtained therefrom.

From the viewpoint of definitely imparting performances required in use as a tire or the like such as dry grip performance and electrical conductivity, the rubber composition of the present embodiment preferably contains 0.5 parts by mass or more and 100 parts by mass or less of carbon black with respect to 100 parts by mass of the rubber component containing the conjugated diene-based polymer. From a similar viewpoint, the rubber composition contains carbon black in an amount of more preferably 3.0 parts by mass or more and 100 parts by mass or less, and further preferably 5.0 parts by mass or more and 50 parts by mass or less with respect to 100 parts by mass of the rubber component containing the conjugated diene-based polymer.

The rubber composition of the present embodiment may further contain a silane coupling agent. When the rubber composition contains a silane coupling agent, interaction between the rubber component and the filler can be further improved.

Preferable examples of the silane coupling agent include, but are not limited to, a compound containing, in one molecule, a sulfur bond portion and an alkoxysilyl group or silanol group portion. Examples of such a compound include, but are not limited to, bis-[3-(triethoxysilyl)-propyl]-tetrasulfide, bis-[3-(triethoxysilyl)-propyl]-disulfide and bis-[2-(triethoxysilyl)-ethyl]-tetrasulfide.

In the rubber composition of the present embodiment, a content of the silane coupling agent is preferably 0.1 parts by mass or more and 30 parts by mass or less, more preferably 0.5 parts by mass or more and 20 parts by mass or less, and further preferably 1.0 part by mass or more and 15 parts by mass or less with respect to 100 parts by mass of the filler. When the content of the silane coupling agent falls in the above-described range, there is a tendency that the interaction between the rubber component and the filler can be further improved.

The rubber composition of the present embodiment may contain, as the rubber component, a rubber-like polymer different from the conjugated diene-based polymer of the present embodiment (hereinafter simply referred to as the "rubber-like polymer"). The conjugated diene-based polymer of the present embodiment and the aforementioned rubber-like polymer are collectively referred to as "rubber component".

Examples of the rubber-like polymer include, but are not limited to, a conjugated diene-based polymer and a hydrogenated product thereof, a random copolymer of a conjugated diene compound and a vinyl aromatic compound, and a hydrogenated product thereof, a block copolymer of a conjugated diene compound and a vinyl aromatic compound, and a hydrogenated product thereof, a non-diene-based polymer, and a natural rubber.

Examples of the rubber-like polymer include, but are not limited to, a butadiene rubber and a hydrogenated product thereof, an isoprene rubber and a hydrogenated product thereof, styrene-based elastomers such as a styrene-butadiene rubber and a hydrogenated product thereof, a styrene-butadiene block copolymer and a hydrogenated product thereof, and a styrene-isoprene block copolymer and a hydrogenated product thereof, an acrylonitrile-butadiene rubber and a hydrogenated product thereof.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an α,β-unsaturated nitrile-acrylic acid ester-conjugated diene copolymer rubber, a urethane rubber and a polysulfide rubber.

Examples of the natural rubber include, but are not limited to, smoked sheets of RSS Nos. 3 to 5, SMR and epoxidized natural rubber.

The rubber-like polymer may be in the form of a modified rubber imparted with a functional group having polarity such as a hydroxyl group or an amino group. When the rubber composition of the present embodiment is used in a tire, the rubber-like polymer is preferably one or more selected from the group consisting of a butadiene rubber, an isoprene rubber, a styrene-butadiene rubber, a natural rubber, and a butyl rubber.

The weight average molecular weight of the rubber-like polymer is preferably 2,000 or more and 2,000,000 or less, and more preferably 5,000 or more and 1,500,000 or less from the viewpoints of abrasion resistance, fracture strength, and balance between a low hysteresis loss property and processability of the resultant rubber composition. As the rubber-like polymer, a low molecular weight rubber-like polymer, that is, what is called a liquid rubber, can be used. One of these rubber-like polymers may be singly used, or two or more of these may be used together.

When the rubber composition of the present embodiment contains the conjugated diene-based polymer and the rubber-like polymer, a content ratio (in a mass ratio) of the conjugated diene-based polymer to the rubber-like polymer is, in terms of (the conjugated diene-based polymer/the rubber-like polymer), preferably 10/90 or more and 100/0 or less, more preferably 20/80 or more and 90/10 or less, and further preferably 30/70 or more and 80/20 or less.

In other words, the rubber component contains, with respect to 100 parts by mass of the total amount of the rubber component, preferably 10 parts by mass or more and 100 parts by mass or less, more preferably 20 parts by mass or more and 90 parts by mass or less, and further preferably 30 parts by mass or more and 80 parts by mass or less of the conjugated diene-based polymer of the present embodiment. When the ratio of the conjugated diene-based polymer contained in the rubber component falls in the above-described range, a vulcanizate of the rubber composition tends to be further excellent in abrasion resistance and a low hysteresis loss property.

The rubber composition of the present embodiment contains a softener component (for example, a rubber softener) in addition to the rubber component from the viewpoint of further improving the processability.

The softener component is not especially limited, and examples thereof include a liquid rubber, a resin, and an extender oil.

The liquid rubber is not especially limited, and examples include liquid polybutadiene, and liquid styrene-butadiene rubber.

When a liquid rubber is used as the softener component, not only the above-described effect can be attained, but also the glass transition temperature of the resultant conjugated diene-based polymer composition can be lowered, and therefore, abrasion resistance, a low hysteresis loss property, and a low temperature characteristic of a vulcanizate obtained therefrom tend to be further improved.

Examples of the resin include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenol-formaldehyde resin, a xylene-formaldehyde resin, a monoolefin oligomer, a diolefin oligomer, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol. One of these resins may be singly used, or two or more of these may be used together. When such a resin is hydrogenated, all unsaturated groups may be hydrogenated, or some may be left not hydrogenated.

When a resin is used as the softener component, not only the above-described effect can be attained, but also fracture strength of a vulcanizate of the resultant conjugated diene-based polymer composition tends to be further improved.

To the rubber composition of the present embodiment, it is suitable to add a resin as the softener component in addition to the rubber component from the viewpoint of further improving the fracture strength of a vulcanizate obtained therefrom.

To the rubber composition of the present embodiment, a softener component may be added in addition to the rubber component from the viewpoint of further improving the processability, and a mineral oil, or a liquid or low molecular weight synthetic softener is suitable.

Examples of the extender oil include an aroma oil, a naphthenic oil and a paraffin oil. Among these, from the viewpoint of environmental safety, and from the viewpoint of oil bleeding prevention and improvement of wet grip performance, an aroma-alternative oil containing 3% by mass or less of a polycyclic aromatic (PCA) component according to the IP 346 is preferred. The aroma-alternative oil is not especially limited, and examples include TDAE (Threated Distillate Aromatic Extracts), and MES (Mild Extraction Solvate) mentioned in Kautschuk Gummi Kunststoffe 52 (12) 799 (1999), and RAE (Residual Aromatic Extracts).

A mineral oil-based rubber softener, which is used for softening, expanding and improving processability of a rubber and is designated as a process oil or an extender oil, is a mixture of an aromatic ring, a naphthene ring and a paraffin chain. In particular, one in which the number of carbon atoms of the paraffin chain is 50% or more is designated as a paraffin-based softener, one in which the number of carbon atoms of the naphthene ring is 30% or more and 45% or less is designated as a naphthene-based softener, and one in which the number of carbon atoms belonging to aromatic carbons exceeds 30% of the number of all carbon atoms is designated as an aromatic-based softener. The rubber composition of the present embodiment preferably contains, as a rubber softener, one having an appropriate aromatic content. When such a rubber softener is contained, compatibility with the conjugated diene-based polymer is further improved.

The content of the softener component in the rubber composition of the present embodiment is expressed as a sum of the amount of the softener component precedently added to the conjugated diene-based polymer of the present embodiment and the above-described rubber-like polymer, and the amount of the softener component added in forming the rubber composition.

In the rubber composition of the present embodiment, the content of the softener component is preferably 0 part by mass or more and 100 parts by mass or less, more preferably 10 parts by mass or more and 90 parts by mass or less, and further preferably 30 parts by mass or more and 90 parts by mass or less with respect to 100 parts by mass of the rubber component. When the content of the rubber softener is 100 parts by mass or less with respect to 100 parts by mass of rubber component, bleeding out can be suppressed, and the stickiness of the surface of the rubber composition can be further suppressed.

As for a method for producing the rubber composition of the present embodiment, there is no particular limitation on the method for mixing the conjugated diene-based polymer of the present embodiment, a rubber-like polymer other than the conjugated diene-based polymer of the present embodiment, a filler, a silane coupling agent, if necessary, a rubber softener, and the like. Examples thereof include a melt-kneading method using a general mixer such as an open roll, a Banbury mixer, a kneader, a single shaft screw extruder, a twin shaft screw extruder, or a multi-shaft screw extruder, and a method in which the respective components are melted and mixed followed by removal of a solvent by heating. Among these methods, the melt-kneading method using a roll, a Banbury mixer, a kneader or an extruder is preferred from the viewpoint of productivity and high kneadability. Besides, the rubber component, the filler, the silane coupling agent, and the additive may be kneaded all together, or may be mixed dividedly in plural times.

The rubber composition of the present embodiment may be in the form of a vulcanizate obtained by vulcanization with a vulcanizing agent. Examples of the vulcanizing agent include, but are not limited to, radical generators such as organic peroxides and azo compounds, oxime compounds, nitroso compounds, polyamine compounds, sulfur and sulfur compounds. The sulfur compounds encompass sulfur monochloride, sulfur dichloride, disulfide compounds, high molecular weight polysulfide compounds and the like.

In the rubber composition of the present embodiment, the content of the vulcanizing agent is preferably 0.01 parts by mass or more and 20 parts by mass or less, and more preferably 0.1 parts by mass or more and 15 parts by mass or less with respect to 100 parts by mass of the rubber component. As a vulcanization method, any of conventionally known methods can be employed. A vulcanization temperature is preferably 120°C or more and 200°C or less, and more preferably 140°C or more and 180°C or less.

For the vulcanization of the rubber composition, a vulcanization accelerator and/or a vulcanization aid may be used if necessary. As the vulcanization accelerator, any of conventionally known materials can be used, and examples include, but are not limited to, sulphenamide-based, guanidine-based, thiuram-based, aldehyde-amine-based, aldehyde-ammonia-based, thiazole-based, thiourea-based and dithiocarbamate-based vulcanization accelerators.

Besides, examples of the vulcanization aid include, but are not limited to, zinc oxide and stearic acid.

The contents of the vulcanization accelerator and the vulcanization aid are respectively preferably 0.01 parts by mass or more and 20 parts by mass or less, and more preferably 0.1 parts by mass or more and 15 parts by mass or less with respect to 100 parts by mass of the rubber component.

The rubber composition of the present embodiment may contain, as long as the effects of the present embodiment are not impaired, various additives such as another softener and filler excluding those described above, a heat resistance stabilizer, an antistatic agent, a weathering stabilizer, an anti-aging agent, a colorant and a lubricant. As the softener, any of known softeners can be used. The filler is not especially limited, and specific examples include calcium carbonate, magnesium carbonate, aluminum sulfate and barium sulfate. As the heat resistance stabilizer, the antistatic agent, the weathering stabilizer, the anti-aging agent, the colorant and the lubricant, any of known materials can be respectively used.

### [Tire]

A tire of the present embodiment contains the rubber composition of the present embodiment described above.

Examples of the tire of the present embodiment include, but are not limited to, various tires such as a fuel-efficient tire, an all-season tire, a high-performance tire and a studless tire, and the rubber composition of the present embodiment can be suitably used in various tire portions such as a tread, a carcass, a sidewall and a bead.

It is noted that each numerical range described above as a preferable range or the like may be a numerical range obtained by arbitrarily combining any one of values described as the upper limits and any one of values described as the lower limits even when not particularly stated.

### Examples

The present embodiment will now be described in more detail with reference to specific examples and comparative examples, and it is noted that the present invention is not limited to the following examples and comparative examples at all.

Various physical properties of the examples and comparative examples were measured by the following methods.

In the following, a polymer before modification with a coupling modifier is described as "unmodified conjugated diene-based polymer" and a polymer after modification with a coupling modifier is described as "modified conjugated diene-based polymer".

Also, the term "conjugated diene-based polymer" may be used as a generic term for polymers before and after modification with a coupling modifier.

### (Physical Property 1) Molecular Weight Distribution Curve, Average Molecular Weight, and Molecular Weight Distribution Measured by Gel Permeation Chromatography (GPC)

An unmodified conjugated diene-based polymer and a modified conjugated diene-based polymer were used as a sample for performing GPC measurement using a GPC measurement apparatus (trade name "HLC-8320GPC" manufactured by Tosoh Corporation) including a series of two columns using a polystyrene-based gel as a filler, and an RI detector (trade name "HLC8020" manufactured by Tosoh Corporation). On the basis of a calibration curve obtained using standard polystyrene, a weight average molecular weight (Mw), a number average molecular weight (Mn) and a molecular weight distribution (Mw/Mn) were obtained.

As an eluent, a 2 wt% triethylamine-THF (tetrahydrofuran) solution was used. As the columns, trade name "TSKguardcolumn Super MP(HZ)-H" manufactured by Tosoh Corporation connected, as a guard column at a previous stage, to a series of two columns of trade name "TSKgel GMHHR-H(S)" manufactured by Tosoh Corporation were used.

Ten (10) mg of a sample for the measurement was dissolved in 10 mL of THF to obtain a measurement solution, and 10 µL of the measurement solution was injected into the GPC measurement apparatus for performing the measurement under conditions of an oven temperature of 40°C and a flow rate of 1.0 mL/min.

The shape of the molecular weight distribution curve obtained as a result of the measurement and the presence or absence of a shoulder on a higher molecular weight side than a peak top were confirmed. Also, measurement results thus obtained were defined as the respective average molecular weights of the samples.

### (Physical Property 2) Mooney Viscosity of Polymer

An unmodified conjugated diene-based polymer and a modified conjugated diene-based polymer were used as a sample to measure a Mooney viscosity by using a Mooney viscometer (trade name "VR1132" manufactured by Ueshima Seisakusho Co., Ltd.) in accordance with ISO 289 with an L-type rotor used.

A measurement temperature was 110°C when an unmodified conjugated diene-based polymer was used as a sample. A measurement temperature was 100°C when a modified conjugated diene-based polymer was used as a sample.

After a sample was preheated at the test temperature for 1 minute, the rotor was rotated at 2 rpm, and a torque was measured 4 minutes after to measure a Mooney viscosity (ML₍₁₊₄₎).

### (Physical Property 3) Mooney Stress Relaxation

An unmodified conjugated diene-based polymer and a modified conjugated diene-based polymer were used as samples to measure a Mooney viscosity by using a Mooney viscometer (trade name "VR1132" manufactured by Ueshima Seisakusho Co., Ltd.) in accordance with ISO 289 with an L-type rotor used. Then, the rotation of the rotor was immediately stopped, the torque was recorded in Mooney units every 0.1 second from 1.6 seconds to 5 seconds after the stoppage, the slope of the straight line obtained by log-log plotting both torque and time (seconds) was determined, and its absolute value was used as a Mooney stress relaxation (MSR).

A measurement temperature was 110°C when an unmodified conjugated diene-based polymer was used as a sample. A measurement temperature was 100°C when a modified conjugated diene-based polymer was used as a sample.

### (Physical Property 4) Absolute Molecular Weight and Branch Number

A modified conjugated diene-based polymer was used as a sample, and a GPC measurement apparatus (trade name "GPCmax VE-2001" manufactured by Malvern Panalytical Ltd.) including a series of three columns using a polystyrene-based gel as a filler, and three detectors including a light scattering detector, an RI detector, and a viscosity detector (trade name "TDA305" manufactured by Malvern Panalytical Ltd.) connected in the stated order were used to perform measurement. Based on standard polystyrene, an absolute molecular weight was obtained from results obtained by using the light scattering detector and the RI detector, and an intrinsic viscosity was obtained from results obtained by using the RI detector and the viscosity detector.

A straight-chain polymer was assumed to follow an intrinsic viscosity [η₀] = 10^{-3.498}M^{0.711}, and a contracting factor (g') was calculated as a ratio of an intrinsic viscosity corresponding to each molecular weight. In the expression, M represents an absolute molecular weight.

As an eluent, THF containing 5 mmol/L of triethylamine was used.

As the columns, columns of trade names "TSKgel G4000HXL", "TSKgel G5000HXL" and "TSKgel G6000HXL" manufactured by Tosoh Corporation were connected to be used.

Twenty (20) mg of a sample for the measurement was dissolved in 10 mL of THF to obtain a measurement solution, and 100 µL of the measurement solution was injected into the GPC measurement apparatus for performing the measurement under conditions of an oven temperature of 40°C and a THF flow rate of 1 mL/min.

By the above measurement, an absolute molecular weight distribution curve and a branch number distribution curve of the modified conjugated diene-based polymer were obtained, and a branch number (Bn), defined as g' = 6Bn/{(Bn + 1)(Bn + 2)}, was calculated using a contracting factor (g').

### (Physical Property 5) Modification Ratio

The modification ratio of a polymer before modification with a coupling modifier (unmodified conjugated diene-based polymer) and a polymer after modification with a coupling modifier (modified conjugated diene-based polymer) was measured by column adsorption GPC as follows.

Column adsorption GPC is a method for obtaining a modification ratio of a modified polymer by utilizing a characteristic that a modified basic polymer component of the modified conjugated diene-based polymer easily adsorbs onto a GPC column using a silica-based gel as a filler.

Each polymer was used as a sample to measure a sample solution containing the sample and low molecular weight internal standard polystyrene with a polystyrene-based column.

Besides, the same sample solution was measured with a silica-based column.

A difference between a chromatogram obtained by the measurement with the polystyrene-based column and a chromatogram obtained by the measurement with the silica-based column was obtained to measure the amount of adsorption onto the silica-based column, and thus, a modification ratio was obtained.

### <Preparation of Sample Solution>:

Ten (10) mg of a sample and 5 mg of standard polystyrene were dissolved in 10 mL of THF to obtain a sample solution. A modification ratio of an unmodified conjugated diene-based polymer and a modified conjugated diene-based polymer was measured under the following measurement conditions:

### <GPC Measurement Conditions in Using Polystyrene-based Column>

The GPC measurement was performed using an apparatus of trade name "HLC-8320GPC" manufactured by Tosoh Corporation and a reflex index (RI) detector (trade name "HLC8020" manufactured by Tosoh Corporation).

A 2 wt% triethylamine-THF solution was used as an eluent, and 10 µL of a sample solution was injected into the GPC apparatus to obtain a chromatogram under conditions of a column oven temperature of 40°C and a THF flow rate of 1.0 mL/min.

As the columns, trade name "TSKguardcolumn Super MP(HZ)-H" manufactured by Tosoh Corporation connected, as a guard column at a previous stage, to a series of two columns of trade name "TSKgel GMHHR-H(S)" manufactured by Tosoh Corporation were used.

### <GPC Measurement Conditions Using Silica-based Column>

The GPC measurement was performed using an apparatus of trade name "HLC-8320GPC" manufactured by Tosoh Corporation and an RI detector (trade name "HLC8020" manufactured by Tosoh Corporation).

THF was used as an eluent, and 50 µL of a sample solution was injected into the GPC apparatus to obtain a chromatogram under conditions of a column oven temperature of 40°C and a THF flow rate of 0.5 mL/min.

A series of columns of trade names "Zorbax PSM-1000S", "PSM-300S" and "PSM-60S" manufactured by Agilent Technologies Japan Ltd., and a guard column of trade name "DIOL 4.6 x 12.5 mm 5 micron" connected at a previous stage were used.

### Calculation method for modification ratio:

In the chromatogram obtained by using the polystyrene-based column, assuming that the whole peak area was 100, a peak area P1 of the sample and a peak area P2 of standard polystyrene were obtained. Besides, in the chromatogram obtained by using the silica-based column, assuming that the whole peak area was 100, a peak area P3 of the sample and that a peak area P4 of standard polystyrene were obtained. A modification ratio (%) was obtained in accordance with the following expression: $Modification ratio \left(%\right) = \left[1-\left(P2\times P3\right)/\left(P1\times P4\right)\right] \times 100$ wherein P1 + P2 = P3 + P4 = 100

### (Physical Property 6) Amount of Bound Vinyl Aromatic Monomer Unit (Amount of Bound Styrene)

A modified conjugated diene-based polymer was used as a sample, and 100 mg of the sample was dissolved in 100 mL of chloroform to obtain a sample for the measurement.

Each sample was measured with a spectrophotometer (trade name "UV-2450" manufactured by Shimadzu Corporation) to obtain an absorption spectrum. Based on absorbance of UV light (in the vicinity of 254 nm) derived from a phenyl group of styrene, the amount of bound styrene (% by mass) in 100% by mass of the modified conjugated diene-based polymer was calculated.

### (Physical Property 7) Amount of Vinyl Bond in Bound Conjugated Diene (Amount of 1,2-Vinyl Bond in Bound Butadiene)

A modified conjugated diene-based polymer was used as a sample, and 50 mg of the sample was dissolved in 10 mL of carbon disulfide to obtain a sample for the measurement.

An infrared spectrum of each sample was measured in a range of 600 to 1,000 cm⁻¹ with Fourier transform infrared spectrophotometer (trade name "FT-IR230" manufactured by JASCO Corporation).

In accordance with the Hampton method (method described by R. R. Hampton, Analytical Chemistry 21, 923 (1949)), an amount of 1,2-vinyl bond (mol%) in bound butadiene was obtained based on absorbance at a prescribed wavelength.

### (Physical Property 8) DSC Differential Curve Obtained by Differentiating DSC Curve Recorded by Differential Scanning Calorimetry (DSC)

A modified conjugated diene-based polymer was used as a sample to perform DSC in accordance with ISO 22768: 2006 with a differential scanning calorimeter (trade name "DSC 3200S" manufactured by Mac Science). A DSC temperature rising curve was recorded with the temperature decreased from 20°C to -120°C at 20°C/min and increased from -120°C at 20°C/min under a flow of 50 mL/min of helium, the presence or absence of a peak observed between -100°C and -5°C on the DSC differential curve was confirmed, and the temperature of the peak top (inflection point) was taken as the glass transition temperature (or glass transition point).

### (Conjugated Diene-based Polymer A1)

Two tank pressure vessels, each of which had an internal volume of 10 L and a ratio (L/D) of internal height (L) and diameter (D) of 4.0, had an inlet at a bottom and an outlet at a top, and was equipped with a stirrer and a temperature controlling jacket, were connected to each other as polymerizing branching reactors.

1,3-Butadiene, styrene and n-hexane, from which a water content had been precedently removed, were mixed under conditions of 15.4 g/min, 7.0 g/min and 121.1 g/min, respectively to be continuously supplied to the bottom of the first reactor. In the supply, immediately before the mixed solution entered the first reactor, n-butyllithium to be used for residual impurity inactivation was continuously added under a condition of 0.064 mmol/min while being mixed with a static mixer. Besides, at the same time as the supply of 1,3-butadiene, styrene, n-hexane, and n-butyllithium, 2,2-bis(2-oxolanyl)propane used as a polar material and n-butyllithium (shown as "d-1" in Table 1) used as a polymerization initiator were supplied under conditions of respectively 0.052 mmol/min and 0.142 mmol/min to the bottom of the first reactor in which reaction solutions were vigorously stirred with the stirrer. It is noted that the internal temperature of the first reactor was kept at 78°C.

A conjugated diene-based polymer solution generated through a polymerization reaction caused in the first reactor was continuously taken out from the top of the first reactor to be continuously supplied to the bottom of the second reactor. When the polymerization was sufficiently stabilized, while copolymerizing 1,3-butadiene and styrene, trimethoxy(4-vinylphenyl)silane (shown as "c-1" in Table 1) as the branching agent was supplied from the bottom of the second reactor under a condition of 0.016 mmol/min, and furthermore, additional 1,3-butadiene was added under a condition of 5.1 g/min to perform the polymerizing branching step.

Next, a conjugated diene-based polymer solution flowing out of the top of the second reactor was supplied to the static mixer. Furthermore, to the conjugated diene-based polymer solution continuously flowing in the static mixer, tetrakis(3-trimethoxysilylpropyl)-1,3-propanediamine (shown as "b-1" in Table 1) were continuously added as the coupling modifiers under a condition of 0.025 mmol/min, and thus, the conjugated diene-based polymer was coupled. Here, a time until the addition of the coupling modifier to the polymer solution flowing out of the outlet of the second reactor was 4.8 min, the temperature of the polymer solution at which the coupling modifier was added was 78°C. Besides, a difference between the temperature of the polymer solution at the outlet of the second reactor and the temperature of the polymer solution in adding the coupling modifier was 2°C.

Next, to the polymer solution flowing out of the static mixer, a solution of an antioxidant (BHT) in n-hexane was added to obtain an amount of the antioxidant (BHT) of 0.2 g per 100 g of the polymer continuously under a condition of 0.055 g/min to complete the coupling reaction. The solvent was removed by steam stripping of the modified conjugated diene-based polymer solution, and thus, a modified conjugated diene-based polymer A1 was obtained by forming into a bale. Various measurements were carried out, and the results are shown in Table 1.

Furthermore, the obtained polymerization solution was fed to a tank pressure vessel having an internal volume of 100 L.

### (Conjugated Diene-based Polymers A2 to A7, A9, and Conjugated Diene-based Polymers B1 to B11, B13 to B14)

The production method was the same as that for the modified conjugated diene-based polymer A1, except that the amounts of styrene, butadiene, and n-hexane added to the bottom of the first reactor, the amount of the polymerization initiator added, the amount of the polar substance added, the amounts of the branching agent and 1,3-butadiene added to the bottom of the second reactor, the type of the modifier, the amount of the modifier added, and the polymerization temperature were adjusted as shown in Table 1 below, thereby obtaining conjugated diene-based polymers A2 to A7, A9, and conjugated diene-based polymers B1 to B11, B13 to B14.

Various measurements were carried out, and the results are shown in Table 1.

Furthermore, the obtained modified conjugated diene-based polymer solutions were each fed to a tank pressure vessel having an internal volume of 100 L.

### (Conjugated Diene-based Polymer A8)

An autoclave having an internal volume of 40 L and capable of temperature control, equipped with a stirrer and a jacket, was used as a reactor, and 1,440 g of 1,3-butadiene from which impurities had been removed in advance, 1,200 g of styrene, 21,000 g of cyclohexane, and 8.5 g of tetrahydrofuran (THF) as the polar substance were charged into the reactor, and the internal temperature of the reactor was maintained at 50°C. As the polymerization initiator, 0.017 mmol of n-butyllithium was supplied to the reactor.

After the start of the polymerization reaction, the temperature in the reactor began to rise due to heat generation by the polymerization, and after the temperature peak, 360 g of 1,3-butadiene was additionally added over 5 minutes, and the final temperature in the reactor reached 75°C. Two minutes after reaching the reaction temperature peak, 0.74 g of 2,2-dimethoxy-1-(3-trimethoxysilylpropyl)-1-aza-2-silacyclopentane was added to the reactor as the coupling modifier, and a coupling modification reaction was carried out for 10 minutes. To this polymer solution, the antioxidant (BHT) was added such that the amount thereof was 0.2 g per 100 g of the polymer. The solvent was removed by steam stripping of the modified conjugated diene-based polymer solution, and thus, a modified conjugated diene-based polymer A8 was obtained by forming into a bale. Various measurements were carried out, and the results are shown in Table 2. Furthermore, the obtained polymerization solution was fed to a tank pressure vessel having an internal volume of 100 L.

### (Conjugated Diene-based Polymer B12)

The production method was the same as that for the modified conjugated diene-based polymer 8, except that the amounts of styrene, butadiene, and the polymerization initiator added to the autoclave, the amount of the polar substance added, and the amount of the modifier added were adjusted as shown in Table 2 below, thereby obtaining a conjugated diene-based polymer B12.

Various measurements were carried out, and the results are shown in Table 2.

Furthermore, the obtained modified conjugated diene-based polymer solution was fed to a tank pressure vessel having an internal volume of 100 L.

In Table 1, when two numerical values are shown for the polymerization temperature, the former indicates the polymerization temperature of the first reactor, and the latter indicates the polymerization temperature of the second reactor.

Also, the initiator, branching agent, and modifiers are as follows.
Initiator d-1: n-butyllithium
Branching agent c-1: trimethoxy(4-vinylphenyl)silane
Modifier a-1: 1-methyl-4-(3-(trimethoxysilyl)propyl)piperazine
Modifier a-2: trimethoxy(propyl)silane
Modifier b-1: tetrakis(3-trimethoxysilylpropyl)-1,3-propanediamine
Modifier b-2: 2,2-dimethoxy-1-(3-trimethoxysilylpropyl)-1-aza-2-silacyclopentane
Modifier b-3: 1,6-bis(trimethoxysilyl)hexane

### (Modified Conjugated Diene-based Polymer Mixture C1)

The polymer solution of the modified conjugated diene-based polymer A1 and the polymer solution of the modified conjugated diene-based polymer B1, which had been produced by the above-described method and fed to the tank pressure vessels, were fed such that the mass ratio of the modified conjugated diene-based polymer A1 and the modified conjugated diene-based polymer B1, (A1):(B1), was 30:70, and were allowed to merge in piping. After merging, the mixture was stirred and mixed by a rotary stirrer.

Next, the solvent was removed by steam stripping, and the mixture was formed into a bale, whereby various physical properties of the resultant modified conjugated diene-based polymer mixture C1 were measured. The results are shown in Table 3.

### (Modified Conjugated Diene-based Polymer Mixtures C2 to C45)

The production method was the same as that for the modified conjugated diene-based polymer mixture C1, except that the combination and the mixing mass ratio of the modified conjugated diene-based polymer A and the modified conjugated diene-based polymer B to be used were changed, and the content of the modified conjugated diene-based polymer A in the modified conjugated diene-based polymer mixture C was changed as shown in Table 3, thereby obtaining modified conjugated diene-based polymer mixtures C2 to C45.

Various measurements were carried out, and the results are shown in Table 3.

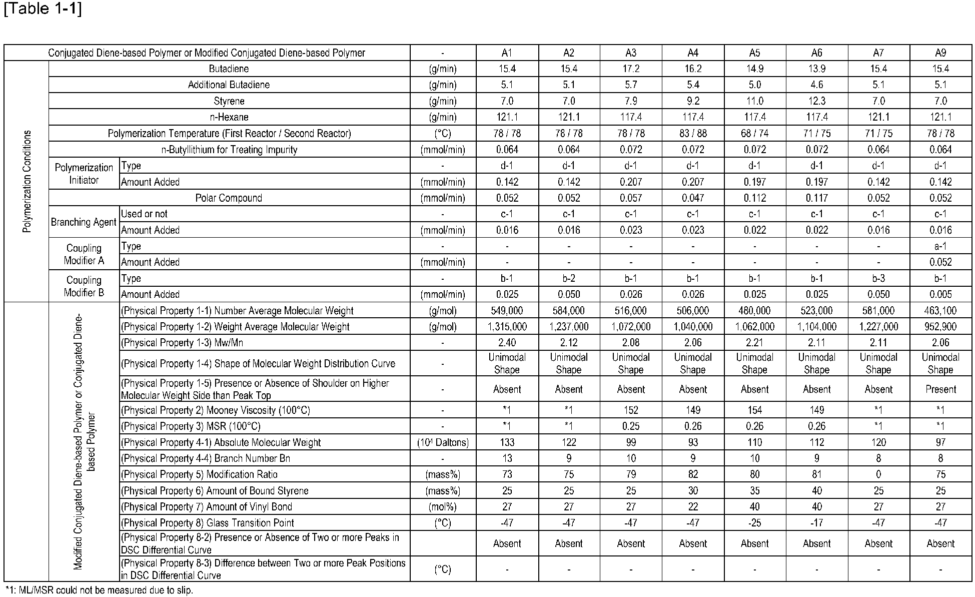

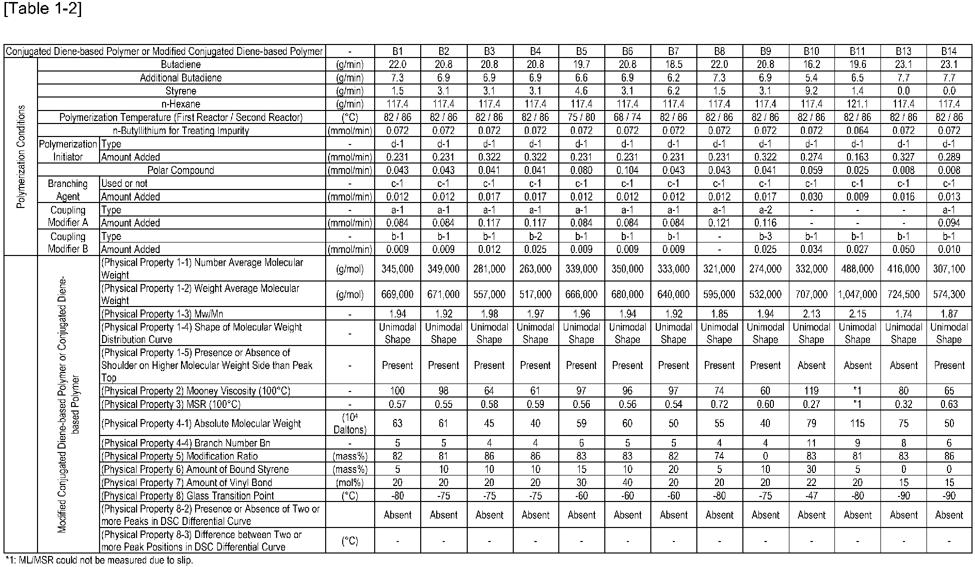

**[Table 2]**

| Conjugated Diene-based Polymer or Modified Conjugated Diene-based Polymer | | | - | A8 | B12 |
|---|---|---|---|---|---|
| Polymerization Conditions | Butadiene | | (g) | 1440 | 2550 |
| | Additional Butadiene | | (g/min) | 360 | - |
| | Styrene | | (g) | 1200 | 450 |
| | c-Hexane | | (g) | 21000 | 21000 |
| | Polymerization Initiator | Type | - | d-1 | d-1 |
| | | Amount Added | (mol) | 0.017 | 0.024 |
| | Polar Compound | Type | - | THF | THF/BOP |
| | | Amount Added | (g) | 8.5 | 0.78/0.44 |
| | Branching Agent | Used or not | - | - | - |
| | | Amount Added | (g) | - | - |
| | Coupling Modifier A | Type | - | - | - |
| | | Amount Added | (mol) | - | - |
| | Coupling Modifier B | Type | - | b-2 | b-2 |
| | | Amount Added | (g) | 0.74 | 1.53 |
| | Modified Conjugated Diene-based Polymer or Conjugated Diene-based Polymer | (Physical Property 1-1) Number Average Molecular Weight | (g/mol) | 490,000 | 390,000 |
| | | (Physical Property 1-2) Weight Average Molecular Weight | (g/mol) | 780,000 | 610,000 |
| | | (Physical Property 1-3) Mw/Mn | - | 1.59 | 1.56 |
| | | (Physical Property 1-4) Shape of Molecular Weight Distribution Curve | - | Multimodal Shape | Multimodal Shape |
| | | (Physical Property 1-5) Presence or Absence of Shoulder on Higher Molecular Weight Side than Peak Top | - | - | - |
| | | (Physical Property 2) Mooney Viscosity (100°C) | - | 85 | 75 |
| | | (Physical Property 3) MSR (100°C) | - | 0.39 | 0.41 |
| | | (Physical Property 4-4) Branch Number Bn | - | 5 | 4 |
| | | (Physical Property 5) Modification Ratio | (mass%) | 55 | 81 |
| | | (Physical Property 6) Amount of Bound Styrene | (mass%) | 40 | 15 |
| | | (Physical Property 7) Amount of Vinyl Bond | (mol%) | 21 | 30 |
| | | (Physical Property 8) Glass Transition Point | (°C) | -23 | -60 |
| | | (Physical Property 8-2) Presence or Absence of Two or more Peaks in DSC Differential Curve | | Absent | Absent |
| | | (Physical Property 8-3) Difference between Two or more Peak Positions in DSC Differential Curve | (°C) | - | - |

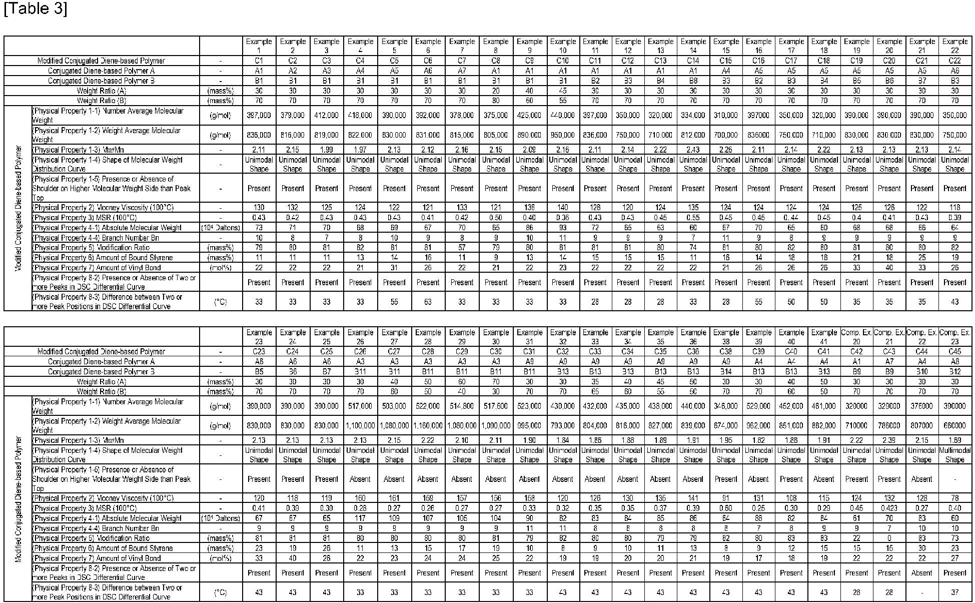

### [Examples 1 to 41 and Comparative Examples 1 to 23: Evaluation of Bale of Modified Conjugated Diene-based Polymer]

### (Evaluation 1) Appearance of Bale (Presence or Absence of Cracks/Collapses)

Regarding each of the bales of modified conjugated diene-based polymers shown in Tables 1 to 3, visual observation was made on the appearance, such as the presence or absence of external cracks or collapses, and evaluation was made based on the following criteria by panelists each on a scale of 1 to 4. The appearance of the bale is an index of bale formability of the modified conjugated diene-based polymer. The evaluation results are shown in Tables 4 and 5.
IV: Crumbs are not clamped and cannot be formed into a bale.
III: Although the polymer can be formed into a bale, it exhibits collapses over time.
II: Cracks, collapses, and other defects of 5% or less are observed on the bale surface.
I: Cracks, collapses, or other defects are not observed on the bale surface at all.

### [Fabrication and Evaluation of Rubber Compositions]

### (Evaluation of Rubber Compositions)

The modified conjugated diene-based polymers A1 to A7, B1 to B9, and C1 to C45 shown in Tables 1 to 3 were respectively used as raw materials to obtain rubber compositions in accordance with the following composition:
- Modified conjugated diene-based polymer (any one of A1 to A7, B1 to B9, and C1 to C45): 100 parts by mass (excluding oil)
- Silica (trade name "Ultrasil 7000GR", manufactured by Evonik Degussa, nitrogen adsorption specific surface area: 170 m²/g): 75.0 parts by mass
- Carbon black (trade name "Seast KH (N339)", manufactured by Tokai Carbon Co., Ltd.): 5.0 parts by mass
- Silane coupling agent: (trade name "Si75", manufactured by Evonik Degussa, bis(triethoxysilylpropyl)disulfide): 6.0 parts by mass
- S-RAE oil (trade name "Process NC140", manufactured by JX Nippon Oil & Energy Corporation): 32.0 parts by mass
- Zinc oxide: 2.5 parts by mass
- Stearic acid: 2.0 parts by mass
- Anti-aging agent (N-(1,3-dimethylbutyl)-N'-phenyl-p-phenylenediamine): 2.0 parts by mass
- Sulfur: 1.7 parts by mass
- Vulcanization accelerator 1 (N-cyclohexyl-2-benzothiazylsulfinamide): 1.7 parts by mass
- Vulcanization accelerator 2 (diphenylguanidine): 2.0 parts by mass

Specifically, the above-described materials were kneaded by the following method to obtain a rubber composition. A closed kneader (having an internal volume of 0.5 L) equipped with a temperature controller was used to knead, as a first stage of kneading, the modified conjugated diene-based polymer (any one of A1 to A7, B1 to B9, and C1 to C45), the fillers (silica and carbon black), the silane coupling agent, the S-RAE oil, zinc oxide and stearic acid under conditions of a filling ratio of 65% and a rotor rotation speed of 30 to 50 rpm. Here, the temperature of the closed kneader was controlled to obtain each rubber composition (compound) at a discharging temperature of 155 to 160°C.

Next, after cooling the compound obtained as described above to room temperature, as a second stage of the kneading, the anti-aging agent was added thereto, and the resultant was kneaded again under the same conditions as those for the first stage of the kneading to improve dispersibility of the silica. Also in this case, the discharging temperature for the compound was adjusted to 155 to 160°C by the temperature control of the kneader. After cooling, as a third stage of the kneading, sulfur and the vulcanization accelerators 1 and 2 were added thereto, and the resultant was kneaded by an open roll set to 70°C. Thereafter, the resultant was shaped and vulcanized at 160°C for 20 minutes by a vulcanizing press. The rubber compositions before the vulcanization, and the rubber compositions after the vulcanization were evaluated.

Specifically, the evaluations were performed as described below. Evaluation results are shown in Table 4 and Table 5.

### (Evaluation 2) Clamping Property of Discharged Substance

Regarding each of the modified conjugated diene-based polymers before vulcanization produced by the methods described in Examples and Comparative Examples, a clump (shape) obtained immediately after being discharged from the pressurizing kneader (immediately after being discharged after completing the kneading with the pressurizing kneader in the first stage of the kneading) was visually observed to perform evaluation based on the following criteria by panelists each on a scale of 1 to 4. A clumping property is an index of processability of a vulcanizate.
IV: A sheet end portion was smooth by 60% or less, and processability was very poor.
III: A sheet end portion was smooth by more than 60% and 80% or less, and processability was poor.
II: A sheet end portion was smooth by more than 80% and 90% or less, and processability was excellent.
I: A sheet end portion was smooth over 90%, and processability was very excellent.

### (Evaluations 3 and 4) Viscoelastisity Parameter (Fuel Economy/Wet Grip Performance)

A viscoelasticity testing machine "ARES" manufactured by Rheometric Scientific, Inc. was used to measure a viscoelasticity parameter in a torsion mode. Each measurement value was shown as an index obtained assuming that a result obtained in the rubber composition of Comparative Example 1 was 100.

Here, a tan δ measured at 50°C at a frequency of 10 Hz and strain of 3% was used as an index of a low hysteresis loss property, namely, fuel efficiency, and each measured value was shown as an index obtained assuming that a result of Comparative Example 1 was 100. A larger index indicates better fuel efficiency, and one having such a value over 65 was evaluated as excellent in fuel efficiency.

Besides, a tan δ measured at 0°C at a frequency of 10 Hz and strain of 1% was used as an index of wet grip performance, and each measured value was shown as an index obtained assuming that a result of Comparative Example 1 was 100. A larger index indicates better wet grip performance, and one having such a value over 65 was evaluated as excellent in wet grip performance.

### (Evaluations 5 and 6) Tensile Strength and Tensile Elongation

Tensile strength and tensile elongation were measured in accordance with a tensile test method according to JIS K6251. Each measured value was shown as an index obtained assuming that a result of Comparative Example 1 was 100. A larger index indicates better tensile strength and tensile elongation, leading to excellent fracture performance.

### (Evaluation 7) Abrasion Resistance

An Acron abrasion tester (manufactured by Yasuda Seiki Seisakusho, Ltd.) was used to measure an abrasion amount through 1,000 rotations at a load of 44.4 N in accordance with JIS K6264-2. Each measured value was shown as an index obtained assuming that a result of Comparative Example 1 was 100. A larger index indicates better abrasion resistance, and one having such a value over 80 was evaluated as excellent in abrasion resistance.

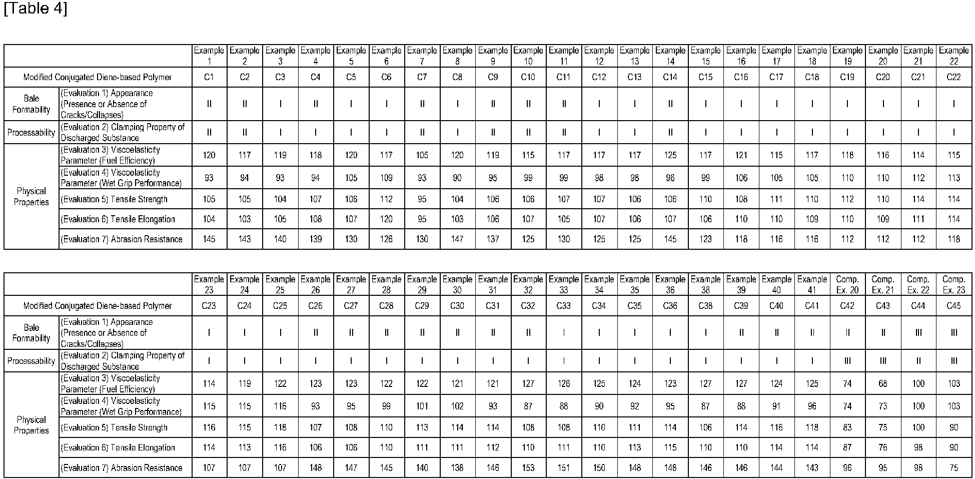

**[Table 5]**

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 10 | Comp. Ex. 11 | Comp. Ex. 12 | Comp. Ex. 13 | Comp. Ex. 14 | Comp. Ex. 15 | Comp. Ex. 16 | Comp. Ex. 17 | Comp. Ex. 18 | Comp. Ex. 19 |
|---|---|---|---|---|---|---|---|---|---|---|---|---|---|---|---|---|---|---|
| Modified Conjugated Diene-based Polymer | | A1 | A2 | A3 | A4 | A5 | A6 | A7 | B1 | B2 | B3 | B4 | B5 | B6 | B7 | B8 | B9 | A1/B1 = 30/70 |
| Bale Formability | (Evaluation 1) Appearance (Presence or Absence of Cracks/Collapses) | IV | IV | IV | III | III | II | IV | III | III | III | III | II | II | II | II | II | - |
| Processability | (Evaluation 2) Clamping Property of Discharged Substance | III | III | II | II | II | II | IV | IV | III | III | II | II | II | II | II | II | IV |
| Physical Properties | (Evaluation 3) Viscoelasticity Parameter (Fuel Efficiency) | 100 | 97 | 102 | 101 | 99 | 98 | 68 | 110 | 109 | 109 | 110 | 112 | 113 | 111 | 108 | 74 | 110 |
| | (Evaluation 4) Viscoelasticity Parameter (Wet Grip Performance) | 100 | 96 | 101 | 103 | 108 | 114 | 74 | 60 | 65 | 65 | 65 | 84 | 84 | 84 | 62 | 68 | 85 |
| | (Evaluation 5) Tensile Strength | 100 | 97 | 101 | 103 | 110 | 115 | 80 | 80 | 83 | 82 | 84 | 90 | 87 | 95 | 79 | 70 | 90 |
| | (Evaluation 6) Tensile Elongation | 100 | 97 | 100 | 101 | 111 | 114 | 79 | 79 | 83 | 83 | 82 | 90 | 85 | 97 | 80 | 70 | 90 |
| | (Evaluation 7) Abrasion Resistance | 100 | 97 | 99 | 98 | 75 | 65 | 80 | 115 | 110 | 106 | 107 | 105 | 105 | 105 | 110 | 110 | 120 |

As shown in Table 4 to Table 5, the conjugated diene-based polymer of the present invention was found to be excellent in bale formability and excellent in processability when formed into a vulcanizate, and a vulcanizate obtained therefrom was found to be excellent in performance balance of abrasion resistance, fracture performance, wet grip performance, and a low hysteresis loss property.

A conjugated diene-based polymer and a rubber composition of the present invention are excellent in formability and processability, and excellent in performance balance of abrasion resistance, fracture performance, fuel efficiency, and wet grip performance of a vulcanizate obtained therefrom, and therefore, are industrially applicable in applications such as a tire, resin modification, interior and exterior of a vehicle, an anti-vibration rubber, and shoes.

## Claims

1. A modified conjugated diene-based polymer, satisfying the following <condition (i)> to <condition (iii)>:
<condition (i)>
a molecular weight distribution curve as measured by gel permeation chromatography (GPC) has a unimodal shape, and a molecular weight distribution (PDI; MWD) is 1.7 to 3.5;
<condition (ii)>
a modification ratio is 40% by mass or more; and
<condition (iii)>
the polymer has two or more peaks in a DSC differential curve obtained by differentiating a DSC curve recorded by differential scanning calorimetry (DSC).

2. The modified conjugated diene-based polymer according to claim 1, wherein the molecular weight distribution curve as measured by gel permeation chromatography (GPC) has a shoulder on a higher molecular weight side than a peak top.

3. The modified conjugated diene-based polymer according to claim 1, having a weight average molecular weight (Mw) of 40 × 10⁴ or more and 250 × 10⁴ or less as measured by gel permeation chromatography (GPC).

4. The modified conjugated diene-based polymer according to claim 1, wherein a content of a repeating unit derived from an aromatic vinyl monomer is 0% by weight or more and 30% by weight or less.

5. The modified conjugated diene-based polymer according to claim 1, wherein a Mooney viscosity measured at 100°C is 80 or more and 170 or less, and a Mooney stress relaxation (MSR) measured at 100°C is 0.30 or more and 0.80 or less.

6. The modified conjugated diene-based polymer according to claim 1, wherein, in the DSC differential curve obtained by differentiating a DSC curve recorded by differential scanning calorimetry (DSC), a difference (ΔTg) between positions of peak tops of a peak having a highest peak height and a peak having a second highest peak height is 15°C or more.

7. The modified conjugated diene-based polymer according to claim 6, wherein the ΔTg is 15°C or more and 75°C or less.

8. The modified conjugated diene-based polymer according to claim 1, comprising:
a modified conjugated diene-based polymer (A) having a weight average molecular weight (Mw) of 70 × 10⁴ or more and 200 × 10⁴ or less as measured by gel permeation chromatography (GPC); and
a modified conjugated diene-based polymer (B) having a Mw of 10 × 10⁴ or more and less than 70 × 10⁴ as measured by gel permeation chromatography (GPC).

9. The modified conjugated diene-based polymer according to claim 8,
wherein a difference (ΔMw) between weight average molecular weights of the modified conjugated diene-based polymer (A) and the modified conjugated diene-based polymer (B) is 20 × 10⁴ or more.

10. The modified conjugated diene-based polymer according to claim 8,
wherein, in the modified conjugated diene-based polymer, a mass ratio ((A)/(B)) of the modified conjugated diene-based polymer (A) to the modified conjugated diene-based polymer (B) is 40/60 to 10/90.

11. The modified conjugated diene-based polymer according to claim 8,
wherein the modified conjugated diene-based polymer (A) and/or (B) comprises a conjugated diene-based polymer having a fork-like part [A] in which multiple conjugated diene-based polymer chains are bonded to one end of a main chain branch structure part, and a single chain of another conjugated diene-based polymer is bonded to the other end of the main chain branch structure part.

12. The modified conjugated diene-based polymer according to claim 8,
wherein the modified conjugated diene-based polymer (A) and/or (B) comprises a conjugated diene-based polymer having:
a fork-like part [A] in which multiple conjugated diene-based polymer chains are bonded to one end of a main chain branch structure part, and a single chain of another conjugated diene-based polymer is bonded to the other end of the main chain branch structure part; and
a star polymer structure part [B] having 3 or more branches in which one or more of the fork-like parts [A] are bonded.

13. A formed body comprising:
100 parts by mass of the modified conjugated diene-based polymer according to claim 1; and
less than 1 part by mass of a softener component.

14. A method for producing the modified conjugated diene-based polymer according to claim 8, comprising:
obtaining a modified conjugated diene-based polymer (A) and a modified conjugated diene-based polymer (B) by continuous polymerization using one or more reactors for each;
mixing a polymerization solution containing the modified conjugated diene-based polymer (A) and a polymerization solution containing the modified conjugated diene-based polymer (B); and
then removing a solvent to obtain the modified conjugated diene-based polymer.

15. The method for producing the modified conjugated diene-based polymer according to claim 14,
wherein the modified conjugated diene-based polymer (A) and/or (B) is produced by a production method comprising:
a polymerization step of polymerizing a conjugated diene compound or copolymerizing a conjugated diene compound and an aromatic vinyl compound, using an alkali metal compound or an alkaline earth metal compound as a polymerization initiator, to obtain a conjugated diene-based polymer having an active end;
a polymerizing branching step of reacting an active end of the conjugated diene-based polymer with a branching agent to introduce a branch structure; and
a modification step of reacting a polymerization terminal end with a coupling modifier.

16. The method for producing the modified conjugated diene-based polymer according to claim 15, wherein the branching agent is a compound represented by the following formula (1) or (2): 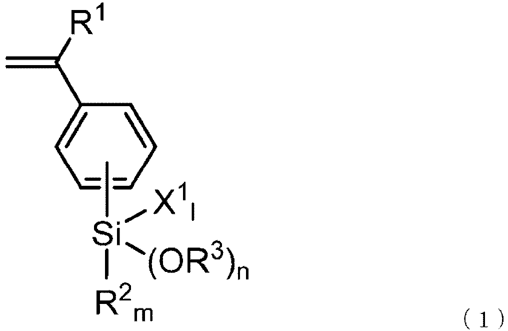
wherein R¹ represents a hydrogen atom, or an alkyl group having 1 to 20 carbon atoms or an aryl group having 6 to 20 carbon atoms, and optionally having a branch structure in a part thereof;
R² to R³ each independently represent an alkyl group having 1 to 20 carbon atoms or an aryl group having 6 to 20 carbon atoms, and optionally having a branch structure in a part thereof; R² to R³, if present in a plural number, are respectively independent;
X¹ represents an independent halogen atom; and
m represents an integer of 0 to 2, n represents an integer of 0 to 3, I represents an integer of 0 to 3, and (m + n + l) represents 3, or 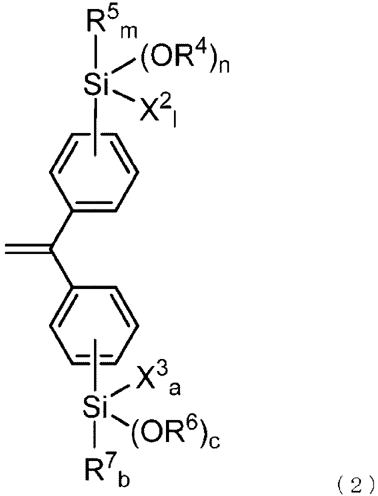
wherein R⁴ to R⁷ each independently represent an alkyl group having 1 to 20 carbon atoms or an aryl group having 6 to 20 carbon atoms, and optionally having a branch structure in a part thereof;
R⁴ to R⁷, if present in a plural number, are respectively independent;
X² to X³ represent independent halogen atoms;
m represents an integer of 0 to 2, n represents an integer of 0 to 3, and l represents an integer of 0 to 3;
(m + n + l) represents 3; and
a represents an integer of 0 to 3, b represents an integer of 0 to 2, c represents an integer of 0 to 3, and (a + b + c) represents an integer of 3.

17. A rubber composition comprising:
100 parts by mass of a rubber component; and
5.0 parts by mass or more and 150 parts by mass or less of a filler,
wherein the rubber component contains 10 parts by mass or more of the modified conjugated diene-based polymer according to any one of claims 1 to 12 with respect to 100 parts by mass of a total amount of the rubber component.

18. A tire comprising the rubber composition according to claim 17.
